# EUROPEAN PATENT APPLICATION

(11) **EP 4 811 773 A1**
(43) Date of publication of application: **23.09.2026**
(21) Application number: 24891673.6
(22) Date of filing: 24.10.2024
(51) Int. Cl.: H04N 19/11, H04N 19/593, H04N 19/12, H04N 19/176, H04N 19/124, H04N 19/61, H04N 19/157, H04N 19/105

(54) **ENCODING METHOD, ENCODING DEVICE, DECODING METHOD, AND DECODING DEVICE FOR IMAGE**

(30) Priority: 15.11.2023 KR 20230158633; 26.03.2024 KR 20240041297
(71) Applicant: Samsung Electronics Co., Ltd., Suwon-si, Gyeonggi-do 16677 (KR)
(72) Inventor: PIAO, Yinji, Suwon-si, Gyeonggi-do 16677 (KR); PARK, Jeeyoon, Suwon-si, Gyeonggi-do 16677 (KR); CHOI, Kwangpyo, Suwon-si, Gyeonggi-do 16677 (KR)
(74) Representative: Appleyard Lees IP LLP
(86) International application number: PCT/KR2024/016320
(87) International publication number: WO 2025/105726

(57) **Abstract**

Provided are an image decoding method, an image decoding device, an image encoding method and an image encoding device, the image decoding method comprising the steps of: acquiring a reference block in a reference image; determining an intra mode for the reference block on the basis of at least one of a plurality of neighboring samples of the reference block and a plurality of internal samples of the reference block; determining a transform kernel of the current block from among one or more transform kernels by using the intra mode for the reference block; and performing an inverse transform on the current block by using the transform kernel.

## Description

### Technical Field

The present disclosure relates to the field of image encoding and decoding. More particularly, the present disclosure relates to encoding and decoding methods and devices for predicting samples in an image.

### Background Art

For image encoding and decoding, an image is divided into blocks and each block undergoes predictive encoding and predictive decoding through inter prediction or intra prediction.

Inter prediction is a technology that compresses images by removing temporal redundancy between the images. In the inter prediction, blocks of a current image are predicted by using a reference image. A reference block most similar to the current block may be searched for within a certain search range in the reference image. The current block is predicted based on the reference block, and a predicted block generated as the prediction result is subtracted from the current block to generate a residual block.

Intra prediction is a technology that compresses images by removing spatial redundancy in the images. The intra prediction generates a predicted block based on neighboring pixels of the current block according to a prediction mode. A residual block is then generated by subtracting the predicted block from the current block.

The residual block generated through inter prediction or intra prediction undergoes transformation and quantization and is transmitted to a decoder. The decoder dequantizes and inverse-transforms the residual block, and reconstructs the current block by combining the predicted block with the residual block. The decoder may filter the reconstructed current block to remove artifacts in the reconstructed current block.

### Disclosure of Invention

### Solution to Problem

According to an embodiment of the present disclosure, provided is an image decoding method. The image decoding method may include obtaining a reference block in a reference image. The image decoding method may include determining an intra mode for the reference block, based on at least one of a plurality of neighboring samples of the reference block and a plurality of internal samples of the reference block. The image decoding method may include determining a transform kernel of the current block from among one or more transform kernels by using the intra mode for the reference block. The image decoding method may include performing inverse transformation on the current block by using the transform kernel.

According to an embodiment of the present disclosure, provided is an image decoding device. The image decoding device may include memory that stores one or more instructions and at least one processor. The at least one processor may execute the one or more instructions to obtain a reference block in a reference image. The at least one processor may execute the one or more instructions to determine an intra mode for the reference block based on at least one of a plurality of neighboring samples of the reference block and a plurality of internal samples of the reference block. The at least one processor may execute the one or more instructions to determine a transform kernel of the current block from among one or more transform kernels by using the intra mode for the reference block. The at least one processor may execute the one or more instructions to perform inverse transformation on the current block by using the transform kernel.

According to an embodiment of the present disclosure, provided is an image encoding method. The image encoding method may include obtaining a reference block in a reference image. The image encoding method may include determining an intra mode for the reference block, based on at least one of a plurality of neighboring samples of the reference block and a plurality of internal samples of the reference block. The image encoding method may include determining a transform kernel of the current block from among one or more transform kernels by using the intra mode for the reference block. The image encoding method may include performing transformation on the current block by using the transform kernel.

According to an embodiment of the present disclosure, provided is an image encoding device. The image encoding device may include memory that stores one or more instructions and at least one processor. The at least one processor may execute the one or more instructions to obtain a reference block in a reference image. The at least one processor may execute the one or more instructions to determine an intra mode for the reference block based on at least one of a plurality of neighboring samples of the reference block and a plurality of internal samples of the reference block. The at least one processor may execute the one or more instructions to determine a transform kernel of the current block from among one or more transform kernels by using the intra mode for the reference block. The at least one processor may execute the one or more instructions to perform transformation on the current block by using the transform kernel.

According to an embodiment of the present disclosure, provided is a computerreadable storage medium that stores bitstreams encoded by an image encoding method.

### Brief Description of Drawings

FIG. 1 is a block diagram of an image decoding device, according to an embodiment of the present disclosure.
FIG. 2 is a block diagram of an image encoding device, according to an embodiment of the present disclosure.
FIG. 3 illustrates a procedure for determining at least one coding unit by dividing a current coding unit, according to an embodiment of the present disclosure.
FIG. 4 illustrates a procedure for determining at least one coding unit by dividing a non-square shaped coding unit, according to an embodiment of the present disclosure.
FIG. 5 illustrates a procedure for dividing a coding unit based on at least one of block form information and partition form mode information, according to an embodiment of the present disclosure.
FIG. 6 illustrates a method of determining a certain coding unit from among an odd number of coding units, according to an embodiment of the present disclosure.
FIG. 7 illustrates an order in which a plurality of coding units are processed when the plurality of coding units are determined by dividing a current coding unit, according to an embodiment of the present disclosure.
FIG. 8 illustrates a procedure for determining that a current coding unit is divided into an odd number of coding units when it is not possible to process the coding unit in a certain order, according to an embodiment of the present disclosure.
FIG. 9 illustrates a procedure for determining at least one coding unit by dividing a first coding unit, according to an embodiment of the present disclosure.
FIG. 10 illustrates that a form into which a non-square shaped second coding unit determined by dividing a first coding unit may be divided is restricted, when the second coding unit satisfies a certain condition, according to an embodiment of the present disclosure.
FIG. 11 illustrates a procedure for dividing a square shaped coding unit when partition form mode information fails to indicate division into four square shaped coding units, according to an embodiment of the present disclosure.
FIG. 12 illustrates that a processing order between a plurality of coding units may vary depending on the procedure for dividing a coding unit, according to an embodiment of the present disclosure.
FIG. 13 illustrates a procedure for determining the depth of a coding unit as the form and size of the coding unit varies, when a plurality of coding units are determined by recursively dividing a coding unit, according to an embodiment of the present disclosure.
FIG. 14 illustrates depths that may be determined according to the form and size of coding units and part indexes (PIDs) for classifying the coding units, according to an embodiment of the present disclosure.
FIG. 15 illustrates that a plurality of coding units are determined according to a plurality of certain data units included in a picture, according to an embodiment of the present disclosure.
FIG. 16 illustrates coding units that may be determined for respective pictures when a combination of forms into which a coding unit may be divided is different for each picture, according to an embodiment of the present disclosure.
FIG. 17 illustrates various forms of coding units that may be determined based on partition form mode information represented in binary codes, according to an embodiment of the present disclosure.
FIG. 18 illustrates other forms of coding units that may be determined based on partition form mode information represented in binary codes, according to an embodiment of the present disclosure.
FIG. 19 is a block diagram of an image encoding and decoding system that performs loop filtering, according to an embodiment of the present disclosure.
FIG. 20 is a block diagram of a configuration of an image decoding device, according to an embodiment of the present disclosure.
FIG. 21 is a flowchart of an image decoding method, according to an embodiment of the present disclosure.
FIG. 22 is a flowchart of an image decoding method, according to an embodiment of the present disclosure.
FIG. 23 illustrates a procedure for determining an intra mode for a reference block by using neighboring blocks of the reference block, according to an embodiment of the present disclosure.
FIG. 24 illustrates a procedure for determining an intra mode for a reference block by using neighboring samples of the reference block, according to an embodiment of the present disclosure.
FIG. 25 is a flowchart of an image decoding method, according to an embodiment of the present disclosure.
FIG. 26 illustrates a procedure for determining an intra mode for a reference block by using the reference block, according to an embodiment of the present disclosure.
FIG. 27 illustrates a procedure for determining an intra mode for a reference block by using reference blocks, according to an embodiment of the present disclosure.
FIG. 28 illustrates a procedure for determining an intra mode for a reference block by using reference blocks, according to an embodiment of the present disclosure.
FIG. 29 is a flowchart of an image decoding method, according to an embodiment of the present disclosure.
FIG. 30 illustrates a procedure for determining an intra mode for a reference block by using neighboring samples of the reference block, according to an embodiment of the present disclosure.
FIG. 31 is a flowchart of an image decoding method, according to an embodiment of the present disclosure.
FIG. 32 illustrates a procedure for determining an intra mode for a reference block by using neighboring samples of a current block, according to an embodiment of the present disclosure.
FIG. 33 is a flowchart of an image decoding method, according to an embodiment of the present disclosure.
FIG. 34 illustrates a procedure for determining an intra mode for a reference block by using the reference block, according to an embodiment of the present disclosure.
FIG. 35 is a diagram for describing forms of templates, according to an embodiment of the present disclosure.
FIG. 36 is a block diagram of a configuration of an image encoding device, according to an embodiment of the present disclosure.
FIG. 37 is a flowchart of an image encoding method, according to an embodiment of the present disclosure.
FIG. 38 is a flowchart of an image encoding method, according to an embodiment of the present disclosure.

### Mode for the Invention

Throughout the present disclosure, the expression "at least one of a, b or c" indicates only a, only b, only c, both a and b, both a and c, both b and c, all of a, b, and c, or variations thereof.

In the present disclosure, the expression "a, b and/or c" may be replaced by "at least one of a, b or c". In other words, the expression "a, b and/or c" may indicate only a, only b, only c, both a and b, both a and c, both b and c, all of a, b, and c, or variations thereof.

Various modifications may be made to embodiments of the present disclosure, which will be described more fully hereinafter with reference to the accompanying drawings. The present disclosure is not limited to particular embodiments but may include all the modifications, equivalents and replacements which belong to technical scope and ideas of the present disclosure.

The terms as herein used are selected as common terms widely used now, taking into account principles of the present disclosure, which may however depend on intentions of those of ordinary skill in the art, judicial precedents, emergence of new technologies, and the like. Some terms as herein used are selected at the applicant's discretion, in which case, meanings of the terms will be understood through the associated descriptions. Therefore, the terms should be defined based on their meanings and descriptions throughout the present disclosure.

In the present disclosure, the singular forms "a", "an" and "the" are intended to include the plural forms as well, unless the context clearly indicates otherwise. Some related well-known technologies that possibly obscure the present disclosure will not be described. Ordinal numbers (e.g., first, second, etc.) as herein used are to distinguish components from one another.

When the term "connected" or "coupled" is used, it means that a component may be directly connected or coupled to another component. However, unless otherwise defined, it is also understood that the component may be indirectly connected or coupled to the other component via another new component.

In the present disclosure, the term "include (or including)" or "comprise (or comprising)" is inclusive or open-ended and does not exclude additional, unrecited elements or method steps. In the present disclosure, a component expressed with "~ unit", "~module", or the like may be a combination of two or more components or may be divided into two or more sub-components. Furthermore, each of the components may perform its major function and further perform part or all of a function served by another component. In this way part of a major function served by each component may be dedicated and performed by another component.

In the present disclosure, the expression "configured to" as herein used may be interchangeably used with "suitable for", "having the capacity to", "designed to", "adapted to", "made to", or "capable of" according to the given situation. The expression "configured to" may not necessarily mean "specifically designed to" in terms of hardware. Alternatively, in some situations, an expression "a system configured to do something" may refer to "an entity able to do something in cooperation with" another device or parts. For example, "a processor configured to perform A, B and C functions" may include a dedicated processor, e.g., an embedded processor for performing A, B and C functions, or a generic-purpose processor, e.g., a Central Processing Unit (CPU) or an application processor that may perform A, B and C functions by executing one or more software programs stored in a memory.

At least one processor according to an embodiment of the present disclosure may include various processing circuitries and/or multiple processors. For example, the term "processor" as used in the present disclosure including accompanying claims may include various processing circuitries including at least one processor, and one or more of the at least one processor are configured to individually and/or collectively perform various functions as described herein in a distributed fashion. As used in the specification, the terms "processor", "at least one processor", and "one or more processors", when described as being configured to perform various functions, may include situations where, for example and without limitation, a single processor performs the functions. In some situations, of the cited functions, some are performed by a processor while the other functions are performed by the other processor(s), or a single processor may perform all of the cited functions. In addition, at least one processor may include a combination of processors that perform the various enumerated/disclosed functions, for example, in a distributed fashion. The at least one processor may execute program instructions to fulfill or perform various functions.

In the present disclosure, an image may include a picture, a still image, a frame, a moving image comprised of a plurality of successive still images or a video.

In the present disclosure, a sample may refer to data allocated to a sampling position of an image, and may include data to be processed. For example, the sample may include a pixel in a frame of the spatial domain. A block may refer to a unit including a plurality of samples.

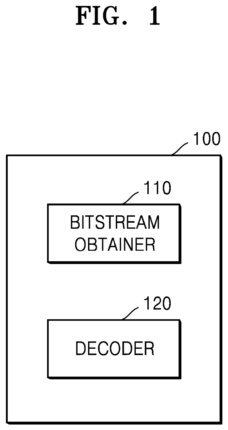

Image encoding method and device and image decoding method and device based on tree-structured coding units and transform units according to an embodiment of the present disclosure will now be described with reference to FIGS. 1 to 19.

FIG. 1 illustrates a block diagram of an image decoding device 100, according to an embodiment of the present disclosure.

The image decoding device 100 may include a bitstream obtainer 110 and a decoder 120. The bitstream obtainer 110 and the decoder 120 may include at least one processor. The bitstream obtainer 110 and the decoder 120 may also include memory for storing instructions to be performed by the at least one processor.

The bitstream obtainer 110 may receive a bitstream. The bitstream includes information regarding an image encoded by an image encoding device 200 as will be described later. The bitstream may be transmitted from the image encoding device 200. The image encoding device 200 and the image decoding device 100 may be connected to each other by cable or wirelessly, and the bitstream obtainer 110 may receive the bitstream by cable or wirelessly. The bitstream obtainer 110 may receive the bitstream from a storage medium such as an optical medium, hard disk, etc. The decoder 120 may reconstruct an image based on the information obtained from the received bitstream. The decoder 120 may obtain a syntax element for reconstruct the image from the bitstream. The decoder 120 may reconstruct the image based on the syntax element.

In a detailed operation of the image decoding device 100, the bitstream obtainer 110 may receive the bitstream.

The image decoding device 100 may perform an operation of obtaining, from the bitstream, a bin string corresponding to a partition form mode of coding units. The image decoding device 100 may perform an operation of determining a partitioning rule for the coding units. Furthermore, the image decoding device 100 may perform an operation of dividing a coding unit into a plurality of coding units based on at least one of the bin string corresponding to the partition form mode and the partitioning rule. The image decoding device 100 may determine a first allowable size range of coding units depending on the ratio between width and height of the coding unit to determine the partitioning rule. The image decoding device 100 may determine a second allowable size range of coding units based on the partition form mode of the coding unit to determine the partitioning rule.

Dividing coding units will now be described in detail according to an embodiment of the present disclosure.

First, a picture may be divided into one or more slices or one or more tiles. A slice or a tile may be a sequence of one or more largest coding units (coding tree units (CTUs)). In an embodiment, one slice may include one or more tiles and one or more largest coding units. A slice including one or multiple tiles may be determined in the picture.

As a concept contrasted with the largest coding unit (CTU), there is a largest coding block (coding tree block (CTB)). The largest coding block (CTB) refers to an NxN block including NxN samples, where N is an integer. Each color component may be divided into one or more largest coding blocks.

When the picture has three sample arrays (sample arrays for Y, Cr and Cb components, respectively), a largest coding unit (CTU) is a unit that includes a largest coding block of luma samples and two largest coding units of the corresponding chroma samples, and syntax structures used to encode the luma samples and chroma samples. When the picture is a monochrome picture, the largest coding unit is a unit that includes a largest coding block of monochrome samples and syntax structures used to encode the monochrome samples. When the picture is encoded to color planes separated by each color component, the largest coding unit is a unit that includes syntax structures used to encode samples of the picture and image.

One largest coding block may be divided into coding blocks of size MxN, each containing MxN samples, where M and N are integers.

When the picture has a sample array for each of Y, Cr and Cb components, a coding unit (CU) is a unit that includes a coding block of luma samples and two coding blocks of the corresponding chroma samples, and syntax structures used to encode the luma samples and chroma samples. When the picture is a monochrome picture, the coding unit is a unit that includes a coding block (CB) of monochrome samples and syntax structures used to encode the monochrome samples. When the picture is encoded to color planes separated by each color component, the coding unit is a unit that includes syntax structures used to encode samples of the picture and image.

As described above, the largest coding block and the largest coding unit are different concepts, and the coding block and the coding unit are also different concepts. In other words, the (largest) coding unit refers to a data structure that includes the (largest) coding block including associated samples and a corresponding syntax structure. However, as those of ordinary skill in the art may understand that the (largest) coding unit or (largest) coding block is referred to as a certain sized block including a certain number of samples, the largest coding block and the largest coding unit, or the coding block and the coding unit will now be interchangeably used unless otherwise specified.

An image may be divided into the largest coding units (or coding tree units (CTUs)). The size of the largest coding unit may be determined based on information obtained from a bitstream. The largest coding units may have the shape of a square of uniform size. It is not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128 and 256x256.

For example, information about a maximum size of the luma coding block divisible into two and a difference in luma block size may be obtained from the bitstream. The information about the difference in luma block size may indicate a difference in size between the largest luma coding unit and the largest luma coding block divisible into two. Accordingly, the size of the largest luma coding unit may be determined by combining the information about the maximum size of the luma coding block divisible into two and the information about the difference in luma block size obtained from the bitstream. By using the size of the largest luma coding unit, the size of the largest chroma coding unit may be determined as well. For example, when a Y:Cb:Cr ratio is 4:2:0 according to the color format, the size of the chroma block may be half the size of the luma block, and similarly, the size of the largest chroma coding unit may be half the size of the largest luma coding unit.

In an embodiment, as the information about the maximum size of a binary splitable luma coding block is obtained from the bitstream, the maximum size of the binary-splitable luma coding block may be variably determined. Alternatively, the maximum size of a ternary splitable luma coding block may be fixed. For example, the maximum size of the ternary splitable luma coding block in image I may be 32x32, and the maximum size of the ternary splitable luma coding block in picture P or image B may be 64x64.

Furthermore, the largest coding unit may be hierarchically divided into coding units based on partition form mode information obtained from the bitstream. As the partition form mode information, at least one of information indicating whether it is quad-splitable, information indicating whether it is multi-splitable, partition direction information and partition type information may be obtained from the bitstream.

For example, the information indicating whether it is quad-splitable may indicate whether the current coding unit is quad-splitable or not.

When the current coding unit is not quad-splitable, the information indicating whether it is multi-splitable may indicate whether the current coding unit is to be no longer splitable or to be binary- or ternary-splitable.

When the current coding unit is binary-splitable or ternary-splitable, the partition direction information indicates that the current coding unit is divided in one of the horizontal direction or vertical direction.

When the current coding unit is divided horizontally or vertically, the partition type information indicates that the current coding unit is divided by binary split or ternary split.

A partition mode for the current coding unit may be determined depending on the partition direction information and the partition type information. The partition mode for a case that the current coding unit is binary-splitable in the horizontal direction may be determined as horizontal binary splitable (SPLIT_BT_HOR); the partition mode for a case of being ternary splitable in the horizontal direction may be determined as horizontal ternary splitable (SPLIT_TT_HOR); the partition mode for a case of being binary-splitable in the vertical direction may be determined as vertical binary splitable (SPLIT_BT_VER); the partition mode for a case of being ternary-splitable in the vertical direction may be determined as vertical ternary splitable (SPLIT_TT_VER).

The image decoding device 100 may obtain the partition form mode information from a bin string in the bitstream. The form of the bitstream received by the image decoding device 100 may include a fixed length binary code, a unary code, a truncated unary code, a predetermined binary code, etc. The bin string represents information as a sequence of binary digits. The bin string may be comprised of at least one bit. The image decoding device 100 may obtain the partition form mode information corresponding to the bin string based on the partitioning rule. The image decoding device 100 may determine whether to quad-split or not split the coding unit, or a partition direction and partition type, based on one bin string.

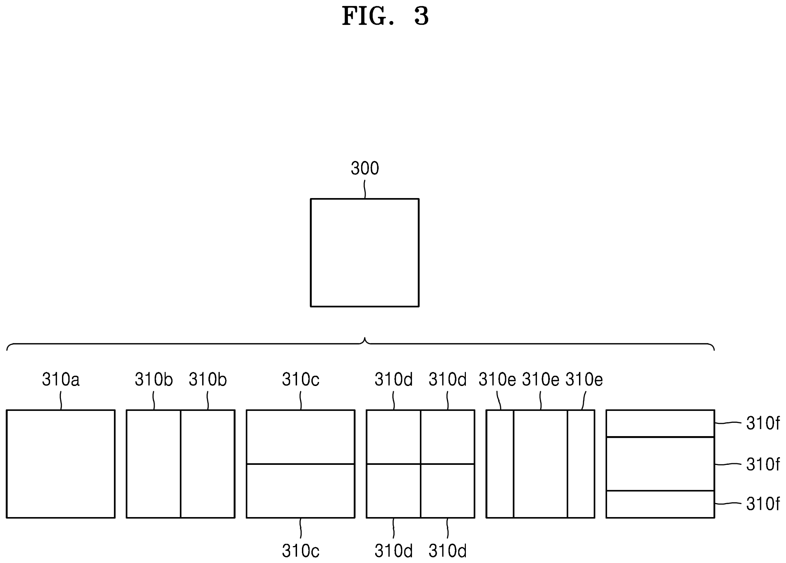

The coding unit may be equal to or smaller than the largest coding unit. For example, the largest coding unit is also one of coding units that has the maximum size. When the partition form mode information for the largest coding unit indicates non-divisional, a coding unit determined from the largest coding unit has the same size as the largest coding unit. When the partition form mode information for the largest coding unit indicates divisional, the largest coding unit may be divided into coding units. Furthermore, when the partition form mode information for the coding units indicates divisional, the coding units may be divided into coding units of smaller size. However, image partitioning is not limited thereto, and the largest coding unit and coding unit may not be distinguished. Partitioning of the coding unit will be described in more detail with reference to FIGS. 3 to 16.

Furthermore, one or more prediction blocks for prediction may be determined from the coding unit. The prediction block may be equal to or smaller than the coding unit. Furthermore, one or more transform blocks for transform may be determined from the coding unit. The transform block may be equal to or smaller than the coding unit.

The shape and size of the transform block may not be related to those of the prediction block.

In another embodiment, the coding unit is the prediction block on which prediction may be performed by using the coding unit. Furthermore, the coding unit is the transform block on which transform may be performed by using the coding unit.

Partitioning of the coding unit will be described in more detail with reference to FIGS. 3 to 16. In the present disclosure, the current block and the neighbor block may represent one of the largest coding unit, the coding unit, the prediction block and the transform block. Furthermore, the current block and the current coding unit is a block being currently decoded or encoded or a block being currently partitioned. The neighbor block may be a block reconstructed before the current block. The neighbor block may be spatially or temporally adjacent to the current block. The neighbor block may be located on one of the lower-left side, the left side, the upper side, the upper-right side, the right side, and the lower-right side to the current block.

The aforementioned embodiment describes operations related to an image decoding method performed by the image decoding device 100. Operations of the image decoding device 200 that performs an image encoding method corresponding to the reverse process of the image decoding method will be described through an embodiment of the present disclosure.

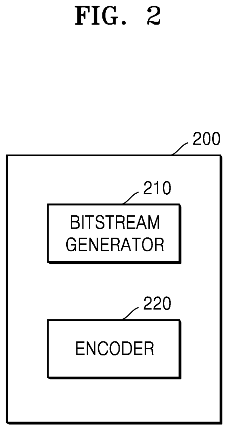

FIG. 2 is a block diagram of the image encoding device capable of encoding an image based on at least one of block form information and partition form mode information, according to an embodiment of the present disclosure.

The image encoding device 200 may include an encoder 220 and a bitstream generator 210. The encoder 220 may receive and encode an input image. The encoder 220 may obtain at least one syntax element by encoding the input image. The syntax element may include at least one of a skip flag, a prediction mode, a motion vector difference, a motion vector prediction method (or index), a transform quantized coefficient, a coded block pattern, a coded block flag, an intra prediction mode, a direct flag, a merge flag, delta QP, a reference index, a prediction direction and a transform index. The encoder 220 may determine a context model based on block form information including at least one of the coding unit's shape, direction, width-height ratio or size.

The bitstream generator 210 may generate a bitstream based on the encoded input image. For example, the bitstream generator 210 may generate a bitstream by entropy-encoding the syntax element based on the context model. Furthermore, the image encoding device 200 may transmit the bitstream to the image decoding device 100.

In an embodiment of the present disclosure, the encoder 220 of the image encoding device 200 may determine a form of the coding unit. For example, the coding unit may have the form of a square or non-square, and information indicating the form may be included in the block form information.

In an embodiment of the present disclosure, the encoder 220 may determine a form, into which the coding unit is to be divided. The encoder 220 may determine the form of at least one coding unit included in a coding unit, and the bitstream generator 210 may generate a bitstream that includes partition form mode information including information about the form of the coding unit.

In an embodiment of the present disclosure, the encoder 220 may determine whether the coding unit is to be divided or not. When the encoder 220 determines that a coding unit includes only one coding unit or the coding unit is not to be divided, the bitstream generator 210 may generate a bitstream that includes partition form mode information indicating that the coding unit is not to be divided. Furthermore, the encoder 220 may divide a coding unit into a plurality of coding units, and the bitstream generator 210 may generate a bitstream including partition form mode information indicating that the coding unit is to be divided into a plurality of coding units.

In an embodiment of the present disclosure, information indicating how many coding units a coding unit is to be divided into or in which direction the coding unit is to be divided may be included in the partition form mode information. For example, the partition form mode information may indicate that the division is performed in at least one of the vertical direction or the horizontal direction or that the division is not to be performed.

The image encoding device 200 determines information about the partition form mode based on the coding unit's partition form mode. The image encoding device 200 determines a context model based on at least one of the coding unit's shape, direction, width-height ratio or size. The image encoding device 200 also generates information about the partition form mode to divide the coding unit as a bitstream based on the context model.

To determine a context model, the image encoding device 200 may obtain an array for matching at least one of the coding unit's shape, direction, width-height ratio or size to an index of a context model. The image encoding device 200 may obtain an index of a context model based on at least one of the coding unit's shape, direction, width-height ratio or size from the array. The image encoding device 200 may determine a context model based on an index of the context model.

To determine a context model, the image encoding device 200 may determine a context model further based on block form information including at least one of the shape, direction, width-height ratio or size of a neighbor coding unit adjacent to the coding unit. Furthermore, the neighbor coding unit may include at least one of coding units located to the lower-left side, left side, upper-left side, upper side, upper-right side, right side or lower-right side of the coding unit.

The image encoding device 200 may compare the width of the upper neighbor coding unit with the width of the coding unit, in order to determine a context model. The image encoding device 200 may compare the heights of the left and right neighbor coding units with the height of the coding unit. The image encoding device 200 may determine a context model based on the comparison results.

Operations of the image encoding device 200 include similar content to the operations of the video decoding device 100 as described in connection with FIGS. 3 to 19, so detailed descriptions thereof will be omitted.

FIG. 3 illustrates a procedure in which the image decoding device 100 determines at least one coding unit by dividing a current coding unit, according to an embodiment of the present disclosure.

The block form may include 4Nx4N, 4Nx2N, 2Nx4N, 4NxN, Nx4N, 32NxN, Nx32N, 16NxN, Nx16N, 8NxN or Nx8N. N may be a positive integer. The block form information indicates at least one of the coding unit's shape, direction, width-height ratio or size.

The coding unit's shape may include squares and non-squares. When the coding unit's width and height have the same length (i.e., the block form of the coding unit corresponds to 4Nx4N), the image decoding device 100 may determine the block form information of the coding unit as a square. The image decoding device 100 may determine the shape of the coding unit as a non-square.

When the coding unit's width and height are different in length (i.e., the block shape of the coding unit corresponds to 4Nx2N, 2Nx4N, 4NxN, Nx4N, 32NxN, Nx32N, 16NxN, Nx16N, 8NxN or Nx8N), the image decoding device 100 may determine the block form information of the coding unit as a non-square. When the shape of the coding unit is a non-square, the image decoding device 100 may determine the width-height ratio in the block form information of the coding unit to be at least one of 1:2, 2:1, 1:4, 4:1, 1:8, 8:1, 1:16, 16:1, 1:32 and 32:1. Furthermore, based on the width and height of the coding unit, the image decoding device 100 may determine whether the coding unit is horizontal or vertical. Moreover, based on at least one of the width, height or area of the coding unit, the image decoding device 100 may determine the size of the coding unit.

In an embodiment of the present disclosure, the image decoding device 100 may determine the form of the coding unit based on the block form information, and determine which form the coding unit is to be divided into based on the partition form mode information. In other words, depending on a block form indicated by the block form information used by the image decoding device 100, a method of dividing the coding unit indicated by the partition form mode information may be determined.

The image decoding device 100 may obtain the partition form mode information from a bitstream. It is not, however, limited thereto, and the image decoding device 100 and the image encoding device 200 may determine prearranged partition form mode information based on the block form information. The image decoding device 100 may determine prearranged partition form mode information for the largest coding unit or a smallest coding unit. For example, the image decoding device 100 may determine the partition form mode information for the largest coding unit as quad splitable. Furthermore, the image decoding device 100 may determine the partition form mode information for the smallest coding unit as 'no split'. Specifically, the image decoding device 100 may determine the size of the largest coding unit to be 256x256. The image decoding device 100 may determine the prearranged partition form mode information as quad splitable. The 'quad splitable' is a partition form mode in which both the width and height of the coding unit are divided in half. The image decoding device 100 may obtain coding units each having a size of 128x128 from the largest coding unit of a size of 256x256 based on the partition form mode information. Furthermore, the image decoding device 100 may determine the size of the smallest coding unit to be 4x4. The image decoding device 100 may obtain partition form mode information indicating "no split" for the smallest coding unit.

In an embodiment of the present disclosure, the image decoding device 100 may use the block form information indicating that the current coding unit has the form of a square. For example, the image decoding device 100 may determine whether the square shaped coding unit is not to be divided, to be divided vertically, to be divided horizontally, to be divided into four coding units, etc., based on the partition form mode information. Referring to FIG. 3, when the block form information of a current coding unit 300 indicates a square, the decoder 120 may not divide a coding unit 310a having the same size as the current coding unit 300 according to the partition form mode information indicating 'no split', or may determine coding units 310b, 310c, 310d, 310e, 310f, or the like, based on the partition form mode information indicating a certain partition method.

Referring to FIG. 3, the image decoding device 100 may determine two coding units 310b resulting from dividing the current coding unit 300 in the vertical direction based on the partition form mode information indicating 'vertical split'. The image decoding device 100 may determine two coding units 310b resulting from dividing the current coding unit 300 in the horizontal direction, based on the partition form mode information indicating a 'horizontal split'. The image decoding device 100 may determine four coding units 310d resulting from dividing the current coding unit 300 in the vertical and horizontal directions, based on the partition form mode information indicating a 'vertical and horizontal split'. The image decoding device 100 may determine three coding units 310e resulting from dividing the current coding unit 300 in the vertical direction, based on the partition form mode information indicating a 'vertical ternary split'. The image decoding device 100 may determine three coding units 310f resulting from dividing the current coding unit 300 in the horizontal direction, based on the partition form mode information indicating a 'horizontal ternary split'. However, partition forms into which a square shaped coding unit may be divided are not limited to the aforementioned forms, and there may be various forms that may be indicated by the partition form mode information. Certain partition forms into which the square shaped coding unit is divided will now be described in detail according to an embodiment of the present disclosure.

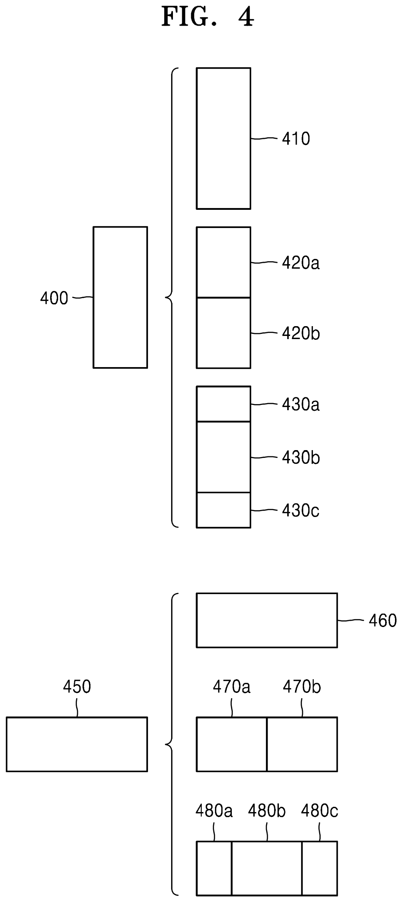

FIG. 4 illustrates a procedure in which the image decoding device 100 determines at least one coding unit by dividing a non-square shaped coding unit, according to an embodiment of the present disclosure.

In an embodiment of the present disclosure, the image decoding device 100 may use the block form information indicating that the current coding unit has a non-square shape. The image decoding device 100 may determine whether the current non-square shaped coding unit is not to be divided or to be divided in a certain method, based on the split shape mode information. Referring to FIG. 4, when the block form information of a current coding unit 400 or 450 indicates a non-square form, the image decoding device 100 may determine a coding unit 410 or 460 having the same size as the current coding unit 400 or 450 according to the partition form mode information indicating 'no split', or may determine coding units 420a, 420b, 430a, 430b, 430c, 470a, 470b, 480a, 480b, 480c, or the like, based on the partition form mode information indicating a certain partition method. Certain partition methods by which the non-square shaped coding unit is divided will be described in detail according to an embodiment of the present disclosure.

In an embodiment of the present disclosure, the image decoding device 100 may determine a partition form of the coding unit based on the block form mode information, in which case the partition form mode information may indicate the number of at least one coding unit generated by dividing the coding unit. Referring to FIG. 4, when the partition form mode information indicates that the current coding unit 400 or 450 is to be divided into two coding units, the image decoding device 100 may determine two coding units 420a and 420b or 470a and 470b to be included in the current coding unit by dividing the current coding unit 400 or 450 based on the partition form mode information.

In an embodiment of the present disclosure, when the image decoding device 100 divides the non-square shaped current coding unit 400 or 450 based on the partition form mode information, the image decoding device 100 may divide the current coding unit by considering the position of the long side of the current non-square shaped coding unit 400 or 450. For example, the image decoding device 100 may determine a plurality of coding units by dividing the current coding unit 400 or 450 in a direction of dividing the long side of the current coding unit 400 or 450 in consideration of the form of the current coding unit 400 or 450.

In an embodiment of the present disclosure, when the partition form mode information indicates that a coding unit is to be divided into an odd number of blocks (ternary split), the image decoding device 100 may determine an odd number of coding units to be included in the current coding unit 400 or 450. For example, when the partition form mode information indicates that the current coding unit 400 or 450 is to be divided into three coding units, the image decoding device 100 may divide the current coding unit 400 or 450 into three coding units 430a, 430b, 430c, 480a, 480b, 480c.

In an embodiment of the present disclosure, the width-height ratio of the current coding unit 400 or 450 may be 4:1 or 1:4. When the width-height ratio is 4:1, it implies that the width is longer than the height, so the block form information may correspond to a horizontal direction. When the width-height ratio is 1:4, it implies that the width is shorter than the height, so the block form information may correspond to a vertical direction. The image decoding device 100 may determine to divide the current coding unit into an odd number of blocks based on the partition form mode information. Furthermore, the image decoding device 100 may determine a split direction of the current coding unit 400 or 450 based on the block form information of the current coding unit 400 or 450. For example, when the current coding unit 400 is in the vertical direction, the image decoding device 100 may determine coding units 430a, 430b and 430c by dividing the current coding unit 400 in the horizontal direction. Furthermore, when the current coding unit 450 is in the horizontal direction, the image decoding device 100 may determine coding units 480a, 430b and 430c by dividing the current coding unit 450 in the vertical direction.

In an embodiment of the present disclosure, the image decoding device 100 may determine an odd number of coding units to be included in the current coding unit 400 or 450, and the sizes of the determined coding units may not all be identical. For example, a certain coding unit 430b or 480b of the odd number of determined coding units 430a, 430b, 430c, 480a, 480b and 480c may have a different size from the other coding units 430a, 430c, 480a and 480c. In other words, coding units that may be determined by dividing the current coding unit 400 or 450 may have different sizes, and in some cases, each of the odd number of coding units 430a, 430b, 430c, 480a, 480b and 480c may have a different size.

In an embodiment of the present disclosure, when the partition form mode information indicates that a coding unit is to be divided into an odd number of blocks, the image decoding device 100 may determine an odd number of coding units to be included in the current coding unit 400 or 450, and furthermore, the image decoding device 100 may impose a certain restriction on at least one of the odd number of coding units generated by partitioning. Referring to FIG. 4, the image decoding device 100 may perform a different decoding process on the coding unit 430b or 480b located in the middle of the three coding units 430a, 430b and 430c or 480a, 480b and 480c generated by dividing the current coding unit 400 or 450 from the other coding units 430a and 430b or 480a and 480c. For example, the image decoding device 100 may restrict the coding unit 430b or 480b located in the middle from being further divided, unlike the other coding units 430a and 430c or 480a and 480, or restrict the coding unit 430b or 480b so that it is divided only a certain number of times.

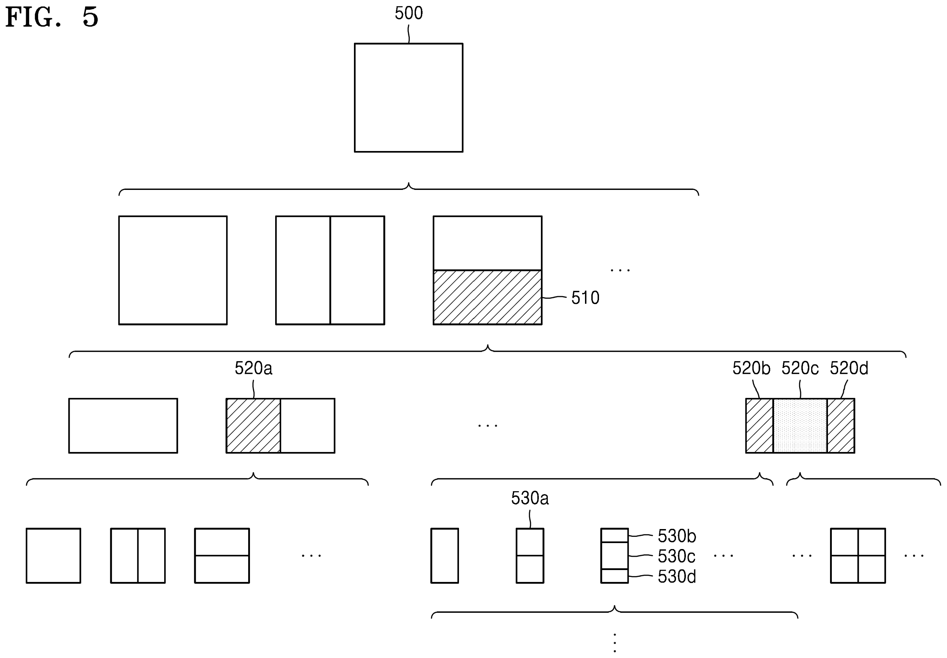

FIG. 5 illustrates a procedure in which the image decoding device 100 divides a coding unit based on at least one of block form information and partition form mode information, according to an embodiment of the present disclosure.

In an embodiment of the present disclosure, the image decoding device 100 may determine to divide or not to divide a first coding unit 500 of a square form into coding units, based on at least one of the block form information and the partition form mode information. In an embodiment of the present disclosure, when the partition form mode information indicates that the first coding unit 500 is to be divided in the horizontal direction, the image decoding device 100 may determine second coding units 510 by dividing the first coding unit 500 in the horizontal direction. In an embodiment of the present disclosure, the first, second and third coding units are terms used to understand the sequential relationship of division among coding units. For example, the second coding units may be determined by dividing the first coding unit, and the third coding units may be determined by dividing the second coding unit. The relationship among the first, second and third coding units as will be used hereinafter may be understood according to the aforementioned characteristics.

In an embodiment of the present disclosure, the image decoding device 100 may determine to divide or not to divide the determined second coding unit 510 into coding units based on the partition form mode information. Referring to FIG. 5, the image decoding device 100 may divide the second coding unit 510 of a non-square form determined by dividing the first coding unit 500 into at least one third coding unit 520a, 520b, 520c, 520d, etc., or may not divide the second coding unit 510, based on the partition form mode information. The image decoding device 100 may obtain the partition form mode information, and the image decoding device 100 may divide the first coding unit 500 into a plurality of second coding units of various shapes, e.g., 510, based on the obtained partition form mode information, and divide the second coding unit 510 according to the method by which the first coding unit 500 is divided, based on the partition form mode information. In an embodiment of the present disclosure, when the first coding unit 500 is divided into the second coding units 510 based on the partition form mode information for the first coding unit 500, the second coding unit 510 may also be divided into the third coding units (e.g., 520a, 520b, 520c, 520d, etc.), based on the partition form mode information for the second coding unit 510. That is, a coding unit may be recursively divided based on the partition form mode information relating to each coding unit. Accordingly, square shaped coding units may be determined from a non-square shaped coding unit, and the square shaped coding unit may be recursively divided so that non-square shaped coding units may be determined.

Referring to FIG. 5, a certain coding unit (e.g., a coding unit located in the middle or a square coding unit) among an odd number of third coding units 520b, 520c and 520d determined by dividing the second coding unit 510 of a non-square shape may be recursively divided. In an embodiment of the present disclosure, one of the odd number of third coding units 520b, 520c and 520d, the third coding unit 520b of a non-square form may be divided in the horizontal direction into a plurality of fourth coding units. One of the plurality of fourth coding units 530a, 530b, 530c and 530d, the fourth coding unit 530b or 530d of a non-square form may be further divided into a plurality of coding units. For example, the fourth coding unit 530b or 530d of the non-square form may be further divided into an odd number of coding units. Methods that may be used for recursive partition of coding units will be described later through an embodiment of the present disclosure.

In an embodiment of the present disclosure, the image decoding device 100 may divide each of the third coding units 520a, 520b, 520c, 520d, etc., into coding units, based on the partition form mode information. Furthermore, the image decoding device 100 may determine not to divide the second coding unit 510 based on the partition form mode information. The image decoding device 100 may divide the second coding unit 510 of the non-square form into an odd number of third coding units 520b, 520c and 520d, according to an embodiment of the present disclosure. The image decoding device 100 may impose certain restrictions on a certain third coding unit among the odd number of third coding units 520b, 520c and 520d. For example, the image decoding device 100 may restrict the coding unit 520c located in the middle of the odd number of third coding units 520b, 520c and 520d from further being divided or restrict the coding unit 520c so that it is divided a configurable number of times.

Referring to FIG. 5, the image decoding device 100 may restrict the coding unit 520c located in the middle of the odd number of third coding units 520b, 520c and 520d included in the second coding unit 510 of the non-square form so that it is not further divided, it is divided into certain partition forms (e.g., only four coding units or forms corresponding to the forms into which the second coding unit 510 is divided), or it is divided only a certain number of times (e.g., n times, where n>0). However, the restrictions on the coding unit 520c located in the middle are merely illustrative examples and should not be construed as being limited to the foregoing examples, but should be interpreted as encompassing various restrictions under which the coding unit 520c located in the middle may be decoded differently from the other coding units 520b and 520d.

In an embodiment of the present disclosure, the image decoding device 100 may obtain the partition form mode information used to divide the current coding unit from a certain location in the current coding unit.

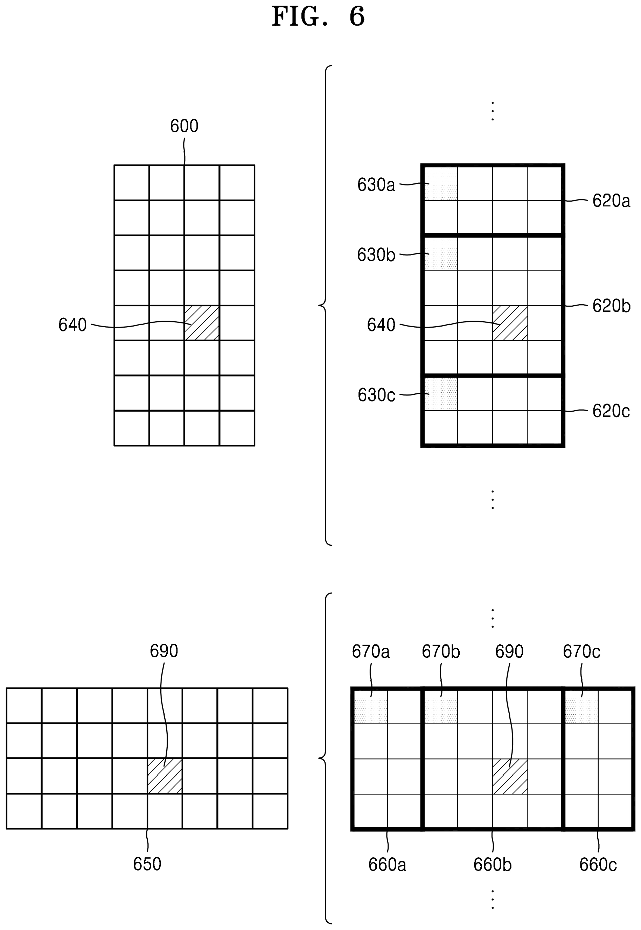

FIG. 6 illustrates a method by which the image decoding device 100 determines a certain coding unit from among an odd number of coding units, according to an embodiment of the present disclosure.

Referring to FIG. 6, the partition form mode information of a current coding unit 600 or 650 may be obtained from a sample in a certain location (e.g., a sample 640 or 690 located in the middle) among a plurality of samples included in the current coding unit 600 or 650. However, the certain location in the current coding unit 600 from which at least a piece of the partition form mode information may be obtained should not be construed as being limited to the location in the middle shown in FIG. 6, but should be interpreted as encompassing various locations (e.g., the uppermost part, the lowermost part, the left side, the right side, the upper-left part, the lower-left part, the upper-right part or the lower-right part) that may be contained in the current coding unit 600. The image decoding device 100 may obtain the partition form mode information from the certain location and determine to divide or not to divide the current coding unit into coding units of various forms and sizes.

In an embodiment of the present disclosure, when the current coding unit is divided into a certain number of coding units, the image decoding device 100 may select one coding unit among them. There may be various methods for selecting one of the plurality of coding units, and the descriptions thereof will be described below through an embodiment of the present disclosure.

In an embodiment of the present disclosure, the image decoding device 100 may divide the current coding unit into a plurality of coding units and determine a coding unit in a certain location.

In an embodiment of the present disclosure, the image decoding device 100 may use information indicating a location of each of the odd number of coding units to determine a coding unit located in the middle from among the odd number of coding units. Referring to FIG. 6, the image decoding device 100 may determine an odd number of coding units 620a, 620b and 620c or 660a, 660b and 660c by dividing the current coding unit 600 or 650. The image decoding device 100 may determine the central coding unit 620b or 660b by using the information regarding locations of the odd number of coding units 620a, 620b and 620c or 660a, 660b and 660c. For example, the image decoding device 100 may determine the coding unit 620b located in the middle by determining locations of the coding units 620a, 620b and 620c based on information indicating locations of certain samples included in the coding units 620a, 620b and 620c. Specifically, the image decoding device 100 may determine the coding unit 620b located in the middle by determining locations of the coding units 620a, 620b and 620c based on information indicating locations of upper-left samples 630a, 630b and 630c of the coding units 620a, 620b and 620c.

In an embodiment of the present disclosure, the information indicating locations of upper-left samples 630a, 630b and 630c included in the coding units 620a, 620b and 620c, respectively, may include information about locations or coordinates of the coding units 620a, 620b and 620c in the picture. In an embodiment of the present disclosure, the information indicating locations of the upper-left samples 630a, 630b and 630c included in the respective coding units 620a, 620b and 620c may include information indicating widths or heights of the coding units 620a, 620b and 620c included in the current coding unit 600, and the widths or heights may correspond to information indicating differences between coordinates of the coding units 620a, 620b and 620c in the picture. In other words, the image decoding device 100 may determine the coding unit 620b located in the middle by directly using the information about locations or coordinates of the coding units 620a, 620b and 620c in the picture or using the information regarding the widths or heights of the coding units corresponding to differences between the coordinates.

In an embodiment of the present disclosure, information indicating the location of the upper-left sample 630a of the upper coding unit 620a may indicate coordinates (xa, ya), information indicating the location of the upper-left sample 530b of the central coding unit 620b may indicate coordinates (xb, yb), and information indicating the location of the upper-left sample 630c of the lower coding unit 620c may indicate coordinates (xc, yc). The image decoding device 100 may determine the central coding unit 620b by using the coordinates of the upper-left samples 630a, 630b and 630c included in the respective coding units 620a, 620b and 620c. For example, when the coordinates of the upper-left samples 630a, 630b and 630c are arranged in ascending order or descending order, the coding unit 620b including the coordinates (xb, yb) of the sample 630b located in the middle may be determined as a coding unit located in the middle from among the coding units 620a, 620b and 620c determined by dividing the current coding unit 600. The coordinates indicating the locations of the upper-left samples 630a, 630b and 630c may be coordinates indicating absolute locations in the picture, and furthermore, based on the location of the upper-left sample 630a of the upper coding unit 620a, coordinates (dxb, dyb) that is information indicating a relative location of the upper-left sample 630b of the central coding unit 620b and coordinates (dxc, dyc) that is information indicating a relative location of the upper-left sample 630c of the lower coding unit 620c may be used. Furthermore, a method of determining a coding unit in a certain location by using, as information indicating a location of a sample included in a coding unit, coordinates of the sample should not be construed as being limited to the aforementioned methods, but should be interpreted in various arithmetic methods that may use the coordinates of the samples.

In an embodiment of the present disclosure, the image decoding device 100 may divide the current coding unit 600 into a plurality of coding units 620a, 620b and 620c, and select a coding unit from among the coding units 620a, 620b and 620c based on a certain criterion. For example, the image decoding device 100 may select the coding unit 620b having a different size from among the coding units 620a, 620b and 620c.

In an embodiment of the present disclosure, the image decoding device 100 may determine the width or height of each of the coding units 620a, 620b and 620c by using the coordinates (xa, ya) as information indicating a location of the upper-left sample 630a of the upper coding unit 620a, the coordinates (xb, yb) as information indicating a location of the upper-left sample 630b of the central coding unit 620b and the coordinates (xc, yc) as information indicating a location of the upper-left sample 630c of the lower coding unit 620c. The image decoding device 100 may determine the sizes of the respective coding units 620a, 620b and 620c by using the coordinates (xa, ya), (xb, yb) and (xc, yc) that indicate locations of the coding units 620a, 620b and 620c. In an embodiment of the present disclosure, the image decoding device 100 may determine the width of the upper coding unit 620a as the width of the current coding unit 600. The image decoding device 100 may determine the height of the upper coding unit 620a as (yb-ya). In an embodiment of the present disclosure, the image decoding device 100 may determine the width of the central coding unit 620b as the width of the current coding unit 600. The image decoding device 100 may determine the height of the central coding unit 620b as (yc-yb). In an embodiment of the present disclosure, the image decoding device 100 may determine the width or height of the lower coding unit by using the width or height of the current coding unit and the widths or heights of the upper coding unit 620a and the central coding unit 620b. The image decoding device 100 may determine a coding unit having a different size from the other coding units, based on the width and height of the determined coding units 620a, 620b and 620c. Referring to FIG. 6, the image decoding device 100 may determine the central coding unit 620b having a size different from the sizes of the upper coding unit 620a and the lower coding unit 620c as the coding unit in the certain location. However, the procedure in which the image decoding device 100 determines a coding unit having a different size from the other coding units is merely an illustrative example of determining a coding unit in a certain location by using the sizes of the coding units determined based on sample coordinates, and there may be various procedures for determining the coding unit in the certain location by comparing the sizes of the coding units determined according to certain sample coordinates.

The image decoding device 100 may determine the width or height of each of the coding units 660a, 660b and 660c by using the coordinates (xd, yd) as information indicating a location of the upper-left sample 670a of the left coding unit 660a, the coordinates (xe, ye) as information indicating a location of the upper-left sample 670b of the central coding unit 660b and the coordinates (xf, yf) as information indicating a location of the upper-left sample 670c of the right coding unit 660c. The image decoding device 100 may determine the sizes of the respective coding units 660a, 660b and 660c by using the coordinates (xd, yd), (xe, ye) and (xf, yf) that indicate locations of the coding units 660a, 660b and 660c.

In an embodiment of the present disclosure, the image decoding device 100 may determine the width of the left coding unit 660a to be (xe-xd). The image decoding device 100 may determine the height of the left coding unit 660a as the height of the current coding unit 650. In an embodiment of the present disclosure, the image decoding device 100 may determine the width of the central coding unit 660b to be (xf-xe). The image decoding device 100 may determine the height of the central coding unit 660b as the height of the current coding unit 600. In an embodiment of the present disclosure, the image decoding device 100 may determine the width or height of the right coding unit 660c by using the width or height of the current coding unit 650 and the widths and heights of the left coding unit 660a and the central coding unit 660b. The image decoding device 100 may determine a coding unit having a different size from the other coding units, based on the widths and heights of the determined coding units 660a, 660b and 660c. Referring to FIG. 6, the image decoding device 100 may determine the central coding unit 660b having a size different from the sizes of the left coding unit 660a and the right coding unit 660c as the coding unit in the certain location. However, the procedure in which the image decoding device 100 determines a coding unit having a different size from the other coding units is merely an illustrative example of determining a coding unit in a certain location by using the sizes of the coding units determined based on sample coordinates, and there may be various procedures for determining the coding unit in the certain location by comparing the sizes of the coding units determined according to certain sample coordinates.

The locations of the samples taken into account to determine locations of the coding units should not be construed as being limited to the aforementioned upper-left location, but may be interpreted as being determined by using information about locations of arbitrary samples included in the coding unit.

In an embodiment of the present disclosure, the image decoding device 100 may select a coding unit in a certain location from among an odd number of coding units determined by dividing the current coding unit, in consideration of the form of the current coding unit. For example, when the current coding unit has a non-square form whose width is longer than its height, the image decoding device 100 may determine a coding unit in a certain location along the horizontal direction. In other words, the image decoding device 100 may determine one of coding units that varies in location in the horizontal direction and impose a restriction on the coding unit. When the current coding unit has a non-square form whose height is longer than its width, the image decoding device 100 may determine a coding unit in a certain location along the vertical direction. In other words, the image decoding device 100 may determine one of coding units that varies in location in the vertical direction and impose a restriction on the coding unit.

In an embodiment of the present disclosure, the image decoding device 100 may use information indicating a location of each of an even number of coding units to determine a coding unit in a certain location from among the even number of coding units. The image decoding device 100 may determine an even number of coding units by dividing the current coding unit (binary split), and determine a coding unit in a certain location by using information regarding the locations of the even number of coding units. A detailed procedure for this may correspond to the aforementioned procedure for determining a coding unit in a certain location (e.g., located in the middle) from among an odd number of coding units as described above in FIG. 6, so the description thereof will be omitted.

In an embodiment of the present disclosure, when the current coding unit of a non-square form is divided into a plurality of coding units, certain information regarding a coding unit in a certain location may be used in a partition procedure to determine a coding unit in a certain location from among the plurality of coding units. For example, the image decoding device 100 may use at least one of block form information and partition form mode information stored in a sample included in a central coding unit in the partition procedure, in order to determine the coding unit located in the middle of a plurality of coding units divided from the current coding unit.

Referring to FIG. 6, the image decoding device 100 may divide the current coding unit 600 into a plurality of coding units 620a, 620b and 620c based on the partition form mode information, and determine the coding unit 620b located in the middle of the plurality of coding units 620a, 620b and 620c. Furthermore, the image decoding device 100 may determine the coding unit 620b located in the middle by considering a location from which the partition form mode information is obtained. Specifically, the partition form mode information for the current coding unit 600 may be obtained from the sample 640 located in the middle of the current coding unit 600, and when the current coding unit 600 is divided into the plurality of coding units 620a, 620b and 620c based on the partition form mode information, the coding unit 620b including the sample 640 may be determined as the coding unit located in the middle. However, the information used to determine one as the coding unit located in the middle should not be construed as being limited to the partition form mode information, but various types of information may be used in the procedure for determining the coding unit located in the middle.

In an embodiment of the present disclosure, certain information for identifying a coding unit in a certain location may be obtained from a certain sample included in a coding unit to be determined. Referring to FIG. 6, the image decoding device 100 may use the partition form mode information obtained from a sample in a certain location in the current coding unit 600 (e.g., a sample located in the center of the current coding unit 600), in order to determine a coding unit in a certain location from among the plurality of coding units 620a, 620b and 620c determined by dividing the current coding unit 600 (e.g., a coding unit located in the middle of the plurality of coding units). In other words, the image decoding device 100 may determine a sample in the certain location by taking into account a block shape of the current coding unit 600, and may determine and impose a certain restriction on the coding unit 620b that includes a sample from which certain information (e.g., the partition form mode information) may be obtained, from among the plurality of coding units 620a, 620b and 620c determined by dividing the current coding unit 600. Referring to FIG. 6, in an embodiment of the present disclosure, the image decoding device 100 may determine the sample 640 located in the middle of the current coding unit 600 as a sample from which certain information may be obtained, and may impose a certain restriction on the coding unit 620b that includes the sample 640 in a decoding procedure. However, the location of the sample from which the certain information may be obtained should not be construed as being limited to the aforementioned location, but may be interpreted as samples in arbitrary locations included in the coding unit 620b to be determined to impose a restriction thereon.

In an embodiment of the present disclosure, the location of a sample from which certain information may be obtained may be determined based on the shape of the current coding unit 600. In an embodiment of the present disclosure, the block form information may determine whether the form of the current coding unit is a square or non-square, and determine a location of the sample from which certain information may be obtained, according to the form. For example, the image decoding device 100 may determine a sample located on a boundary that divides at least one of the width and height of the current coding unit in half as a sample from which certain information may be obtained, by using at least one of information about the width of the current coding unit and information about the height. In another example, when the block form information relating to the current coding unit indicates a non-square form, the image decoding device 100 may determine one of samples adjacent to the boundary that divides the long side of the current coding unit in half as the sample from which certain information may be obtained.

In an embodiment of the present disclosure, when the current coding unit is divided into a plurality of coding units, the image decoding device 100 may use the partition form mode information to determine a coding unit in a certain location from among the plurality of coding units. In an embodiment of the present disclosure, the image decoding device 100 may obtain the partition form mode information from a sample in a certain location included in the coding unit, and the image decoding device 100 may divide the plurality of coding units generated by dividing the current coding unit by using the partition form mode information obtained from the sample in the certain location included in each of the plurality of coding units. That is, the coding unit may be recursively divided based on the partition form mode information obtained from the sample in the certain location included in each coding unit. The recursive partition procedure for coding units was described in connection with FIG. 5, so the detailed description thereof will not be repeated.

In an embodiment of the present disclosure, the image decoding device 100 may determine at least one coding unit by dividing the current coding unit, and determine, based on a certain block (e.g., the current coding unit), an order in which the at least one coding unit is decoded.

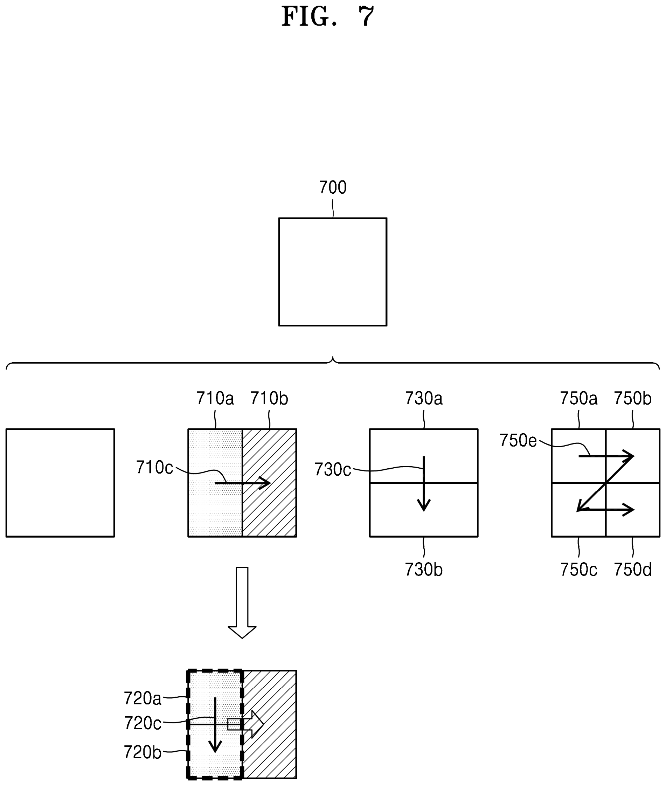

FIG. 7 illustrates an order in which a plurality of coding units are processed when the image decoding device 100 determines the plurality of coding units by dividing a current coding unit, according to an embodiment of the present disclosure.

In an embodiment of the present disclosure, based on the partition form mode information, the image decoding device 100 may determine second coding units 710a and 710b by dividing a first coding unit 700 in the vertical direction, determine second coding units 730a and 730b by dividing the first coding unit 700 in the horizontal direction, or determine second coding units 750a, 750b, 750c and 750d by dividing the first coding unit 700 in the vertical and horizontal directions.

Referring to FIG. 7, the image decoding device 100 may determine an order in which the second coding units 710a and 710b determined by dividing the first coding unit 700 in the vertical direction are to be processed in a horizontal direction 710c. The image decoding device 100 may determine a processing order of the second coding units 730a and 730b determined by dividing the first coding unit 700 in the horizontal direction to be in a vertical direction 730c. The image decoding device 100 may determine the second coding units 750a, 750b, 750c and 750d determined by dividing the first coding unit 700 in the vertical and horizontal directions according to a certain order (e.g., a raster scan order or a z scan order 750e) in which the coding units located in one row are processed and the coding units in the next row are processed.

In an embodiment of the present disclosure, the image decoding device 100 may recursively divide the coding units. Referring to FIG. 7, the image decoding device 100 may determine the plurality of coding units 710a, 710b, 730a, 730b, 750a, 750b, 750c and 750d by dividing the first coding unit 700, and recursively divide each of the plurality of determined coding units 710a, 710b, 730a, 730b, 750a, 750b, 750c and 750d. The method of dividing the plurality of coding units 710a, 710b, 730a, 730b, 750a, 750b, 750c and 750d may correspond to the method of dividing the first coding unit 700. Accordingly, each of the plurality of coding units 710a, 710b, 730a, 730b, 750a, 750b, 750c and 750d may be independently divided into a plurality of coding units. Referring to FIG. 7, the image decoding device 100 may determine the second coding units 710a and 710b by dividing the first coding unit 700 in the vertical direction, and further determine to divide or not to divide each of the second coding units 710a and 710b independently.

In an embodiment of the present disclosure, the image decoding device 100 may divide the second coding unit 710a on the left in the horizontal direction into the third coding units 720a and 720b, and may not divide the second coding unit 710b on the right.

In an embodiment of the present disclosure, the processing order of coding units may be determined based on the coding unit partition procedure. In other words, the processing order of the divided coding units may be determined based on the processing order of coding units right before the coding units are divided. The image decoding device 100 may determine the order of processing the third coding units 720a and 720b determined by dividing the second coding unit 710a on the left, separately from the second coding unit 710b on the right. As the third coding units 720a and 720b are determined by dividing the second coding unit 710a on the left in the horizontal direction, the third coding units 720a and 720b may be processed in a vertical direction 720c. Furthermore, as the order in which the second coding unit 710a on the left and the second coding unit 710b on the right are processed corresponds to the horizontal direction 710c, the coding unit 710b on the right may be processed after the third coding units 720a and 720b included in the second coding unit 710a on the left are processed in the vertical direction 720c. As the foregoing description is for a procedure for determining an order in which coding units are processed based on a coding unit before the coding unit is divided, it should not be construed as being limited to the aforementioned embodiments, but should be interpreted as using various methods, by which coding units determined through division into various forms are separately processed in a certain order.

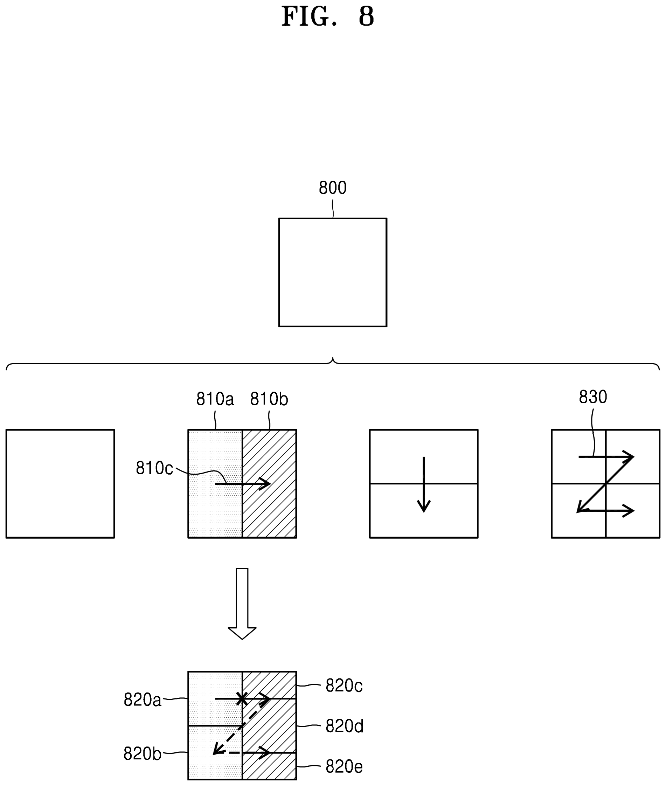

FIG. 8 illustrates a procedure in which the image decoding device 100 determines that a current coding unit is to be divided into an odd number of coding units when it is not possible to process the coding unit in a certain order, according to an embodiment of the present disclosure.

In an embodiment of the present disclosure, the image decoding device 100 may determine to divide the current coding unit into an odd number of coding units based on the obtained partition form mode information. Referring to FIG. 8, a first coding unit 800 of a square form may be divided into second coding units 810a and 810b of a non-square form, and the second coding units 810a and 810b may be separately divided into third coding units 820a and 820b or 820c, 820d and 820e. In an embodiment of the present disclosure, the image decoding device 100 may determine the plurality of third coding units 820a and 820b by horizontally dividing the left coding unit 810a among the second coding units, and divide the right coding unit 810b into an odd number of third coding units 820c, 820d and 820e.

In an embodiment of the present disclosure, the image decoding device 100 may determine whether there are an odd number of divided coding units by determining whether the third coding units 820a, 820b, 820c, 820d and 820e may be processed in a certain order. Referring to FIG. 8, the image decoding device 100 may determine the third coding units 820a, 820b, 820c, 820d and 820e by recursively dividing the first coding unit 800. Based on at least one of the block form information and the partition form mode information, the image decoding device 100 may determine whether the first coding unit 800, the second coding units 810a and 810b or the third coding units 820a, 820b, 820c, 820d and 820e are divided into an odd number of coding units. For example, the coding unit located on the right among the second coding units 810a and 810b may be divided into an odd number of third coding units 820c, 820d and 820e. A plurality of coding units included in the first coding unit 800 may be processed in a certain order (e.g., z-scan order) 830, and the image decoding device 100 may determine whether a condition is satisfied in which the third coding units 820c, 820d and 820e determined by dividing the second coding unit 810b on the right may be processed according to the certain order.

In an embodiment of the present disclosure, the image decoding device 100 may determine whether a condition is satisfied in which the third coding units 820a, 820b, 820c, 820d and 820e included in the first coding unit 800 may be processed in a certain order, and the condition is related to whether at least one of the width and height of the second coding unit 810a or 810b is divided in half according to boundaries of the third coding units 820a, 820b, 820c, 820d and 820e. For example, the condition may be satisfied by the third coding units 820a and 820b determined by dividing the height of the second coding unit 810a of a non-square form on the left in half. As the boundaries of the third coding units 820c, 820d and 820e determined by dividing the second coding unit 810b on the right into three coding units fail to divide the width or height of the second coding unit 810b on the right in half, the third coding units 820c, 820d and 820e may be determined as not satisfying the condition. The image decoding device 100 may determine the failure to satisfy the condition as disconnection of the scan order, and determine that the second coding unit 810b on the right is divided into an odd number of coding units based on a result of the determining. In an embodiment of the present disclosure, the image decoding device 100 may impose a certain restriction on a coding unit in a certain location among an odd number of divided coding units, and the restriction or the certain location has already been described in the aforementioned embodiment of the present disclosure, so the detailed description thereof will not be repeated.

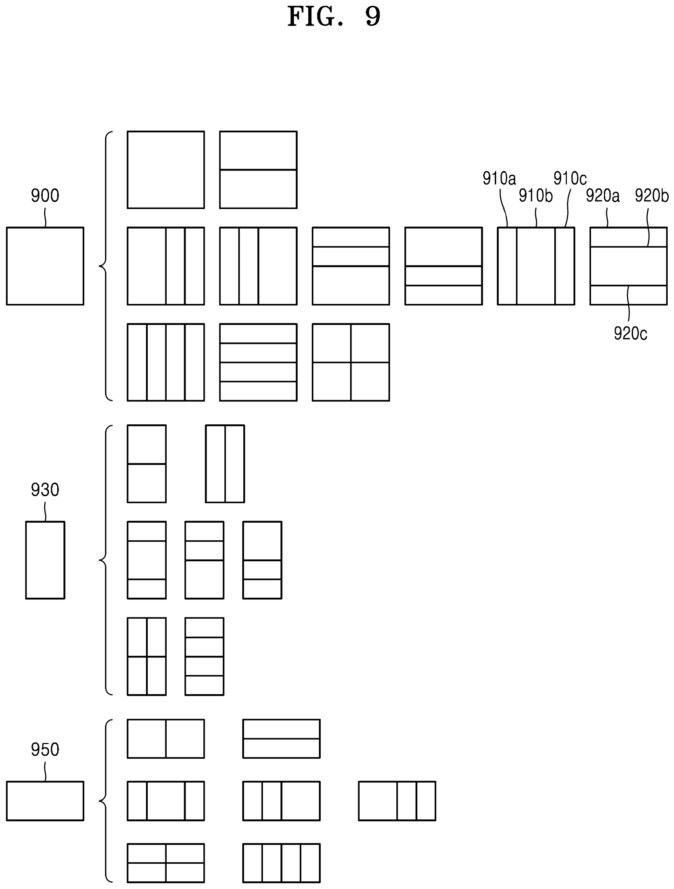

FIG. 9 illustrates a procedure in which the image decoding device 100 determines at least one coding unit by dividing a first coding unit 900, according to an embodiment of the present disclosure.

In an embodiment of the present disclosure, the image decoding device 100 may divide the first coding unit 900 based on the partition form mode information obtained by the bitstream obtainer 110. The first coding unit 900 of a square form may be divided into four square shaped coding units or into a plurality of non-square shaped coding units. For example, referring to FIG. 9, when the first coding unit 900 is a square and the partition form mode information indicates partition into non-square shaped coding units, the image decoding device 100 may divide the first coding unit 900 into a plurality of non-square shaped coding units. Specifically, when the partition form mode information indicates that an odd number of coding units are determined by horizontally or vertically dividing the first coding unit 900, the image decoding device 100 may divide the first coding unit 900 of the square form into an odd number of coding units: the second coding units 910a, 910b and 910c determined through vertical division or the second coding units 920a, 920b and 920c determined through horizontal division.

In an embodiment of the present disclosure, the image decoding device 100 may determine whether a condition is satisfied in which the second coding units 910a, 910b, 910c, 920a, 920b and 920c included in the first coding unit 900 may be processed in a certain order, and the condition is related to whether at least one of the width and height of the first coding unit 900 is divided in half according to the boundaries of the second coding units 910a, 910b, 910c, 920a, 920b and 920c. Referring to FIG. 9, as the boundaries of the second coding units 910a, 910b and 910c determined by vertically dividing the first coding unit 900 of the square form make it impossible to divide the width of the first coding unit 900 in half, the first coding unit 900 may be determined as failing to satisfy the condition to be processed in the certain order. As the boundaries of the second coding units 920a, 920b and 920c determined by horizontally dividing the first coding unit 900 of the square form make it impossible to divide the height of the first coding unit 900 in half, the first coding unit 900 may be determined as failing to satisfy the condition to be processed in the certain order. The image decoding device 100 may determine the failure to satisfy the condition as disconnection of the scan order, and determine that the first coding unit 900 is divided into an odd number of coding units based on a result of the determining. In an embodiment of the present disclosure, the image decoding device 100 may impose a certain restriction on a coding unit in a certain location among an odd number of divided coding units, and the restriction or the certain location has already been described in the aforementioned embodiment of the present disclosure, so the detailed description thereof will not be repeated.

In an embodiment of the present disclosure, the image decoding device 100 may determine various forms of coding units by dividing the first coding unit.

Referring to FIG. 9, the image decoding device 100 may divide the first coding unit 900 of a square form, the first coding unit 930 or 950 of a non-square form into various shapes of coding units.

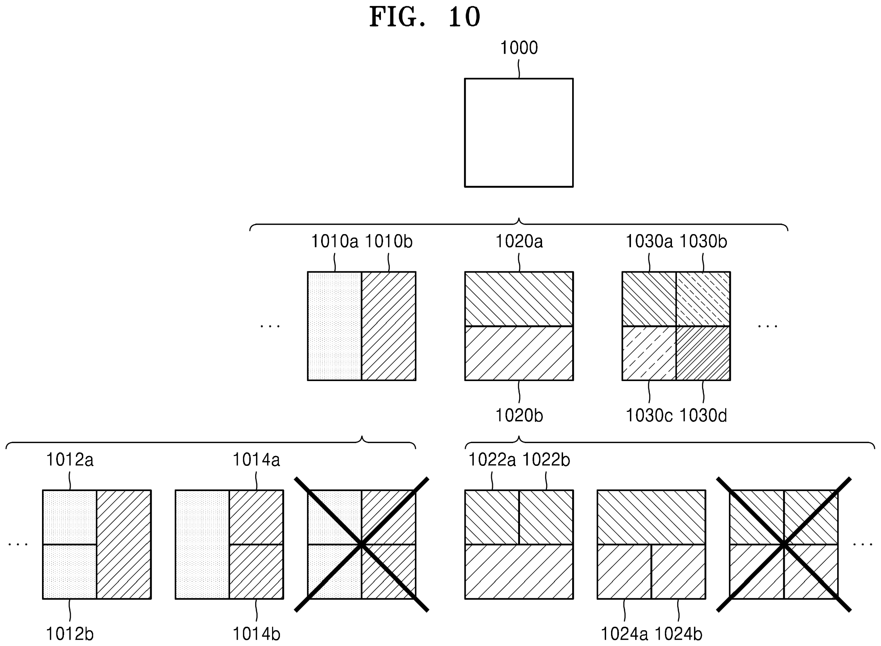

FIG. 10 illustrates that the image decoding device 100 restricts the form into which a second coding unit of a non-square form determined by dividing a first coding unit 1000 may be divided, when the second coding unit satisfies a certain condition, according to an embodiment of the present disclosure.

In an embodiment of the present disclosure, the image decoding device 100 may determine to divide the first coding unit 1000 of a square form into non-square shaped second coding units 1010a, 1010b, 1020a and 1020b, based on partition form mode information obtained through the bitstream obtainer 110. The second coding units 1010a, 1010b, 1020a and 1020b may be divided independently. Hence, the image decoding device 100 may determine to divide or not to divide each of the second coding units 1010a, 1010b, 1020a and 1020b based on partition form mode information relating to each of the second coding units 1010a, 1010b, 1020a and 1020b. In an embodiment of the present disclosure, the image decoding device 100 may determine third coding units 1012a and 1012b by horizontally dividing the second coding unit 1010a of a non-square form on the left, which is determined by vertically dividing the first coding unit 1000. On the other hand, when the image decoding device 100 horizontally divides the second coding unit 1010a on the left, it may restrict the second coding unit 1010b on the right from being divided in the same horizontal direction as the direction in which the second coding unit 1010a on the left is divided. In a case that third coding units 1014a and 1014b are determined by dividing the second coding unit 1010b on the right in the same direction, third coding units 1012a, 1012b, 1014a and 1014b may be determined by horizontally dividing the second coding unit 1010a on the left and the second coding unit 1010b on the right separately. However, this is the same result as when the image decoding device 100 divides the first coding unit 1000 into four square shaped second coding units 1030a, 1030b, 1030c and 1030d, which may be inefficient from an image decoding perspective.

In an embodiment of the present disclosure, the image decoding device 100 may determine third coding units 1022a, 1022b, 1024a and 1024b by vertically dividing a non-square shaped second coding unit 1020a or 1020b determined by horizontally dividing the first coding unit 1000. On the other hand, when the image decoding device 100 vertically divides one (e.g., the upper second coding unit 1020a) of the second coding units, it may restrict the other second coding unit (e.g., the lower second coding unit 1020b) from being divided in the same vertical direction as the direction in which the upper second coding unit 1020a is divided, for the aforementioned reasons.

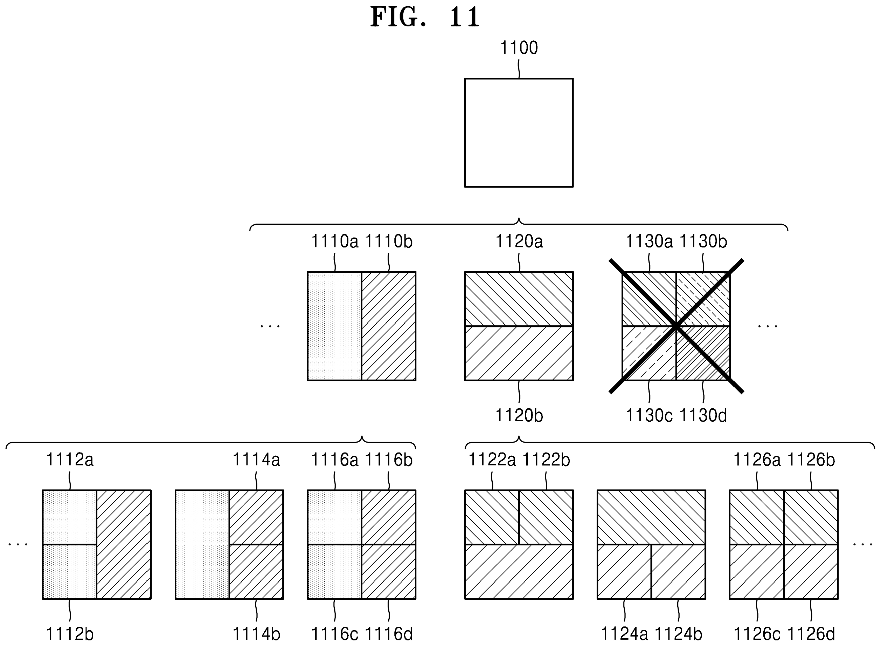

FIG. 11 illustrates a procedure in which the image decoding device 100 divides a square shaped coding unit when partition form mode information fails to indicate division into four square shaped coding units, according to an embodiment of the present disclosure.

In an embodiment of the present disclosure, the image decoding device 100 may determine second coding units 1110a, 1110b, 1120a and 1120b by dividing a first coding unit 1100, based on the partition form mode information. The partition form mode information may include information about various forms into which a coding unit may be divided, but the information about various forms may not include information for dividing one into four square shaped coding units. According to the partition form mode information, the image decoding device 100 is unable to divide the first coding unit 1100 of a square form into four square shaped second coding units 1130a, 1130b, 1130c and 1130d. Based on the partition form mode information, the image decoding device 100 may determine non-square shaped second coding units 1110a, 1110b, 1120a, 1120b, etc.

In an embodiment of the present disclosure, the image decoding device 100 may divide each of the non-square shaped second coding units 1110a, 1110b, 1120a, 1120b, etc., independently. Each of the second coding units 1110a, 1110b, 1120a, 1120b, etc., may be divided in a certain order through a recursive method, which may correspond to a method of dividing the first coding unit 1100 based on the partition form mode information.

For example, the image decoding device 100 may determine square-shaped third coding units 1112a and 1112b by horizontally dividing the second coding unit 1110a on the left, and determine square-shaped third coding units 1114a and 1114b by horizontally dividing the second coding unit 1110b on the right. Furthermore, the image decoding device 100 may determine square shaped third coding units 1116a, 1116b, 1116c and 1116d by horizontally dividing both the second coding unit 1110a on the left and the second coding unit 1110b on the right. In this case, coding units may be determined in the same form as when the first coding unit 1100 is divided into the four square shaped second coding units 1130a, 1130b, 1130c and 1130d.

In another example, the image decoding device 100 may determine square shaped third coding units 1122a and 1112b by vertically dividing the upper second coding unit 1120a, and determine square shaped third coding units 1124a and 1124b by vertically dividing the lower second coding unit 1120b. Furthermore, the image decoding device 100 may determine square shaped third coding units 1126a, 1126b, 1126a and 1126b by vertically dividing both the upper second coding unit 1120a and the lower second coding unit 1120b. In this case, coding units may be determined in the same form as when the first coding unit 1100 is divided into the four square shaped second coding units 1130a, 1130b, 1130c and 1130d.

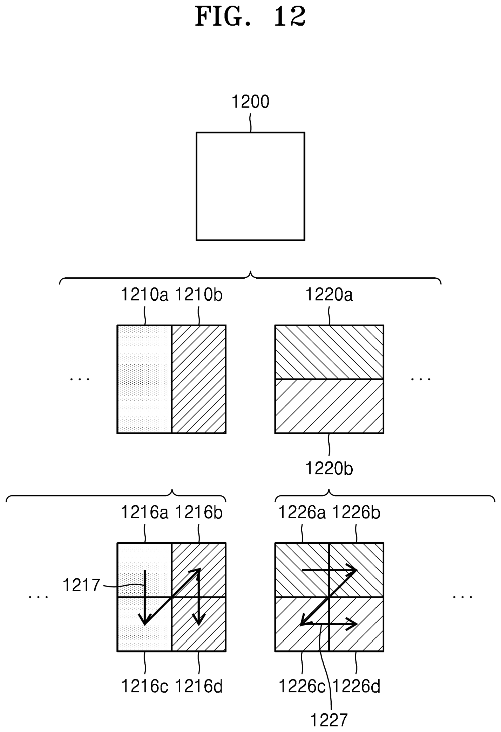

FIG. 12 illustrates that a processing order between a plurality of coding units may vary depending on the procedure for dividing a coding unit, according to an embodiment of the present disclosure.

In an embodiment of the present disclosure, the image decoding device 100 may divide a first coding unit 1200 based on the partition form mode information. When the block form is a square and the partition form mode information indicates that the first coding unit 1200 is divided in at least one of the horizontal direction and the vertical direction, the image decoding device 100 may determine second coding units (e.g., 1210a, 1210b, 1220a, 1220b, etc.) by dividing the first coding unit 1200. Referring to FIG. 12, the non-square shaped second coding units 1210a, 1210b, 1220a and 1220b determined by dividing the first coding unit 1200 only in the horizontal or vertical direction may be separately divided based on the partition form mode information for each second coding unit. For example, the image decoding device 100 may determine third coding units 1216a, 1216b, 1216c and 1216d by horizontally dividing each of second coding units 1210a and 1210b produced by vertically dividing the first coding unit 1200, and determine third coding units 1226a, 1226b, 1226c and 1226d by vertically dividing each of second coding units 1220a and 1220b produced by horizontally dividing the first coding unit 1200. The procedure for dividing the second coding units 1210a, 1210b, 1220a and 1220b have already been described above in connection with FIG. 11, so detailed descriptions thereof will be omitted.

In an embodiment of the present disclosure, the image decoding device 100 may process coding units in a certain order. Features of processing coding units in a certain order have already been described in connection with FIG. 7, so the detailed description thereof will be omitted. Referring to FIG. 12, the image decoding device 100 may determine the four square shaped third coding units 1216a, 1216b, 1216c and 1216d or 1226a, 1226b, 1226c and 1226d by dividing the square shaped first coding unit 1200. In an embodiment of the present disclosure, the image decoding device 100 may determine a processing order of the third coding units 1216a, 1216b, 1216c and 1216d or 1226a, 1226b, 1226c and 1226d according to the form in which the first coding unit 1200 is divided.

In an embodiment of the present disclosure, the image decoding device 100 may determine the third coding units 1216a, 1216b, 1216c and 1216d by horizontally dividing each of the second coding units 1210a and 1210b produced by vertical division, and the image decoding device 100 may process the third coding units 1216a, 1216b, 1216c and 1216d in an order 1217 in which the third coding units 1216a and 1216c included in the second coding unit 1210a on the left are processed first in the vertical direction and then the third coding units 1216b and 1216d included in the second coding unit 1210b on the right are processed in the vertical direction.

In an embodiment of the present disclosure, the image decoding device 100 may determine the third coding units 1226a, 1226b, 1226c and 1226d by vertically dividing each of the second coding units 1220a and 1220b produced by horizontal division, and the image decoding device 100 may process the third coding units 1226a, 1226b, 1226c and 1226d in an order 1227 in which the third coding units 1226a and 1226b included in the upper second coding unit 1220a are processed first in the horizontal direction and then the third coding units 1226c and 1226d included in the lower second coding unit 1220b are processed in the horizontal direction.

Referring to FIG. 12, the third coding units 1216a, 1216b, 1216c and 1216d or 1226a, 1226b, 1226c and 1226d of square shape may be determined by dividing each of the second coding units 1210a, 1210b, 1220a and 1220b. The second coding units 1210a and 1210b determined by vertical division and the second coding units 1220a and 1220b determined by horizontal division are divided into different forms, but as seen from the subsequently determined third coding units 1216a, 1216b, 1216c and 1216d, and 1226a, 1226b, 1226c and 1226d, the first coding unit 1200 ends up being divided into the same forms of coding units. Accordingly, although ending up determining the same forms of coding units by recursively dividing coding units through different procedures based on the partition form mode information, the image decoding device 100 may process the plurality of coding units determined as having the same forms in different order.

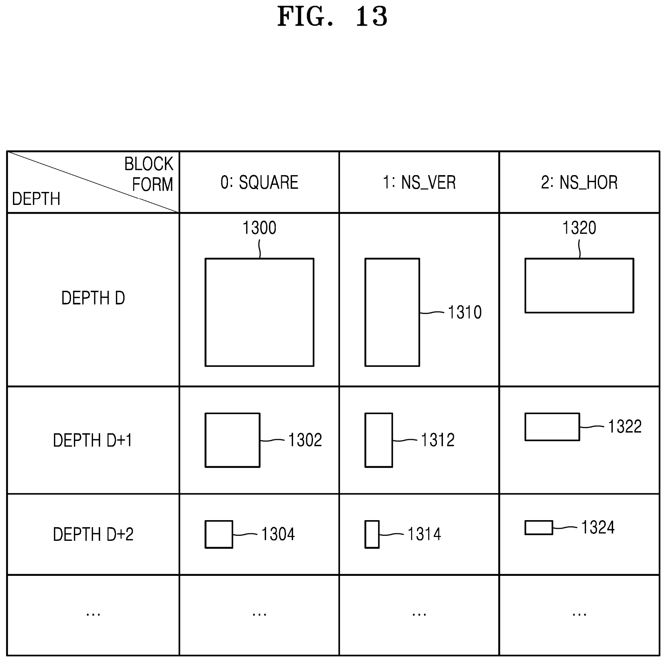

FIG. 13 illustrates a procedure for determining the depth of a coding unit as the shape and size of the coding unit varies when a plurality of coding units are determined by recursively dividing a coding unit, according to an embodiment of the present disclosure.

In an embodiment of the present disclosure, the image decoding device 100 may determine a depth of a coding unit according to a certain criterion. For example, the certain criterion may be the length of the long side of a coding unit. When the length of the long side of the current coding unit results from dividing the length of the long side of a coding unit before division by 2n (where n>0), the image decoding device 100 may determine that the depth of the current coding unit has increased by n compared to the depth of the coding unit before division. The coding unit whose depth has increased is referred to as a lower-depth coding unit.

Referring to FIG. 13, in an embodiment of the present disclosure, based on the block form information indicating a square form (e.g., the block form information indicating '0: SQUARE'), the image decoding device 100 may divide a square shaped first coding unit 1300 so that a second coding unit 1302, a third coding unit 1304, etc., may be determined. Assuming that the size of the square shaped first coding unit 1300 is 2Nx2N, the width and height of the first coding unit 1300 may be divided to be half the sizes, so that the determined second coding unit 1302 may have a size of NxN. Furthermore, the third coding unit 1304 determined by dividing the width and height of the second coding unit 1302 to be half the size may have a size of N/2xN/2. In this case, the width and height of the third coding unit 1304 corresponds to a quarter of the first coding unit 1300. When the depth of the first coding unit 1300 is D, the depth of the second coding unit 1302 having half the width and height of the first coding unit 1300 may be D+1, and the depth of the third coding unit 1304 having a quarter of the width and height of the first coding unit 1300 may be D+2.

In an embodiment of the present disclosure, based on the block form information indicating a non-square shape (e.g., the block form information may indicate '1:NS_VER' indicating a non-square with longer height than width or '2:NS_HOR' indicating a non-square with longer width than height), the image decoding device 100 may divide a non-square shaped first coding unit 1310 or 1320, so that a second coding unit 1312 or 1322, a third coding unit 1314 or 1324, etc., may be determined.

The image decoding device 100 may determine the second coding units (e.g., 1302, 1312, 1322, etc.) by dividing at least one of the width and height of the first coding unit 1310 of a size of Nx2N. Specifically, the image decoding device 100 may horizontally divide the first coding unit 1310 so that the second coding unit 1302 of a size of NxN or the second coding unit 1322 of a size of NxN/2 may be determined, and may horizontally and vertically divide the first coding unit 1310 so that the second coding unit 1312 of a size of N/2xN may be determined.

In an embodiment of the present disclosure, the image decoding device 100 may determine the second coding units (e.g., 1302, 1312, 1322, etc.) by dividing at least one of the width and height of the first coding unit 1320 of a size of 2NxN. Specifically, the image decoding device 100 may vertically divide the first coding unit 1320 so that the second coding unit 1302 of a size of NxN or the second coding unit 1312 of a size of N/2xN may be determined, and may horizontally and vertically divide the first coding unit 1320 so that the second coding unit 1322 of a size of NxN/2 may be determined.

In an embodiment of the present disclosure, the image decoding device 100 may determine the third coding units (e.g., 1304, 1314, 1324, etc.) by dividing at least one of the width and height of the second coding unit 1302 of a size of NxN. Specifically, the image decoding device 100 may vertically and horizontally divide the second coding unit 1302 so that the third coding unit 1304 of a size of N/2xN/2, the third coding unit 1314 of a size of N/4xN/2, or the third coding unit 1324 of a size of N/2xN/4 may be determined.

In an embodiment of the present disclosure, the image decoding device 100 may determine the third coding units (e.g., 1304, 1314, 1324, etc.) by dividing at least one of the width and height of the second coding unit 1312 of a size of N/2xN. Specifically, the image decoding device 100 may horizontally divide the second coding unit 1312 so that the third coding unit 1304 of a size of N/2xN/2 or the third coding unit 1324 of a size of N/2xN/4 may be determined, and may vertically and horizontally divide the second coding unit 1312 so that the third coding unit 1314 of a size of N/4xN/2 may be determined.

In an embodiment of the present disclosure, the image decoding device 100 may determine the third coding units (e.g., 1304, 1314, 1324, etc.) by dividing at least one of the width and height of the second coding unit 1322 of a size of NxN/2. Specifically, the image decoding device 100 may vertically divide the second coding unit 1322 so that the third coding unit 1304 of a size of N/2xN/2 or the third coding unit 1314 of a size of N/4xN/2 may be determined, or may vertically and horizontally divide the second coding unit 1322 so that the third coding unit 1324 of a size of N/2xN/4 may be determined.

In an embodiment of the present disclosure, the image decoding device 100 may horizontally or vertically divide the square shaped coding unit, e.g., 1300, 1302 or 1304. For example, the first coding unit 1300 of a size of 2Nx2N may be vertically divided so that the first coding unit 1310 of a size of Nx2N may be determined, or may be horizontally divided so that the first coding unit 1320 of a size of 2NxN may be determined. In an embodiment of the present disclosure, when the depth is determined based on the length of the longest side of the coding unit, the depth of coding units determined by horizontally or vertically dividing the first coding unit 1300 of a size of 2Nx2N may be equal to the depth of the first coding unit 1300.

In an embodiment of the present disclosure, the width and height of the third coding unit 1314 or 1324 may correspond to a quarter of the first coding unit 1310 or 1320. When the depth of the first coding unit 1310 or 1320 is D, the depth of the second coding unit 1312 or 1322 having half the width and height of the first coding unit 1310 or 1320 may be D+1, and the depth of the third coding unit 1314 or 1324 having a quarter of the width and height of the first coding unit 1310 or 1320 may be D+2.

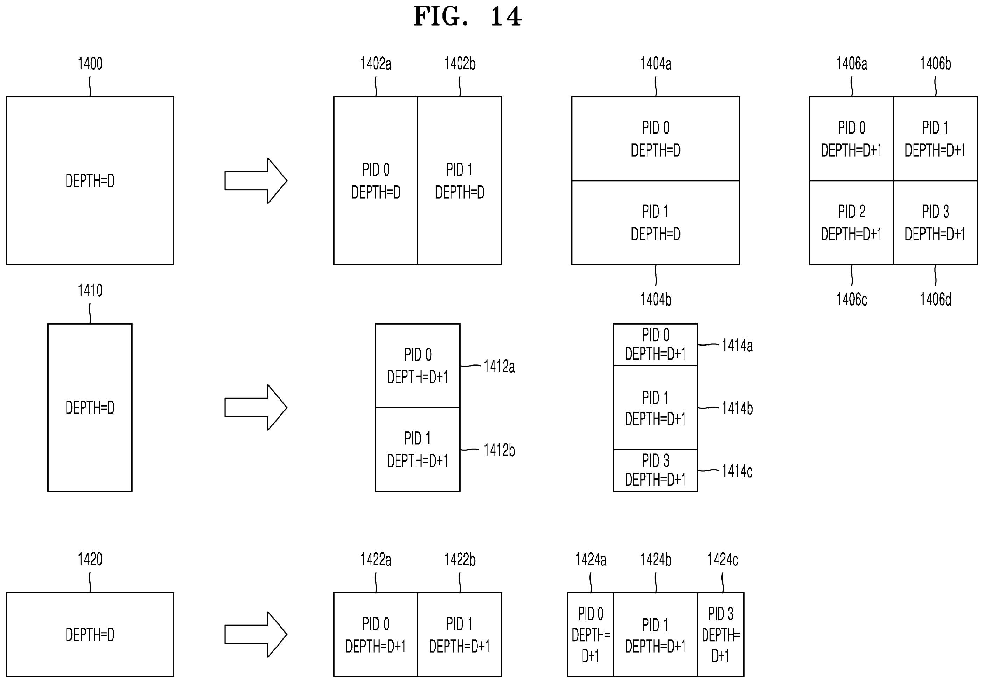

FIG. 14 illustrates depths that may be determined according to the form and size of coding units and indexes (part indexes (PIDs)) for classifying the coding units, according to an embodiment of the present disclosure.

In an embodiment of the present disclosure, the image decoding device 100 may determine various shapes of second coding units by dividing the square shaped first coding unit 1400. Referring to FIG. 14, the image decoding device 100 may determine second coding units 1402a, 1402b, 1404a, 1404b, 1406a, 1406b, 1406c, and 1406d by dividing the first coding unit 1400 in at least one of the vertical direction and the horizontal direction, according to the partition form mode information. In other words, the image decoding device 100 may determine the second coding units 1402a, 1402b, 1404a, 1404b, 1406a, 1406b, 1406c, and 1406d based on the partition form mode information for the first coding unit 1400.

In an embodiment of the present disclosure, the depth of the second coding units 1402a, 1402b, 1404a, 1404b, 1406a, 1406b, 1406c, and 1406d determined based on the partition form mode information for the square shaped first coding unit 1400 may be determined based on the length of the long side of the second coding unit. For example, as the length of a side of the square shaped first coding unit 1400 is equal to the length of the long side of the non-square shaped second coding units 1402a, 1402b, 1404a and 1404b, the depths of the first coding unit 1400 and the non-square shaped second coding units 1402a, 1402b, 1404a and 1404b are considered the same as D. On the other hand, when the image decoding device 100 divides the first coding unit 1400 into the four square shaped second coding units 1406a, 1406b, 1406c and 1406d based on the partition form mode information, the length of a side of the square shaped second coding unit (1406a, 1406b, 1406c or 1406d) is half the length of a side of the first coding unit 1400, so the depth of the second coding unit 1406a, 1406b, 1406c or 1406d may be D+1, which is one level lower than the depth D of the first coding unit 1400.

In an embodiment of the present disclosure, the image decoding device 100 may horizontally divide the first coding unit 1410 of a shape with the height longer than the width into a plurality of second coding units 1412a, 1412b, 1414a, 1414b and 1414c, according to the partition form mode information. In an embodiment of the present disclosure, the image decoding device 100 may vertically divide the first coding unit 1420 of a shape with the width longer than the height into a plurality of second coding units 1422a, 1422b, 1424a, 1424b and 1424c, according to the partition form mode information.

In an embodiment of the present disclosure, the depth of the second coding unit 1412a, 1412b, 1414a, 1414b, 1414c, 1422a, 1422b, 1424a, 1424b or 1424c determined according to the partition form mode information for the non-square shaped first coding unit 1410 or 1420 may be determined based on the length of the long side. For example, as the length of one side of the square shaped second coding unit 1412a or 1412b is half the length of one side of the non-square shaped first coding unit 1410 with the height longer than the width, the depth of the square shaped second coding unit 1412a or 1412b is D+1, which is one level lower than the depth D of the non-square shaped first coding unit 1410.

Furthermore, the image decoding device 100 may divide the non-square shaped first coding unit 1410 into an odd number of second coding units 1414a, 1414b and 1414c, based on the partition form mode information. The odd number of second coding units 1414a, 1414b and 1414c may include the non-square shaped second coding units 1414a and 1414c and the square shaped second coding unit 1414b. In this case, as the length of the long side of the non-square shaped second coding unit 1414a or 1414c and the length of one side of the square shaped second coding unit 1414b are half the length of one side of the first coding unit 1410, the depth of the second coding unit 1414a, 1414b or 1414c may be D+1, which is one level lower than the depth D of the first coding unit 1410. The image decoding device 100 may determine the depth of coding units associated with the non-square shaped first coding unit 1420 with the width longer than the height in a manner corresponding to the aforementioned method of determining the depth of coding units associated with the first coding unit 1410.

In an embodiment of the present disclosure, in determining indexes (PIDs) to distinguish the divided coding units, the image decoding device 100 may determine the indexes based on size ratios between coding units when the odd number of divided coding units are of different sizes. Referring to FIG. 14, the coding unit 1414b located in the middle of the odd number of divided coding units 1414a, 1414b and 1414c may have the same width as the other coding units 1414a and 1414c and twice the height of the other coding units 1414a and 1414c. In this case, the coding unit 1414b located in the middle may contain the other two coding units 1414a and 1414c. Hence, when the index (PID) of the coding unit 1414b located in the middle is '1' in a scanning order, the coding unit 1414c located in the subsequent place may have an index of 3, which is increased by 2. That is, there is a discontinuity in index values. In an embodiment of the present disclosure, based on whether there is a discontinuity in index to distinguish between the divided coding units, the image decoding device 100 may determine whether the odd number of divided coding units have the same size or not.

In an embodiment of the present disclosure, based on the values of the indexes to distinguish the plurality of coding units determined by dividing the current coding unit, the image decoding device 100 may determine whether the current coding unit is divided into a certain partitioning form. Referring to FIG. 14, the image decoding device 100 may determine an even number of coding units 1412a and 1412b or an odd number of coding units 1414a, 1414b and 1414c by dividing the first coding unit 1410 shaped like a rectangle with the height longer than the width. To distinguish the plurality of coding units from one another, the image decoding device 100 may use an index (PID) indicating each coding unit. In an embodiment of the present disclosure, the PID may be obtained from a sample in a certain location (e.g., an upper-left sample) in each coding unit.

In an embodiment of the present disclosure, using the index to distinguish between coding units, the image decoding device 100 may determine a coding unit in a certain location from among the coding units determined by division. In an embodiment of the present disclosure, when the partition form mode information for the first coding unit 1410 of a rectangle shape with the height longer than the width indicates division into three coding units, the image decoding device 100 may divide the first coding unit 1410 into three coding units 1414a, 1414b and 1414c. The image decoding device 100 may allocate an index to each of the three coding units 1414a, 1414b and 1414c. The image decoding device 100 may compare the indexes of the coding units to determine a coding unit in the middle of the odd number of divided coding units. Based on the indexes of the coding units, the image decoding device 100 may determine the coding unit 1414b having an index corresponding to a center value among the indexes as a coding unit located in the middle of the coding units determined by dividing the first coding unit 1410. In an embodiment of the present disclosure, in determining indexes to distinguish between the divided coding units, the image decoding device 100 may determine the indexes based on size ratios between coding units when the coding units are of different sizes. Referring to FIG. 14, the coding unit 1414b produced from division of the first coding unit 1410 may have the same width as the other coding units 1414a and 1414c and twice the height of the other coding units 1414a and 1414c. In this case, when the index (PID) of the coding unit 1414b located in the middle is '1', the coding unit 1414c located in the subsequent place may have an index of 3, which is increased by 2. In such a case that the indexes increase uniformly and then the increment changes, the image decoding device 100 may determine that division is made into a plurality of coding units including a coding unit having a different size from the other coding units is performed. In an embodiment of the present disclosure, when the partition form mode information indicates division into an odd number of coding units, the image decoding device 100 may divide the current coding unit into a form such that a coding unit in a certain location (e.g., a middle coding unit) among an odd number of coding units has a different size from the other coding units. In this case, the image decoding device 100 may use indexes (PIDs) of coding units to determine the central coding unit having the different size. The indexes and the size or location of the coding unit in a certain location to be determined are specified to describe the embodiment, and should not be construed as being limited thereto but the present disclosure should be interpreted as using various indexes and various locations and sizes of coding units.

In an embodiment of the present disclosure, the image decoding device 100 may use a certain data unit from which recursive division of the coding unit begins.

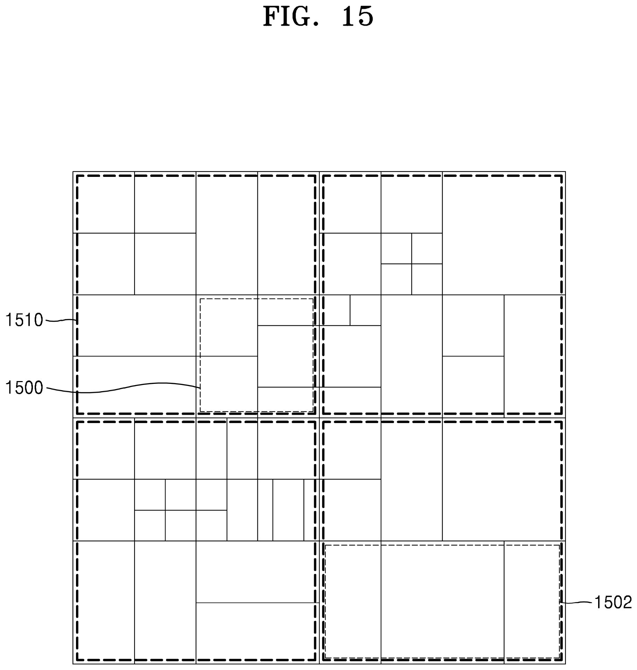

FIG. 15 illustrates that a plurality of coding units are determined according to a plurality of certain data units included in a picture, according to an embodiment of the present disclosure.

In an embodiment of the present disclosure, the certain data unit may be defined as a data unit from which a coding unit starts being recursively divided based on the partition form mode information. That is, it may correspond to a coding unit having the highest depth used in determining a plurality of coding units that divide the current picture. The certain data unit will now be referred to as a reference data unit, for convenience of explanation.

In an embodiment of the present disclosure, the reference data unit may represent a certain size and form. In an embodiment of the present disclosure, the reference data unit may include MxN samples. Herein, M and N may be identical, and may be integers represented by powers of two. Specifically, the reference data unit may represent the form of a square or non-square, and may thereafter be divided into an integer number of coding units.

In an embodiment of the present disclosure, the image decoding device 100 may divide the current picture into a plurality of reference data units. In an embodiment of the present disclosure, the image decoding device 100 may divide the plurality of reference data units that divide the current picture based on the partition form mode information for each reference data unit. A procedure for dividing the reference data unit may correspond to a partitioning procedure that uses a quad-tree structure.

In an embodiment of the present disclosure, the image decoding device 100 may determine a possible minimum size of the reference data unit included in the current picture in advance. Accordingly, the image decoding device 100 may determine the reference data unit of various sizes equal to or larger than the minimum size, and determine at least one coding unit by using the partition form mode information based on the determined reference data unit.

Referring to FIG. 15, the image decoding device 100 may use a square-shaped reference coding unit 1500 or use a non-square-shaped reference coding unit 1502. In an embodiment of the present disclosure, the form and size of the reference coding unit may be determined according to various data units (e.g., a sequence, a picture, a slice, a slice segment, a tile, a tile group, a maximum coding unit, etc.) that may include at least one reference coding unit.

In an embodiment of the present disclosure, the bitstream obtainer 110 of the image decoding device 100 may obtain, from a bitstream for each of the various data units, at least one of information about the form of the reference coding unit and information about the size of the reference coding unit. The procedure for determining at least one coding unit included in the square-shaped reference coding unit 1500 has been described through the procedure in which the current coding unit 300 of FIG. 3 is divided, and the procedure for determining at least one coding unit included in the non-square-shaped reference coding unit 1502 has been described through the procedure in which the current coding unit 400 or 450 of FIG. 4 is divided, so the detailed descriptions thereof will not be repeated.

In an embodiment of the present disclosure, the image decoding device 100 may use an index to identify the size and form of a reference coding unit to determine the size and form of the reference coding unit according to some of predetermined data units based on a certain condition. Specifically, the bitstream obtainer 110 may obtain, from a bitstream, only an index to identify the size and form of the reference coding unit for each slice, slice segment, tile, tile group, maximum coding unit, etc., as a data unit that satisfies the certain condition (e.g., a data unit having a size equal to or smaller than a slice) among the various data units (e.g., a sequence, a picture, a slice, a slice segment, a tile, a tile group, a maximum coding unit, etc.). The image decoding device 100 may determine the size and form of the reference data unit for each data unit that satisfies the certain condition by using the index. In a case of obtaining, from a bitstream for each data unit of a relatively small size, and using the information about the form of the reference coding unit and the information about the size of the reference coding unit, the efficiency of using the bitstream may not be good, so the index may only be obtained and used instead of directly obtaining the information about the form of the reference coding unit and the information about the size of the reference coding unit. In this case, at least one of the size and form of the reference coding unit corresponding to the index that indicates the size and form of the reference coding unit may be determined in advance. The image decoding device 100 may determine at least one of the size and form of the reference coding unit included in a data unit that becomes a basis to obtain the index, by selecting at least one of the size and form of the predetermined reference coding unit according to the index.

In an embodiment of the present disclosure, the image decoding device 100 may use at least one reference coding unit included in a largest coding unit 1510. Specifically, the largest coding unit 1510 that divides an image may include at least one reference coding unit, and coding units may be determined through a recursive dividing procedure for each reference coding unit. In an embodiment of the present disclosure, at least one of the width and height of the largest coding unit 1510 may correspond to an integer multiple of at least one of the width and height of the reference coding unit. In an embodiment of the present disclosure, the size of the reference coding unit may result from dividing the largest coding unit 1510 n times according to a quad-tree structure. Specifically, the image decoding device 100 may determine a reference coding unit by dividing the largest coding unit 1510 n times according to the quad-tree structure, and in an embodiment of the present disclosure, the reference coding unit may be divided based on at least one of the block form information and the partition form mode information.

In an embodiment of the present disclosure, the image decoding device 100 may obtain, from a bitstream, and use the block form information indicating the shape of the current coding unit and the partition form mode information indicating a method of dividing the current coding unit. The partition form mode information may be included in a bitstream related to various data units. For example, the image decoding device 100 may use the partition form mode information included in a sequence parameter set, picture parameter set, video parameter set, slice header, slice segment header, tile header, or tile group header. Furthermore, the image decoding device 100 may obtain and use a syntax element corresponding to the block form information or the partition form mode information from a bitstream for each reference coding unit or the largest coding unit.

A method of determining a partition rule will now be described in detail according to an embodiment of the present disclosure.

The image decoding device 100 may determine a partition rule for an image. The partition rule may be determined in advance between the image decoding device 100 and the image encoding device 200. The image decoding device 100 may determine a partition rule for an image based on information obtained from a bitstream. The image decoding device 100 may determine the partition rule based on information obtained from at least one of a sequence parameter set, picture parameter set, video parameter set, slice header, slice segment header, tile header, or tile group header. The image decoding device 100 may determine a different partition rule depending on the frame, slice, tile, temporal layer, largest coding unit or coding unit.

The image decoding device 100 may determine the partition rule based on the block form of the coding unit. The block form may include the size, shape, width-height ratio, or direction of the coding unit. The image encoding device 200 and the image decoding device 100 may agree in advance to determine a partition rule based on the block form of the coding unit. It is not, however, limited thereto. The image decoding device 100 may determine a partition rule based on information obtained from a bitstream received from the image encoding device 200.

The shape of the coding unit may include squares and non-squares. When the width and height of the coding unit are equal in length, the image decoding device 100 may determine the shape of the coding unit as a square. Furthermore, when the width and height of the coding unit are not equal in length, the image decoding device 100 may determine the shape of the coding unit as a non-square.

The size of the coding unit may include various sizes: 4x4, 8x4, 4x8, 8x8, 16x4, 16x8, ..., 256x256. The size of the coding unit may be classified according to the length of the longer side of the coding unit, the length of the shorter side of the coding unit, or an area of the coding unit. The image decoding device 100 may apply the same partition rule to coding units classified into the same group. For example, the image decoding device 100 may classify coding units having the same length of the longer side into the same size. The image decoding device 100 may also apply the same partition rule to coding units having the same length of the longer side.

The width-height ratio of the coding unit may include 1:2, 2:1, 1:4, 4:1, 1:8, 8:1, 1:16, 16:1, 32:1 or 1:32. The direction of the coding unit may include the horizontal direction and the vertical direction. The horizontal direction may correspond to a case that the width of the coding unit is longer than the height. The vertical direction may correspond to a case that the width of the coding unit is shorter than the height.

The image decoding device 100 may adaptively determine the partition rule based on the size of the coding unit. The image decoding device 100 may determine a different permissible partition form mode based on the size of the coding unit. For example, the image decoding device 100 may determine whether division is allowed, based on the size of the coding unit. The image decoding device 100 may determine a dividing direction based on the size of the coding unit. The image decoding device 100 may determine a permissible partition type based on the size of the coding unit.

The determining of the partition rule based on the size of the coding unit may be performed for a partition rule predetermined between the image coding device 200 and the image decoding device 100. Furthermore, the image decoding device 100 may determine a partition rule based on information obtained from a bitstream.

The image decoding device 100 may adaptively determine the partition rule based on the location of the coding unit. The image decoding device 100 may adaptively determine the partition rule based on the location occupied by the coding unit in the image.

Furthermore, the image decoding device 100 may determine a partition rule that prevents coding units produced from different partition paths from having the same block form. It is not, however, limited thereto, and the coding units produced from different partition paths may have the same block form. The coding units produced from different partition paths may have different decoding process orders. The decoding process order has been described in connection with FIG. 12, so the detailed description thereof will be omitted.

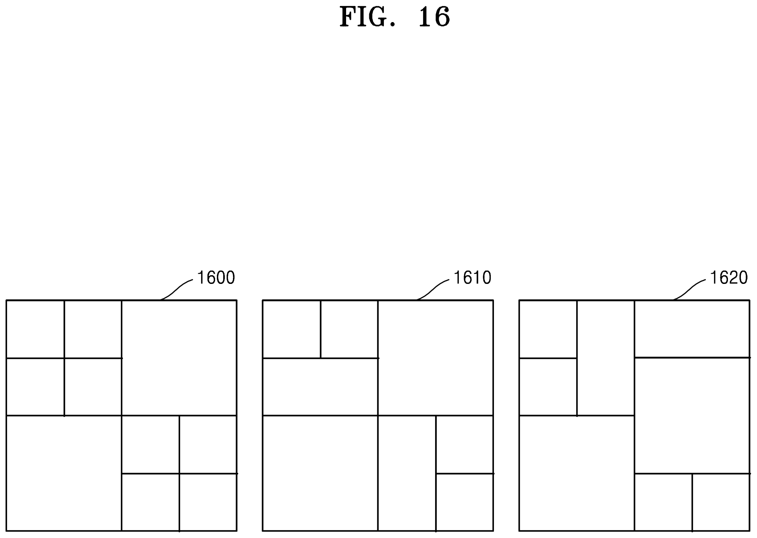

FIG. 16 illustrates coding units that may be determined for respective pictures when a combination of forms into which a coding unit may be divided is different for each picture, according to an embodiment of the present disclosure.

Referring to FIG. 16, the image decoding device 100 may determine a different combination of partition forms into which the coding unit may be divided, for each picture. For example, the image decoding device 100 may decode an image by using a picture 1600 that may be divided into four coding units, a picture 1610 that may be divided into two or four coding units, and a picture 1620 that may be divided into two, three or four coding units among at least one picture included in the image. To divide the picture 1600 into a plurality of coding units, the image decoding device 100 may use only the partition form information indicating division into four square-shaped coding units. To divide the picture 1610, the image decoding device 100 may use only the partition form information indicating division into two or four coding units. To divide the picture 1620, the image decoding device 100 may use only the partition form information indicating division into two, three or four coding units. As the aforementioned combinations of partition forms are merely an example for describing operations of the image decoding device 100, it should not be construed as being limited to the example, and the present disclosure should be interpreted as using various types of combination of partition forms for each data unit.

In an embodiment of the present disclosure, the bitstream obtainer 110 of the image decoding device 100 may obtain a bitstream including an index indicating a combination of partition form information for each data unit (e.g., a sequence, a picture, a lice, a slice segment, a tile or a tile group). For example, the bitstream obtainer 110 may obtain an index indicating a combination of partition form information from a sequence parameter set, a picture parameter set, a slice header, a tile header or a tile group header. The image decoding device 100 may determine a combination of partition forms into which the coding unit may be divided for each given data unit by using the obtained index, and thus, a combination of different partition forms may be used for each data unit.

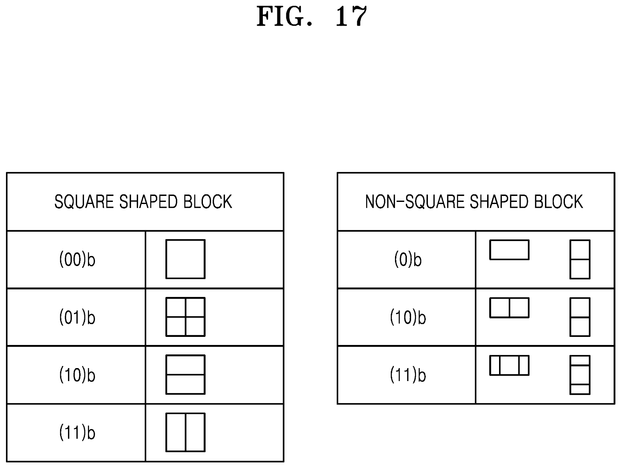

FIG. 17 illustrates various forms of coding units that may be determined based on partition form mode information that may be represented in binary codes, according to an embodiment of the present disclosure.

In an embodiment of the present disclosure, the image decoding device 100 may divide a coding unit into various forms by using the block form information and partition form mode information obtained through the bitstream obtainer 110. There may be various forms, into which a coding unit may be divided, including the forms as described above through the aforementioned embodiments.

Referring to FIG. 17, the image decoding device 100 may divide a square-shaped coding unit in at least one of the horizontal direction and the vertical direction and divide a non-square-shaped coding unit in the horizontal direction or vertical direction, based on the partition form mode information.

In an embodiment of the present disclosure, when the image decoding device 100 is able to divide the square-shaped coding unit horizontally and vertically into four square-shaped coding units, there may be four partition forms that may be indicated by the partition form mode information for the square-shaped coding unit. In an embodiment of the present disclosure, the partition form mode information may be represented in two-bit binary codes, and each partition form may be allocated a binary code. For example, when the coding unit is not divided, the partition form mode information may be represented in (00)b; when the coding unit is horizontally and vertically divided, the partition form mode information may be represented in (01)b; when the coding unit is horizontally divided, the partition form mode information may be represented in (10)b; when the coding unit is vertically divided, the partition form mode information may be represented in (11)b.

In an embodiment of the present disclosure, when the image decoding device 100 horizontally or vertically divide the non-square-shaped coding unit, a type of the partition form that may be indicated by the partition form mode information may be determined according to how many coding units are produced by division. Referring to FIG. 17, the image decoding device 100 may divide the non-square-shaped coding unit into up to three units, in an embodiment of the present disclosure. The image decoding device 100 may divide the coding unit into two coding units, in which case the partition form mode information may be represented in (10)b. The image decoding device 100 may divide the coding unit into three coding units, in which case the partition form mode information may be represented in (11)b. The image decoding device 100 may determine not to divide the coding unit, in which case the partition form mode information may be represented in (0)b. Specifically, the image decoding device 100 may use variable length coding (VLC) instead of fixed length coding (FLC) in order to use binary codes representing the partition form mode information.

In an embodiment of the present disclosure, referring to FIG. 17, the binary code of the partition form mode information indicating that the coding unit is not to be divided may be represented in (0)b. In a case that the binary code of the partition form mode information indicating that the coding unit is not to be divided is set to (00)b, all binary codes of the partition form mode information in two bits need to be used despite the fact that there is no partition form mode information set to (01)b. On the other hand, as shown in FIG. 17, in a case of using three partition forms of non-square-shaped coding unit, the image decoding device 100 may determine that the coding unit is not to be divided only by using 1-bit binary code (0)b as the partition form mode information, thereby efficiently using the bitstream. However, the partition forms of the non-square shaped coding unit indicated by the partition form mode information should not be construed as being limited to the three forms as shown in FIG. 17 but should be interpreted as having other various forms.

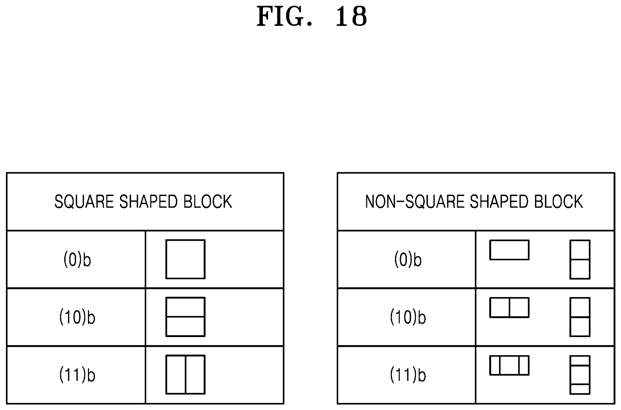

FIG. 18 illustrates other forms of coding units that may be determined based on partition form mode information that may be represented in binary codes, according to an embodiment of the present disclosure.

Referring to FIG. 18, the image decoding device 100 may divide a square-shaped coding unit in the horizontal direction or the vertical direction and divide a non-square shaped coding unit in the horizontal direction or the vertical direction, based on the partition form mode information. In other words, the partition form mode information may indicate that the square-shaped coding unit is to be divided in one direction. In this case, the binary code of the partition form mode information indicating that the square-shaped coding unit is not to be divided may be represented in (0)b. In a case that the binary code of the partition form mode information indicating that the coding unit is not to be divided is set to (00)b, all binary codes of the partition form mode information in two bits need to be used despite the fact that there is no partition form mode information set to (01)b. On the other hand, as shown in FIG. 18, in a case of using three partition forms of square-shaped coding unit, the image decoding device 100 may determine that the coding unit is not to be divided only by using 1-bit binary code (0)b as the partition form mode information, thereby efficiently using the bitstream. However, the partition forms of the square-shaped coding unit indicated by the partition form mode information should not be construed as being limited to the three forms as shown in FIG. 18 but should be interpreted as having other various forms.

In an embodiment of the present disclosure, the block form information or the partition form mode information may be represented by using binary codes, and the information may be generated directly into a bitstream. Furthermore, the block form information or the partition form mode information that may be represented in a binary code may not be generated directly into the bitstream but may be used as the binary code input in context adaptive binary arithmetic coding (CABAC).

In an embodiment of the present disclosure, a procedure in which the image decoding device 100 obtains the syntax of the block form information or the partition form mode information through CABAC will be described. A bitstream including a binary code for the syntax may be obtained through the bitstream obtainer 110. The image decoding device 100 may detect a syntax element that represents the block form information or the partition form mode information through de-binarization of a bin string included in the obtained bitstream. In an embodiment of the present disclosure, the image decoding device 100 may obtain a set of binary bin strings corresponding to a syntax element to be decoded and decode each bin by using probability information, and the image decoding device 100 may repeat the operation until the bin string comprised of the decoded bins becomes identical to one of the previously obtained bin strings. The image decoding device 100 may determine a syntax element by performing de-binarization of the bin string.

In an embodiment of the present disclosure, the image decoding device 100 may determine the syntax of the bin string by performing a decoding process of the adaptive binary arithmetic coding, and the image decoding device 100 may update a probability model for the bins obtained through the bitstream obtainer 110. Referring to FIG. 17, the bitstream obtainer 110 of the image decoding device 100 may obtain a bitstream that represents a binary code representing the partition form mode information, in an embodiment of the present disclosure. Using the obtained binary code having a 1-bit or 2-bit size, the image decoding device 100 may determine the syntax of the partition form mode information. To determine the syntax of the partition form mode information, the image decoding device 100 may update a probability of each bit of the 2-bit binary code. Specifically, depending on which value of '0' or '1' the first bin of a 2-bit binary code has, the image decoding device 100 may update the probability of having a value of '0' or '1' when decoding the next bin.

In an embodiment of the present disclosure, the image decoding device 100 may update the probabilities of the bins used in the process of decoding the bins of the bin string of the syntax in a procedure for determining the syntax, and the image decoding device 100 may determine that a certain bit of the bin string has the same probability without updating the probability.

Referring to FIG. 17, in the procedure for determining syntax by using a bin string that represents the partition form mode information for the non-square shaped coding unit, the image decoding device 100 may determine the syntax of the partition form mode information by using a bin having a value of '0' when the non-square shaped coding unit is not divided. Specifically, when the block form information indicates that the current coding unit has a non-square shape, the first bin of the bin string of the partition form mode information may be '0' when the non-square shaped coding unit is not divided, and '1' when the non-square shaped coding unit is divided into two or three coding units. Hence, the probability of the first bin of the bin string of the partition form mode information for the non-square shaped coding unit being '0' may be 1/3, and the probability of the first bin being '1' may be 2/3. As described above, as the partition form mode information indicating that the non-square shaped coding unit is not divided may be represented only with a 1-bit bin string having a value of '0', the image decoding device 100 may determine the syntax of partition form mode information by determining whether the second bin is '0' or '1' only when the first bin of the partition form mode information is '1'. In an embodiment of the present disclosure, when the first bin regarding the partition form mode information is '1', the image decoding device 100 may regard the probability of the second bin being '0' or '1' as being the same and decode the bin.

In an embodiment of the present disclosure, the image decoding device 100 may use various probabilities for each bin in the procedure for determining the bin of the bin string of the partition form mode information. In an embodiment of the present disclosure, the image decoding device 100 may determine a different probability of the bin regarding the partition form mode information depending on the direction of the non-square shaped block. In an embodiment of the present disclosure, the image decoding device 100 may determine a different probability of the bin regarding the partition form mode information depending on an area or length of the longer side of the current coding unit. In an embodiment of the present disclosure, the image decoding device 100 may determine a different probability of the bin regarding the partition form mode information depending on at least one of the form and length of the longer side of the current coding unit.

In an embodiment of the present disclosure, the image decoding device 100 may determine that the probability of the bin regarding the partition form mode information for coding units of at least a certain size is identical. For example, coding units having a size of at least 64 samples with respect to the length of the longer side of the coding unit may be determined to have the same probability of the bin regarding the partition form mode information.

In an embodiment of the present disclosure, the image decoding device 100 may determine initial probabilities of bins that make up the bin string of the partition form mode information based on the slice type (e.g., I slice, P slice or B slice).

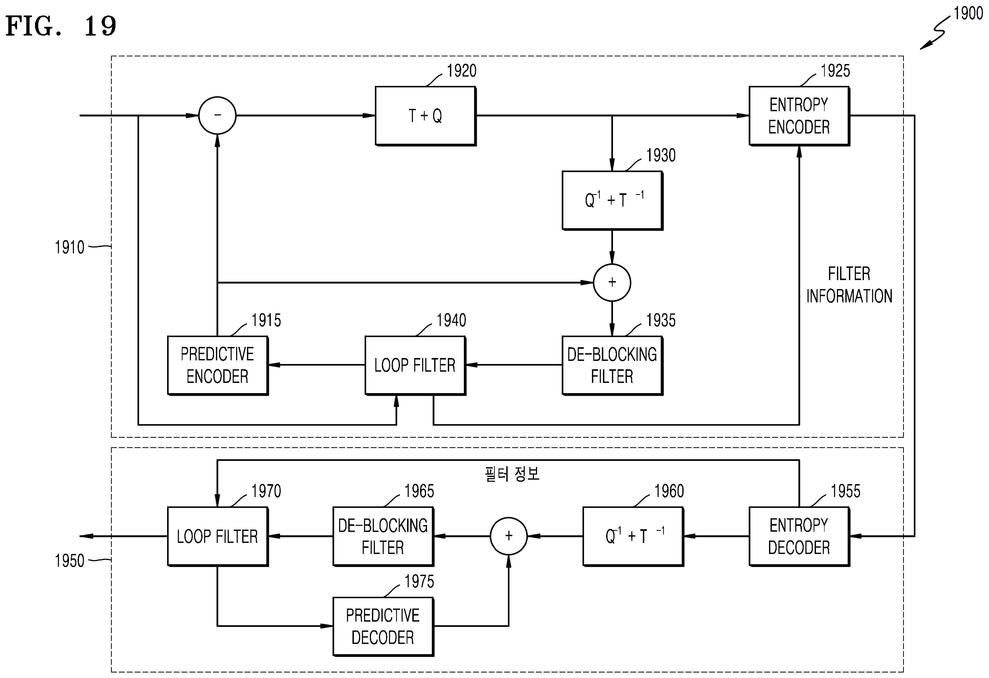

FIG. 19 is a block diagram of an image encoding and decoding system that performs loop filtering.

An encoding stage 1910 of an image encoding and decoding system 1900 transmits an encoded bitstream of an image, and a decoding stage 1950 outputs a reconstructed image by receiving and decoding the bitstream The encoding stage 1910 may have a configuration similar to the image encoding device 200 as will be described later, and the decoding stage 1950 may have a configuration similar to the image decoding device 100.

In the encoding stage 1910, a predictive coder 1915 outputs prediction data through inter prediction and intra prediction, and a transformer and quantizer 1920 outputs quantized transform coefficients of residual data between the prediction data and the current input image. For example, the transform coefficient may be generated by using a transform kernel that includes at least one of a discrete cosine transform (DCT), discrete sine transform (DST) or wavelet transform. The residual data may be transformed to compress information. For example, the residual data may undergo a transform and may thus be represented by using a small number of frequencies. An entropy encoder 1925 encodes and transforms the quantized transform coefficient, and outputs the result in a bitstream. The quantized transform coefficient may go through a de-quantizer and inverse-transformer 1930 to be restored as spatial domain data. The de-quantizer and inverse-transformer 1930 may perform de-quantization on the quantized transform coefficient, and determine residual data by applying the transform kernel. The restored spatial domain data goes through a de-blocking filter 1935 and a loop filter 1940 to be output as a reconstructed image. The reconstructed image may go through the predictive encoder 1915 and may then be used as a reference image for the subsequent image.

The encoded image data in a bitstream received by the decoding stage 1950 goes through an entropy decoder 1955 and a de-quantizer and inverse-transformer 1960 to be reconstructed as spatial domain residual data. The prediction data and residual data output from a predictive decoder 1975 may be combined into spatial image data, and a de-blocking filter 1965 and a loop filter 1970 may perform filtering on the spatial image data and output a reconstructed image of the current original image. The reconstructed image may be used by the predictive decoder 1975 as a reference image for the subsequent original image.

The loop filter 1940 of the encoding stage 1910 performs loop filtering by using input filter information according to a user input or system settings. The filter information used by the loop filter 1940 is output to the entropy encoder 1925 and transmitted to the decoding stage 1950 along with the encoded image data. The loop filter 1970 of the decoding stage 1950 may perform loop filtering based on filter information input from the decoding stage 1950.

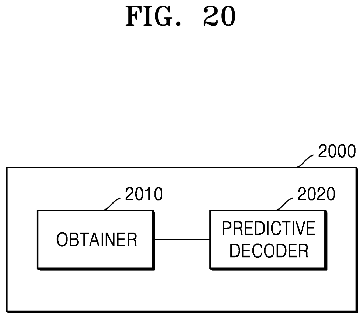

FIG. 20 is a block diagram of a configuration of an image decoding device, according to an embodiment of the present disclosure.

Referring to FIG. 20, an image decoding device 2000 may include an obtainer 2010 and a predictive decoder 2020.

In an embodiment of the present disclosure, the obtainer 2010 and the predictive decoder 2020 may be implemented by at least one processor. In an embodiment of the present disclosure, the image decoding device 2000 may include memory for storing at least one of instructions or input/output data of the obtainer 2010 and the predictive decoder 2020. The obtainer 2010 and the predictive decoder 2020 may operate according to the instruction stored in the memory. In an embodiment of the present disclosure, the image decoding device 2000 may include a memory controller for controlling data input/output to/from the memory.

In an embodiment of the present disclosure, the obtainer 2010 may correspond to the entropy decoder 1955 shown in FIG. 19. In an embodiment of the present disclosure, the predictive decoder 2020 may correspond to the predictive decoder 1975 shown in FIG. 19.

The obtainer 2010 may obtain a bitstream produced as a result of image encoding. The bitstream may include a result of encoding a current block. In an embodiment of the present disclosure, the obtainer 2010 may receive the bitstream from the image encoding device over a network. In an embodiment of the present disclosure, the obtainer 2010 may obtain the bitstream from a data storage medium including at least one of a magnetic medium such as a hard disk, floppy disk and a magnetic tape, an optical recording medium such as a compact disk (CD) read only memory (ROM) (CD-ROM) and a digital versatile disc (DVD), or a magneto-optical medium such as floptical disk, etc.

The obtainer 2010 may obtain syntax elements for image decoding from the bitstream. Values corresponding to the syntax elements may be included in the bitstream according to a hierarchical structure of images. In an embodiment of the present disclosure, the obtainer 2010 may obtain syntax elements by entropy-decoding the bins included in the bitstream.

In an embodiment of the present disclosure, the bitstream may include information about a prediction mode of the current block in the current image. The current block may include at least one of a largest coding unit, a coding unit, a transform unit or a prediction unit divided from the current image. In an embodiment of the present disclosure, the prediction mode of the current block may include at least one of intra mode, inter mode, combined mode, geometric partitioning mode, block copy mode or template matching prediction mode.

In an embodiment of the present disclosure, the intra mode may include a non-directional intra planar mode (intra_planar) 0, a non-directional intra DC mode (intra_DC) 1, intra directional modes (intra_angular) 2 to 66, and intra wide direction modes (intra_wide_angular) -14 to -1 and 67 to 80. In an embodiment of the present disclosure, the intra planar mode may refer to a mode for determining a prediction sample based on a weighted average value according to the distances of a left reference sample, an upper reference sample, lower-left and upper-right samples of the current block. In an embodiment of the present disclosure, the intra DC mode may refer to a mode for determining an average value of the reference samples as a prediction sample. In an embodiment of the present disclosure, in the intra directional modes, locations of the reference samples may be identified to generate prediction samples of the samples in the current block by taking into account a direction indicated by the intra directional modes. For example, in mode 34, reference samples located in an upper-left 45-degree direction based on the samples in the current block may be identified. The intra wide directional modes may be used to identify the reference samples of the samples in the non-square shaped current block. In an embodiment of the present disclosure, the predictive decoder 2020 may determine one of the intra wide directional modes as an intra prediction mode for the non-square shaped current block. In an embodiment of the present disclosure, the predictive decoder 2020 may variously set the number and types of intra prediction modes available in the intra mode.

In an embodiment of the present disclosure, the predictive decoder 2020 may determine an intra prediction mode based on most probable modes (MPMs). The predictive decoder 2020 may determine whether the MPMs are used. The obtainer 2010 may obtain information relating to whether the MPMs are used from a bitstream. The predictive decoder 2020 may determine a candidate mode list. The predictive decoder 2020 may determine the candidate mode list based on the upper block intra mode and left block intra mode of the current block. The predictive decoder 2020 may determine one of the candidate modes in the list as the intra prediction mode of the current block. The predictive decoder 2020 may obtain, from the bitstream, information indicating the intra prediction mode of the current block in the candidate mode list.

In an embodiment of the present disclosure, the predictive decoder 2020 may determine an intra prediction mode based on a template. The predictive decoder 2020 may determine a template of the current block. The template of the current block may include a left sample, an upper-left sample and/or an upper sample of the current block. The predictive decoder 2020 may determine neighboring samples of the template of the current block. The neighboring samples of the template may include left, upper-left and/or upper samples of the template. The predictive decoder 2020 may perform prediction on the template with the neighboring samples of the template as reference samples. The predictive decoder 2020 may determine an intra mode for the reference block by comparing a predicted template with the template of the reconstructed current block. In an embodiment of the present disclosure, the intra mode for the reference block may include an intra mode or virtual intra mode of the reference block. The virtual intra mode of the reference block may be an intra mode determined based on at least one of a sample (internal sample) in the reference block or a neighboring sample of the reference block. The predictive decoder 2020 may determine an intra mode with the least error between the predicted template and the template of the reconstructed current block as an intra mode for the reference block. In an embodiment of the present disclosure, the procedure in which the predictive decoder 2020 determines an intra prediction mode by performing prediction on the template may be referred to as template-based intra mode derivation (TIMD).

In an embodiment of the present disclosure, the predictive decoder 2020 may infer an intra prediction mode of the current block by using the neighboring samples of the current block. The predictive decoder 2020 may determine a gradient by using the neighboring samples of the current block. The predictive decoder 2020 may determine a plurality of 3x3 blocks adjacent to the current block. The predictive decoder 2020 may obtain the horizontal variation and vertical variation of samples included in each determined 3x3 block. The predictive decoder 2020 may determine a gradient based on the horizontal variation and the vertical variation. The predictive decoder 2020 may determine the horizontal variation and the vertical variation by using the Sobel filter. The predictive decoder 2020 may determine an intra prediction mode corresponding to the gradient. The predictive decoder 2020 may determine an intra prediction mode of the current block based on a plurality of intra prediction modes determined for the plurality of 3x3 blocks. In an embodiment of the present disclosure, the predictive decoder 2020 may determine the most frequently determined intra prediction mode as the intra prediction mode for the current block. In an embodiment of the present disclosure, the predictive decoder 2020 may determine the amplitude based on the horizontal variation and the vertical variation. The predictive decoder 2020 may determine an intra prediction mode of the current block based on the amplitude. The predictive decoder 2020 may determine a weight of the intra prediction mode corresponding to the gradient as the amplitude. For example, the predictive decoder 2020 may increase the weight of the intra prediction mode determined based on the gradient as the horizontal variation and the vertical variation increase. The predictive decoder 2020 may determine an intra prediction mode of the current block based on a result of reflecting the weight determined based on the amplitude. In an embodiment of the present disclosure, the procedure in which the predictive decoder 2020 determines an intra prediction mode based on the gradient may be referred to as decoder side intra mode derivation (DIMD).

In an embodiment of the present disclosure, the block copy mode may include an intra block copy mode. In an embodiment, the block copy mode may include an intra block copy mode. In an embodiment, the intra block copy mode may be a sub-mode of the intra mode, but is not limited thereto, and may indicate a mode separate from the intra mode. In an embodiment, the template matching prediction mode may include a template matching intra prediction mode. The combined mode may include a combined inter-intra prediction (CIIP) mode in which prediction from intra mode and prediction from inter mode are combined to perform prediction. The geometric partitioning mode may include a mode for dividing a block to include directionality in the block. The geometric partitioning mode may perform prediction on each partitioned region of the block by using inter-prediction or intra-prediction.

The predictive decoder 2020 may reconstruct the current block by performing prediction on the current block according to the prediction mode for the current block.

In an embodiment of the present disclosure, the obtainer 2010 may obtain, from a bitstream, information regarding the prediction mode of the current block. For example, the obtainer 2010 may obtain, from a bitstream, index information indicating the prediction mode of the current block.

In an embodiment of the present disclosure, when the prediction mode of the current block is the CIIP mode, the predictive decoder 2020 may combine inter prediction and intra prediction to reconstruct the current block. For example, the predictive decoder 2020 may perform intra prediction according to the planar mode. For example, the predictive decoder 2020 may perform inter prediction by using a motion vector (MV). The predictive decoder 2020 may reconstruct the current block by using a weighted sum of a prediction block from inter prediction and a prediction block from intra prediction. The weight may be determined based on whether a neighboring block to the current block has been intra-predicted.

In an embodiment of the present disclosure, when the prediction mode of the current block is the geometric partitioning mode, the predictive decoder 2020 may divide the current block and perform prediction. The predictive decoder 2020 may obtain the partition angle and partition distance with respect to a boundary on which division is performed in the current block. The predictive decoder 2020 may divide the current block based on the partition angle and partition distance. The predictive decoder 2020 may reconstruct the current block by performing inter prediction or intra prediction on each partitioned region in the current block. The predictive decoder 2020 may perform (i) intra prediction on both the partitioned regions, (ii) inter prediction on one region and intra prediction on the other region, or (iii) inter prediction on both the partitioned regions.

In an embodiment of the present disclosure, when the prediction mode of the current block is the block copy mode, the predictive decoder 2020 may reconstruct the current block based on a reference block included in the current image. In an embodiment of the present disclosure, when the prediction mode of the current block is the block copy mode, the predictive decoder 2020 may determine information regarding a block vector (BV) that refers to a reference block. In an embodiment of the present disclosure, the predictive decoder 2020 may determine a prediction block based on the reference block. For example, the predictive decoder 2020 may determine a prediction block to be identical to the reference block or by filtering the reference block.

In an embodiment of the present disclosure, when the prediction mode of the current block is the template matching prediction mode, the predictive decoder 2020 may reconstruct the current block by using the reference block. The obtainer 2010 may obtain information relating to whether to use the template matching prediction mode. The predictive decoder 2020 may determine whether the template matching prediction mode is used, based on the obtained information. The reference block may be determined based on at least one of a region included in the current image or a region included in the previously decoded image. In an embodiment of the present disclosure, the predictive decoder 2020 may determine a reference block based on a cost function. The cost function may include at least one of a sum of absolute difference (SAD), a sum of squared difference (SSD), a sum of absolute transformed difference (SATD), a sum of squared error (SSE) or a mean removed SAD (MR-SAD). For example, the predictive decoder 2020 may determine an error between templates based on at least one cost function among the SAD, SATD, SSE and MR-SAD. When the cost function is the SAD, the predictive decoder 2020 may determine the error based on a total sum of absolute values of differences between the respective samples of the template of the current block and the respective samples of the template of the candidate block. When the cost function is the SSD, the predictive decoder 2020 may determine the error based on a total sum of squares of the differences between the respective samples of the template of the current block and the respective samples of the template of the candidate block. The cost function may include a function that indicates the number of identical samples. The predictive decoder 2020 may determine a block with a small error as a reference block from among the candidate blocks. The predictive decoder 2020 may determine a prediction block by performing the template matching intra prediction on the current image. In the present disclosure, a procedure for determining a reference block for the current block based on the template may be referred to as template matching (TM). In the present disclosure, prediction performed for the current block based on template matching may be referred to as template matching prediction (TMP) or intra template matching prediction.

The predictive decoder 2020 may generate the reconstructed current block based on the prediction block. In an embodiment of the present disclosure, the predictive decoder 2020 may determine the prediction block as the reconstructed current block. In an embodiment, the predictive decoder 2020 may combine the residual data obtained by the obtainer 2010 from the bitstream with the prediction block to generate the reconstructed current block. The constructed current block may be used as a reference block for the subsequent block.

In the prediction mode (e.g., intra mode) that uses a reference sample included in the current image, assuming that there is continuity between the neighboring samples of the current block and the samples in the current block, a prediction block of the current block may be generated based on the neighboring samples of the current block according to the prediction mode. In an embodiment of the present disclosure, the predictive decoder 2020 may use not only the neighboring samples of the current block included in the current image but also a spatial reference sample included in the current image for intra prediction. When samples reconstructed earlier than the current block are used, the size of the residual data may be reduced by predicting samples of the current block based on not only the samples directly adjacent to the current block but also samples distant from the current block. In an embodiment of the present disclosure, the image decoding device 2000 may perform intra prediction based on a reference block including non-reconstructed samples, thereby increasing the range of the region that may be determined as a reference block. In an embodiment of the present disclosure, the image decoding device 2000 may enhance compression efficiency by increasing the efficiency of intra prediction.

In a prediction mode (e.g., inter mode) that uses a reference sample included in a reference image rather than the current image, assuming that there is continuity between the current image and the reference image, a prediction block of the current block may be generated based on the reference block (or reference sample) of the reference image according to the prediction mode. In an embodiment of the present disclosure, the image decoding device 2000 may enhance the compression efficiency by increasing the efficiency of the intra prediction.

The image decoding device 2000 may increase the prediction accuracy by considering both the reference block (or reference sample) included in the current image and the reference block (or reference sample) included in an image other than the current image. In an embodiment of the present disclosure, the image decoding device 2000 may enhance the prediction accuracy by considering all the current image and images other than the current image.

The predictive decoder 2020 may perform deblocking filtering. The deblocking filter may improve image quality by smoothing edges between blocks.

The predictive decoder 2020 may perform filtering on the sample in the current block that has undergone deblocking filtering by using a sample adaptive offset (SAO) filter and/or a bilateral filter (BIF). The SAO filter and BIF may improve image quality by reducing errors between the reconstructed image and the original image. The SAO filter and the BIF may perform filtering on a sample basis.

The predictive decoder 2020 may perform filtering by using an adaptive loop filter (ALF). The ALF may improve image quality by reducing errors between the reconstructed image and the original image. The ALF may perform filtering on a block basis.

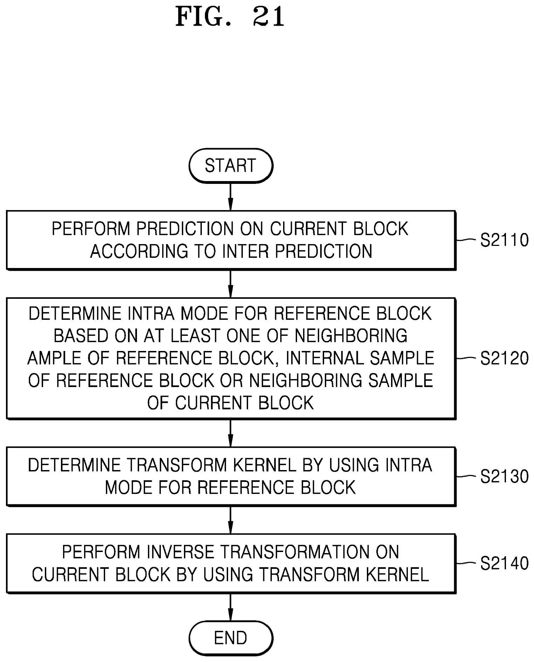

FIG. 21 is a flowchart of an image decoding method, according to an embodiment of the present disclosure.

In an embodiment of the present disclosure, the image decoding method may be performed by the image decoding device 2000. For example, the processor of the image decoding device 2000 may execute at least one instruction included in the memory to cause the image decoding device 2000 to perform each operation of the image decoding method.

In operation S2110, the image decoding device 2000 may perform prediction on the current block according to inter prediction. The image decoding device 2000 may obtain a reference block included in a reference image. The image decoding device 2000 may obtain the reference block based on a motion vector of the current block. The image decoding device 2000 may obtain a prediction sample of the current block by performing inter prediction based on the reference block.

The image decoding device 2000 may obtain one or more reference blocks corresponding to one or more motion vectors of the current block. In an embodiment of the present disclosure, the current block may be a block included in a bi-predictive (B) picture (or B slice). A block included in the B picture (or B slice) may undergo inter prediction according to up to two motion vectors and reference indices. When the current block is included in the B picture or B slice, the image decoding device 2000 may obtain two reference blocks corresponding to the two motion vectors of the current block. In an embodiment of the present disclosure, the current block may be a block included in a predictive (P) picture (or P slice). A block included in the P picture (or P slice) may undergo inter prediction according to up to one motion vector and a reference index. When the current block is included in the P picture or P slice, the image decoding device 2000 may obtain one reference block corresponding to the one motion vector of the current block.

In operation S2120, the image decoding device 2000 may determine an intra mode for the reference block based on at least one of neighboring samples of the reference block, internal samples of the reference block or neighboring samples of the current block. In an embodiment of the present disclosure, the intra mode for the reference block may include an intra mode or virtual intra mode of the reference block. The virtual intra mode of the reference block may be an intra mode determined based on at least one of a sample (or inside sample) in the reference block or a neighboring sample of the reference block. The image decoding device 2000 may determine an intra mode for the reference block based on temporal information or spatial information of the current block. The temporal information may include information regarding an image other than the current image that includes the current block. The spatial information may include information regarding the current image that includes the current block.

In an embodiment of the present disclosure, the reference block may include a block used for inter prediction of the current block. In an embodiment, neighboring samples of the reference block (or the current block) may include adjacent samples and/or non-adjacent samples of the reference block (or the current block). The neighboring samples of the reference block may include a left sample, an upper-left sample and an upper sample of the reference block.

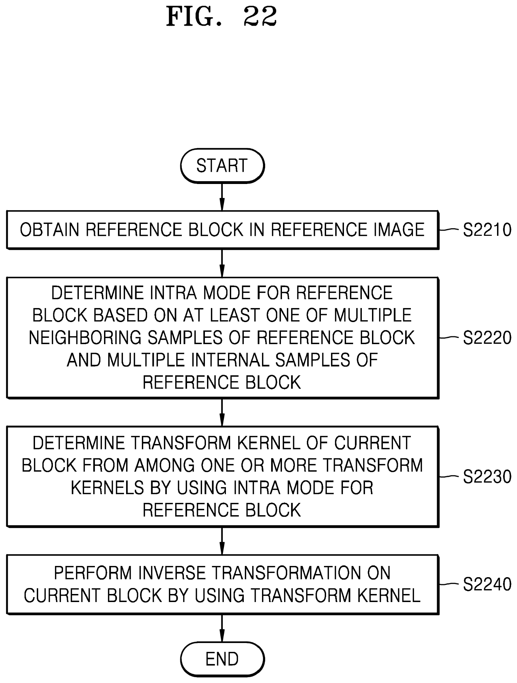

In an embodiment of the present disclosure, the image decoding device 2000 may determine an intra mode for the reference block based on the neighboring samples of the reference block and internal samples of the reference block. The image decoding device 2000 may determine an intra mode for the reference block based on a result of predicting the internal samples of the reference block by using the neighboring samples of the reference block. In an embodiment of the present disclosure, the procedure in which the image decoding device 2000 determines an intra mode for the reference block based on the neighboring samples of the reference block and the internal samples of the reference block will be described in detail with reference to FIGS. 22 to 24 and 29 and 30.

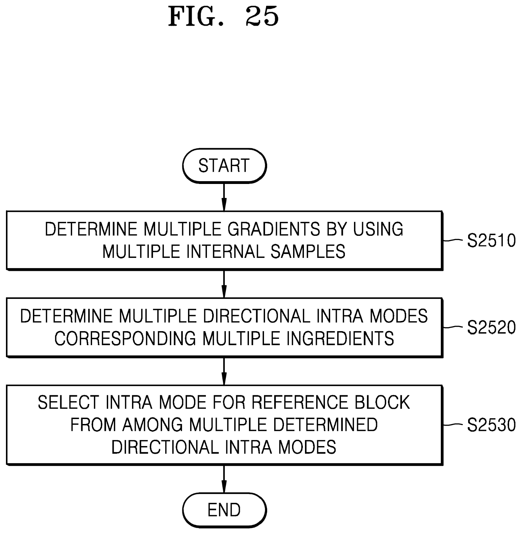

In an embodiment of the present disclosure, the image decoding device 2000 may determine an intra mode for the reference block based on the internal samples of the reference block. The image decoding device 2000 may determine an intra mode for the reference block based on a plurality of gradients determined for the internal samples of the reference block. In an embodiment of the present disclosure, the procedure in which the image decoding device 2000 determines an intra mode for the reference block based on the internal samples of the reference block will be described in detail with reference to FIGS. 25 to 28 and 33 and 34.

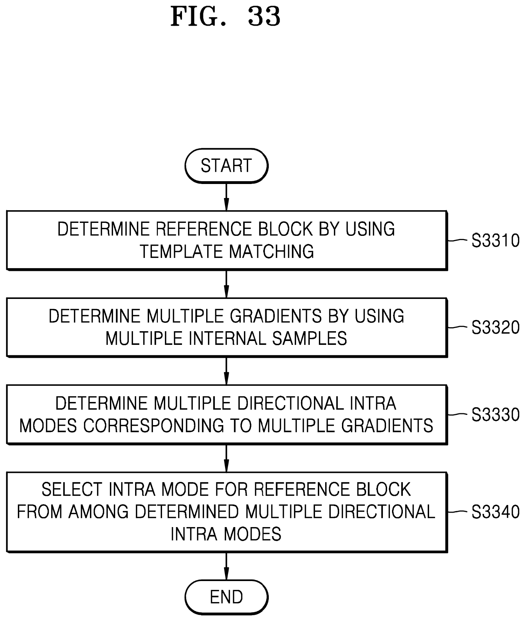

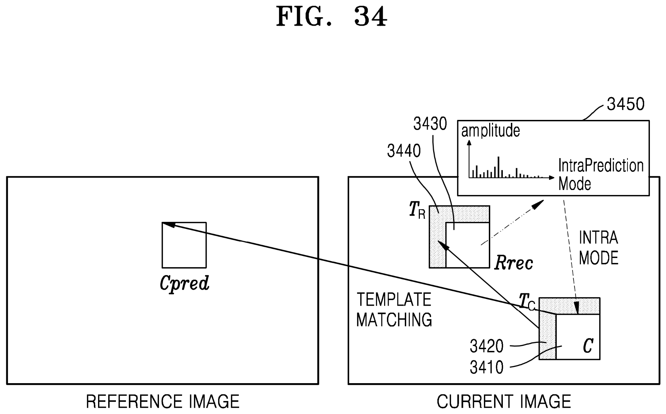

In an embodiment of the present disclosure, the image decoding device 2000 may determine an intra mode for the reference block by using the neighboring samples of the current sample. The neighboring samples of the current block may be samples included in a template region of the current block. In an embodiment of the present disclosure, the procedure in which the image decoding device 2000 determines an intra mode for the reference block based on the neighboring samples of the current block will be described in detail with reference to FIGS. 33 and 34.

In an embodiment of the present disclosure, the image decoding device 2000 may determine one of two intra modes obtained from two reference blocks as an intra mode for the reference block. The image decoding device 2000 may determine two intra modes from the respective two reference blocks, and determine one of the two determined intra modes as an intra mode for the reference block. Alternatively, the image decoding device 2000 may refer to all the two reference blocks to determine a virtual intra mode.

In operation S2130, the image decoding device 2000 may determine a transform kernel by using the intra mode for the reference block. The image decoding device 2000 may determine a transform kernel set including a plurality of transform kernels corresponding to the intra mode for the reference block. The image decoding device 2000 may determine a type of the transform kernel set according to the intra mode for the reference block. For example, a range of directivity indices of the intra mode for the reference block may correspond to one of the plurality of transform kernel sets. A transform kernel set may include a plurality of transform kernels. For example, a first transform kernel set may include a first transform kernel and a second transform kernel, and a second transform kernel set may include a third transform kernel and a fourth transform kernel. In an embodiment, depending on the type of transform, there are one or more (e.g., N, where N is 1 or greater) transform kernel sets, and each transform kernel set may include one or more (e.g., M, where M is 1 or greater) transform kernels.

In an embodiment of the present disclosure, the number of transform kernels included in each transform kernel set may be determined based on the total sum of transform coefficients. For example, when the total sum of transform coefficients is smaller than a predetermined first value, the number of transform kernels may be N1 (e.g., N1=1); when the total sum of transform coefficients is greater than the predetermined first value and smaller than a predetermined second value, the number of transform kernels may be N2 (e.g., N1=4); when the total sum of transform coefficients is greater than the predetermined second value, the number of transform kernels may be N3 (e.g., N1=6).

In an embodiment of the present disclosure, the image decoding device 2000 may determine a transform kernel set based on the size of the current block and the intra mode of the reference block. The transform kernel set may be predetermined according to the size of the current block. For example, M transform kernel sets may be predetermined for each size of the current block.

The image decoding device 2000 may select one of the plurality of transform kernels as a transform kernel of the current block. The image decoding device 2000 may determine one of the plurality of transform kernels included in the transform kernel set. In an embodiment of the present disclosure, the image decoding device 2000 may obtain, from a bitstream, index information indicating a transform kernel of the current block among the plurality of transform kernels.

In an embodiment of the present disclosure, the transform kernel may relate to at least one of a kernel for a first transform, a kernel for a second transform or a non-separable first transform kernel that combines the first transform and the second transform.

In an embodiment of the present disclosure, the image decoding device 2000 may determine the transform kernel for the first transform by using the intra mode for the reference block. The transform kernel for the first transform may include a discrete cosine transform (DCT) kernel and/or a discrete sine transform (DST) kernel. The first transform may be applied in the vertical direction and/or horizontal direction of the block. The image decoding device 2000 may obtain, from a bitstream, information indicating whether it is a vertical transform or a horizontal transform. The first transform may be referred to as multi-transform selection (MTS). The transform kernel for the first transform may be referred to as a core transform kernel.

In an embodiment of the present disclosure, the image decoding device 2000 may determine the transform kernel for the second transform by using the intra mode for the reference block. The second transform may be applied only to a portion of the residual signal. For example, the second transform may be performed only for the left region or the upper-left region of the block. The image decoding device 2000 may determine whether to perform the second transform for each block. The second transform is performed without separating the vertical direction from horizontal direction.. The second transform may be referred to as a low frequency non-separable transform (LFNST).

In an embodiment of the present disclosure, the image decoding device 2000 may determine the transform kernel for the non-separable first transform by using the intra mode for the reference block. The non-separable first transform may have a form that combines the first transform and the second transform. For example, the transform kernel for the non-separable first transform may be a combination of the transform kernel for the first transform and the transform kernel for the second transform. The non-separable first transform is performed without separating the vertical direction from horizontal direction.

In operation S2140, the image decoding device 2000 may perform inverse-transformation on the current block by using the transform kernel. The image decoding device 2000 may perform the inverse-transform by applying the selected transform kernel to the current block. The image decoding device 2000 may obtain the residual signal (or residual data) by perform inverse-transformation based on the transform kernel. The image decoding device 2000 may obtain the residual signal by applying the transform kernel to the transform coefficient.

The image decoding device 2000 may perform inverse transformation by using the first transform on the residual signal (or residual data). The image decoding device 2000 may generate transform coefficients by applying the transform kernel for the second transform to the residual signal.

The image decoding device 2000 may perform inverse transformation by using the second transform on the residual signal. The image decoding device 2000 may generate transform coefficients by applying the transform kernel for the second transform to the residual signal. The image decoding device 2000 may perform inverse transform of the second transform and perform inverse transform of the first transform. The inverse transform of the first transform has been described above, so the description thereof will not be repeated.

The image decoding device 2000 may generate the residual signal by applying the transform kernel for the non-separable first transform to the transform coefficients. The image decoding device 2000 may not perform the extra first transformation and/or the second transformation on the block for which the non-separable first conversion has been performed.

When the prediction mode of the current block is an inter mode, the image decoding device 2000 may determine a transform kernel set for the current block by determining an intra mode for the reference block. The image decoding device 2000 may derive an intra mode for the reference block that represents internal directivity by using an already reconstructed reference block, and enhance coding efficiency (or transform efficiency) by applying the derived intra mode for the reference block to the current block even when the current block is in an inter mode. In other words, by determining an intra mode for the reference block, the image decoding device 2000 may, even in an inter mode, select a transform kernel that is suitable for the current block from among various types of transform kernels as in the intra mode, thereby increasing video compression efficiency. In an embodiment of the present disclosure, even when the prediction mode of the current block is an inter mode, the second transform and the non-separable first transform may be applied, and various transform kernels for the first transform may be applied. The residuals at block boundaries may be efficiently compressed by applying a direction-dependent transform kernel as for the second transform. Such an advantage is merely an example, and advantages and objectives of the present disclosure are not limited to what are described above.

FIG. 22 is a flowchart of an image decoding method, according to an embodiment of the present disclosure.

In an embodiment of the present disclosure, the image decoding method may be performed by the image decoding device 2000. For example, the processor of the image decoding device 2000 may execute at least one instruction included in the memory to cause the image decoding device 2000 to perform each operation of the image decoding method.

In operation S2210, the image decoding device 2000 may obtain a reference block in a reference image. In an embodiment of the present disclosure, the reference block may be determined based on a motion vector of the current block. The reference block may include a block used for inter prediction of the current block.

In operation S2220, the image decoding device 2000 may determine an intra mode for the reference block based on at least one of a plurality of neighboring samples and a plurality of internal samples of the reference block.

In an embodiment of the present disclosure, the neighboring samples of the reference block may include samples located within a certain distance from the reference block The neighboring samples of the reference block may include at least one of adjacent samples and non-adjacent samples of the reference block. The neighboring samples of the reference block may include samples located above the reference block, samples located to the left of the reference block and/or samples located to the upper-left of the reference block.

In an embodiment of the present disclosure, the image decoding device 2000 may predict internal samples of the reference block by using the plurality of neighboring samples. For example, the image decoding device 2000 may determine prediction samples according to a plurality of intra modes (e.g., intra directional prediction modes 2 to 66, or all available intra prediction modes) based on the neighboring samples of the reference block as reference samples. The image decoding device 2000 may determine an error by comparing the prediction sample with the internal sample of the reference block. The image decoding device 2000 may determine an intra mode for the reference block based on the error. For example, the image decoding device 2000 may determine one of the plurality of intra modes, which has the least error, as an intra mode for the reference block.

In operation S2230, the image decoding device 2000 may determine a transform kernel of the current block from among one or more transform kernels based on the intra mode for the reference block. In an embodiment of the present disclosure, operation S2230 may correspond to operation S2130.

In operation S2240, the image decoding device 2000 may perform inverse-transformation on the current block by using the transform kernel. In an embodiment of the present disclosure, operation S2240 may correspond to operation S2140.

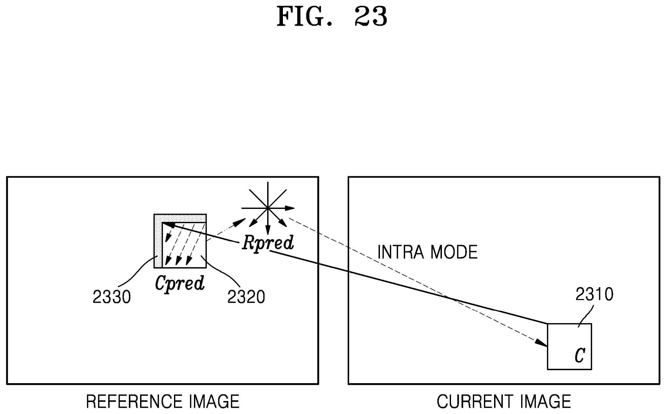

FIG. 23 illustrates a procedure for determining an intra mode for a reference block by using neighboring blocks of the reference block, according to an embodiment of the present disclosure.

In an embodiment of the present disclosure, the image decoding device 2000 may determine an intra mode for the reference block of a current block 2310 based on temporal information. The image decoding device 2000 may determine an intra mode for the reference block by using neighboring samples 2330 of a reference block 2320 and internal samples of the reference block 2320.

The image decoding device 2000 may determine the reference block C_{pred} 2320 for the current block C 2310. In an embodiment of the present disclosure, the current block 2310 may include a block included in a P picture (or P slice). The reference block 2320 may be a block used for inter prediction of the current block 2310 and included in a reference image other than the current image. The image decoding device 2000 may determine the reference block 2320 included in the reference image (or reference slice) by using a motion vector of the current block 2310. In an embodiment of the present disclosure, the neighboring samples 2330 of the reference block 2320 may be referred to as temporal neighboring samples.

The image decoding device 2000 may perform intra prediction according to one or more intra prediction modes by using the plurality of neighboring samples. The image decoding device 2000 may obtain prediction samples R_{pred} by performing prediction on the internal samples of the reference block 2320 by using the neighboring samples 2330 of the reference block 2320. The image decoding device 2000 may obtain prediction samples of the reference block 2320 by using the neighboring samples 2330 of the reference block 2320 as reference samples according to each of the plurality of intra prediction modes. For example, the image decoding device 2000 may perform prediction on all the intra prediction modes, but is not limited thereto and may perform prediction on an intra prediction mode set determined in advance among the intra prediction modes.

The image decoding device 2000 may determine an error by comparing the prediction samples of the reference block 2320 with the neighboring samples 2330. In an embodiment of the present disclosure, the image decoding device 2000 may determine the error by using a cost function. For example, the image decoding device 2000 may determine the error by using at least one cost function among the SAD, SATD, SSE and MR-SAD. When the cost function is the SAD, the image decoding device 2000 may determine the error based on the total sum of absolute values of differences between the prediction samples of the reference block 2320 and the neighboring samples 2330. The error may be substituted by the term 'cost'. For example, the image decoding device 2000 may determine errors between the prediction samples of the reference block 2320 and the neighboring samples 2330 by using a sum of absolute differences (SAD).

The image decoding device 2000 may determine an intra mode for the reference block based on the error. The image decoding device 2000 may determine an intra mode for the reference block based on errors between the intra-predicted samples and the internal samples of the reference block. The image decoding device 2000 may determine an intra prediction mode with the least error as an intra mode for the reference block.

The image decoding device 2000 may determine a transform kernel by using the determined intra mode for the reference block. Herein, the transform kernel may refer to a kernel applied to the residual block to perform inverse transformation with respect to at least one of the first transform, the second transform or the non-separable first transform. The image decoding device 2000 may determine a transform kernel for at least one of the first transform, the second transform or the non-separable first transform by using the determined intra mode for the reference block.

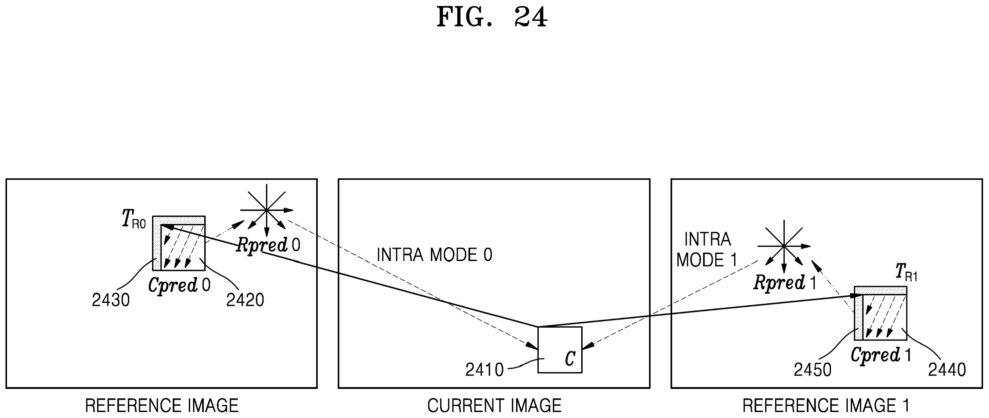

FIG. 24 illustrates a procedure for determining an intra mode for a reference block by using neighboring samples of the reference block, according to an embodiment of the present disclosure.

Referring to FIG. 24, the current block may have a plurality of reference blocks. In an embodiment of the present disclosure, the image decoding device 2000 may determine an intra mode for the reference block of a current block 2410 based on temporal information. The image decoding device 2000 may determine an intra mode for the reference block by using neighboring samples 2430 or 2450 of a reference block 2420 or 2440 and internal samples of the reference block 2420 or 2440.

The image decoding device 2000 may determine the first reference block C_{pred0} 2420 and the second reference block C_{pred1} 2440 for the current block C 2410. In an embodiment of the present disclosure, the current block 2410 may include a block included in a B picture (or B slice). The reference block 2420 or 2440 may be a block used for inter prediction of the current block 2410 and included in each reference image other than the current image. The image decoding device 2000 may determine the reference block 2420 or 2440 included in the reference image (or reference slice) by using a motion vector of the current block 2410. In an embodiment of the present disclosure, the neighboring samples 2430 of the reference block 2420 or 2440 may be referred to as temporal neighboring samples.

The image decoding device 2000 may obtain prediction samples R_{pred0} or R_{pred1} by performing prediction on the internal samples of the reference block 2420 by using the neighboring samples 2430 or 2450 of the reference block 2420 or 2440. The image decoding device 2000 may obtain prediction samples of the reference block 2420 or 2440 by using the neighboring samples 2430 or 2450 of the reference block 2420 or 2440 as reference samples according to each of the plurality of intra prediction modes.

The image decoding device 2000 may determine an error by comparing the prediction samples of the reference block 2420 or 2440 with the neighboring samples 2430 or 2450. The image decoding device 2000 may determine an error by using the cost function. For example, the image decoding device 2000 may determine the error by using at least one cost function among the SAD, SATD, SSE and MR-SAD.

In an embodiment of the present disclosure, the image decoding device 2000 may determine a first candidate intra mode based on at least one of the plurality of neighboring samples 2430 of the first reference block 2420 and the plurality of internal samples included in the reference block 2420. The image decoding device 2000 may determine a second candidate intra mode based on at least one of the plurality of neighboring samples 2450 of the second reference block 2440 of the current block 2410 and the plurality of internal samples of the second reference block 2440. The image decoding device 2000 may determine, from the first reference block 2420 and second reference block 2440, the first candidate intra mode and second candidate intra mode with the least error, respectively. The image decoding device 2000 may select one of the first candidate intra mode and the second candidate intra mode as the intra mode for the reference block. For example, when there is a single reference block as shown in FIG. 23, the image decoding device 2000 may determine an intra mode for the reference block without a process of determining a candidate intra mode.

In an embodiment of the present disclosure, the image decoding device 2000 may determine an intra mode for the reference block based on the error. The image decoding device 2000 may determine a first error by performing prediction on the plurality of internal samples of the first reference block 2420 based on the plurality of neighboring samples 2430 of the first reference block 2420 according to the first candidate intra mode. The image decoding device 2000 may determine a second error by performing prediction on the plurality of internal samples of the second reference block 2440 based on the plurality of neighboring samples 2450 of the second reference block 2440 according to the second candidate intra mode. The image decoding device 2000 may determine an intra mode for the reference block from among the first candidate intra mode and the second candidate intra mode based on the first error and the second error. The image decoding device 2000 may determine one of the first candidate intra mode and the second candidate intra mode, which has a smaller error, as the intra mode for the reference block.

In an embodiment of the present disclosure, the image decoding device 2000 may determine an intra mode for a reference block based on a quantization parameter (QP) of a slice that includes the reference block. In an embodiment, the quantization parameter may refer to a variable used for a process of decoding the transform coefficient. The image decoding device 2000 may perform de-quantization based on the quantization parameter. The image decoding device 2000 may obtain a first quantization parameter of the first reference block 2420 and a second quantization parameter of the second reference block 2440. The image decoding device 2000 may determine a candidate intra mode of a reference block with a smaller quantization parameter as an intra mode for the reference block. When the first quantization parameter is equal to or larger than the second quantization parameter, the image decoding device 2000 may select the second candidate intra mode as the intra mode for the reference block. When the first quantization parameter is smaller than the second quantization parameter, the image decoding device 2000 may select the first candidate intra mode as the intra mode for the reference block.

In an embodiment of the present disclosure, the image decoding device 2000 may determine an intra mode for the reference block based on a picture order count (POC) value of the reference image. In an embodiment, the POC value may refer to a variable related to an image display order. The image decoding device 2000 may obtain a first POC value of the first reference block 2420 and a second POC value of the second reference block 2440. The image decoding device 2000 may determine a candidate intra mode of a reference image with a smaller difference between the current image and the POC value as an intra mode for the reference block. When the difference between the POC value of the current image 2410 and the first POC value is smaller than the difference between the POC value of the current image 2410 and the second POC value, the image decoding device 2000 may select the first candidate intra mode as the intra mode for the reference block. When the difference between the POC value of the current image 2410 and the first POC value is equal to or larger than the difference between the POC value of the current image 2410 and the second POC value, the image decoding device 2000 may select the second candidate intra mode as the intra mode for the reference block.

In an embodiment of the present disclosure, the image decoding device 2000 may determine an intra mode for the reference block based on bi-prediction weights. The image decoding device 2000 may obtain a prediction sample of the current block based on a weighted sum among the plurality of reference blocks. The image decoding device 2000 may obtain bi-prediction weights for the first reference block 2420 and the second reference block 2440. When the weight for the first reference block 2420 is equal to or larger than the weight for the second reference block 2440, the image decoding device 2000 may select the first candidate intra mode as the intra mode for the reference block. When the weight for the first reference block 2420 is less than the weight for the second reference block, the image decoding device 2000 may select the second candidate intra mode as the intra mode for the reference block.

In an embodiment of the present disclosure, the image decoding device 2000 may determine an intra mode for the reference block based on the slice type of the reference block. When the type of the slice that includes the reference block is Intra (I) slice, the image decoding device 2000 may determine the candidate intra mode of the reference block as the intra mode for the reference block. When the type of the slice that includes the first reference block 2420 is the I slice, the image decoding device 2000 may select the first candidate intra mode as the intra mode for the reference block. When the type of the slice that includes the second reference block 2440 is the I slice, the image decoding device 2000 may select the second candidate intra mode as the intra mode for the reference block.

The image decoding device 2000 may determine a transform kernel by using the intra mode for the determined reference block. Herein, the transform kernel may refer to a kernel applied to the residual block to perform inverse transform of at least one of the first transform, the second transform or the non-separable first transform. The image decoding device 2000 may determine a transform kernel for at least one of the first transform, the second transform or the non-separable first transform by using the determined intra mode for the reference block.

FIG. 25 is a flowchart of an image decoding method, according to an embodiment of the present disclosure.

In an embodiment of the present disclosure, the image decoding method may be performed by the image decoding device 2000. For example, the processor of the image decoding device 2000 may execute at least one instruction included in the memory to cause the image decoding device 2000 to perform each operation of the image decoding method.

In operation S2510, the image decoding device 2000 may determine a plurality of gradients by using a plurality of internal samples of the reference block. The image decoding device 2000 may determine the horizontal variation and the vertical variation by using the plurality of internal samples of the reference block. For example, the image decoding device 2000 may determine the horizontal variation and the vertical variation by using the Sobel filter. The image decoding device 2000 may determine an NxN block (or area), e.g., a 3x3 block, included in the reference block. The NxN block (or area) in the reference block may be determined at certain intervals. For example, when the interval is 1, the upper-left coordinates of a first NxN block may be (x1, y1), and the upper-left coordinates of a second NxN block may be (x1+1, y1+1). Depending on the interval, at least some of the NxN blocks in the reference block may have the same samples. The image decoding device 2000 may obtain the horizontal variation and vertical variation of samples included in the determined NxN block. The image decoding device 2000 may determine a gradient based on the horizontal variation and the vertical variation. The gradient may be determined based on a ratio between the horizontal variation and the vertical variation.

In operation S2510, the image decoding device 2000 may determine a plurality of directional intra modes corresponding to the plurality of gradients. The image decoding device 2000 may determine an intra prediction mode corresponding to the gradient. For example, when the gradient is 0 (i.e., horizontal), the image decoding device 2000 may determine a horizontal mode (e.g., intra prediction mode 18) as the directional intra mode corresponding to the gradient.

The image decoding device 2000 may generate a histogram of gradients (HOG) by using the plurality of gradients. The image decoding device 2000 may determine the HOG based on the plurality of intra prediction modes determined for the plurality of NxN blocks. The HOG may be referred to as gradient statistics information or gradient information. In an embodiment of the present disclosure, the HOG may include information indicating the frequency (or amplitude) of the directional intra modes determined based on the gradient. In an embodiment of the present disclosure, a weight may be applied to the frequency of a directional intra mode of the HOG. The image decoding device 2000 may determine the weight of an intra prediction mode corresponding to a gradient. The image decoding device 2000 may increase the weight of the intra prediction mode determined based on the gradient as the horizontal variation and the vertical variation increase. For example, the weight may be determined based on a sum of absolute values of the horizontal variation and vertical variation.

In operation S2530, the image decoding device 2000 may select an intra mode for the reference block from among the plurality of determined directional intra modes. The image decoding device 2000 may determine the most frequently determined intra prediction mode as an intra mode for a reference block of the current block. In an embodiment of the present disclosure, the image decoding device 2000 may determine an intra mode for a reference block based on the HOG. The image decoding device 2000 may determine a directional intra mode with the highest frequency (or amplitude) as the intra mode for the reference block.

In an embodiment of the present disclosure, operation S2120 and/or operation S2220 may determine an intra mode for the reference block according to operations S2510 to S2530.

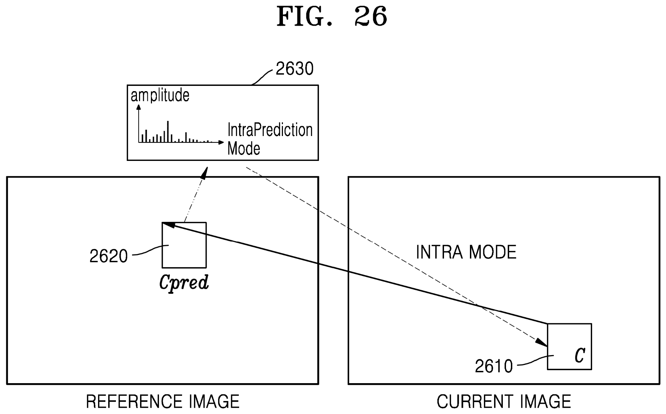

FIG. 26 illustrates a procedure for determining an intra mode for a reference block by using the reference block, according to an embodiment of the present disclosure.

In an embodiment of the present disclosure, the image decoding device 2000 may determine an intra mode for the reference block of a current block 2610 based on temporal information. The image decoding device 2000 may determine an intra mode for the reference block by using internal samples of the reference block 2620.

The image decoding device 2000 may determine the reference block C_{pred} 2620 for the current block C 2610. In an embodiment of the present disclosure, the current block 2610 may include a block included in a P picture (or P slice). The reference block 2620 may be a block used for inter prediction of the current block 2610 and included in a reference image other than the current image. The image decoding device 2000 may determine the reference block 2620 included in the reference image (or reference slice) by using a motion vector of the current block 2610.

The image decoding device 2000 may determine a gradient by using the internal samples of the reference block 2620. The image decoding device 2000 may determine the horizontal variation and/or the vertical variation by using the internal samples of the reference block 2620. For example, the image decoding device 2000 may determine the horizontal variation and vertical variation of the reference block 2620 by using the Sobel filter. The Sobel filter includes filters for obtaining the horizontal or vertical variation within input data. The image decoding device 2000 may determine an NxN block (e.g., 3x3 block) included in the reference block 2620. The image decoding device 2000 may determine the NxN block in the reference block 2620 at certain intervals (e.g., 1) in a direction and/or vertical direction.

The image decoding device 2000 may determine a gradient based on the horizontal variation and the vertical variation. The image decoding device 2000 may determine a ratio between the horizontal variation and the vertical variation as the gradient.

The image decoding device 2000 may determine an intra prediction mode corresponding to the gradient. The image decoding device 2000 may generate an HOG 2630 by using gradients of a plurality of NxN blocks in the reference block 2620. The HOG 2630 may include information indicating the frequency (or amplitude) of an intra prediction mode corresponding to a gradient of each of the plurality of blocks in the reference block 2620. For example, the HOG 2630 may be information including the frequency (or amplitude) corresponding to an intra prediction mode, as shown in FIG. 26.

In an embodiment of the present disclosure, the amplitude (or frequency) of an intra prediction mode of the HOG 2630 may be determined based on the horizontal variation and the vertical variation. For example, as the horizontal variation and the vertical variation increase, the amplitude of the intra prediction mode may be determined to be higher. For example, the amplitude may be determined based on a sum of absolute values of the horizontal variation and vertical variation.

The image decoding device 2000 may select an intra mode for the reference block from among the plurality of determined intra prediction modes. In an embodiment of the present disclosure, the image decoding device 2000 may determine an intra mode for the reference block based on the HOG 2630. The image decoding device 2000 may determine an intra prediction mode with the highest amplitude (or frequency) as the intra mode for the reference block of the current block 2610.

The image decoding device 2000 may determine a transform kernel by using the determined intra mode for the reference block. Herein, the transform kernel may refer to a kernel applied to the residual block to perform inverse transformation with respect to at least one of the first transform, the second transform or the non-separable first transform. The image decoding device 2000 may determine a transform kernel for at least one of the first transform, the second transform or the non-separable first transform by using the determined intra mode for the reference block.

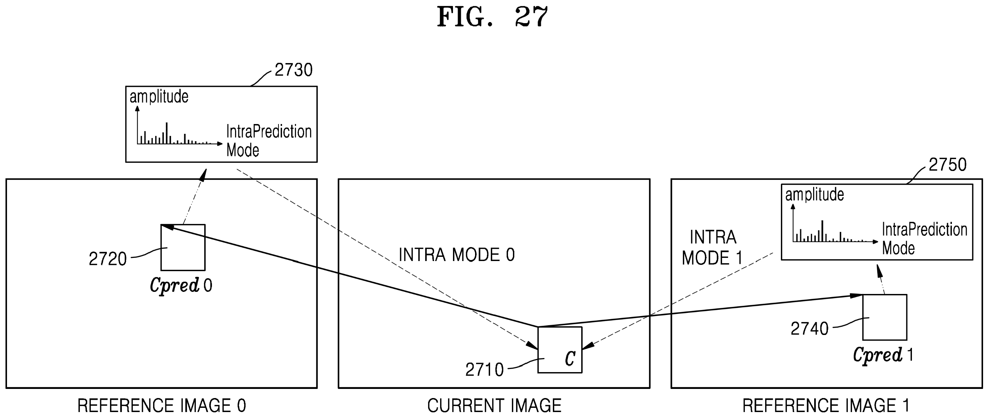

FIG. 27 illustrates a procedure for determining an intra mode for a reference block by using reference blocks, according to an embodiment of the present disclosure.

In an embodiment of the present disclosure, the image decoding device 2000 may determine an intra mode for a reference block of a current block 2710 based on temporal information. The image decoding device 2000 may determine the intra mode for the reference block by using internal samples of reference blocks 2720 and 2740.

The image decoding device 2000 may determine the first reference block C_{pred0} 2720 and the second reference block C_{pred1} 2740 for the current block C 2710. In an embodiment of the present disclosure, the current block 2710 may include a block included in a B picture (or B slice). The first reference block 2720 and the second reference block 2740 may be blocks used for inter prediction of the current block 2710 and included in the respective reference images other than the current image. The image decoding device 2000 may determine the reference block 2720 or 2740 included in the reference image (or reference slice) by using a motion vector of the current block 2710.

The image decoding device 2000 may determine a gradient by using the internal samples of the reference block 2720 or 2740. The image decoding device 2000 may determine the horizontal variation and/or the vertical variation by using the internal samples of the reference block 2720 or 2740. For example, the image decoding device 2000 may determine the horizontal variation and vertical variation of the reference block 2720 or 2740 by using the Sobel filter. The Sobel filter includes filters for obtaining the horizontal or vertical variation within input data. The image decoding device 2000 may determine an NxN block (e.g., 3x3 block) included in the reference block 2720 or 2740. The image decoding device 2000 may determine the NxN block in the reference block 2720 or 2740 at certain intervals (e.g., 1) in a direction and/or vertical direction.

The image decoding device 2000 may determine a gradient based on the horizontal variation and the vertical variation. The image decoding device 2000 may determine a ratio between the horizontal variation and the vertical variation as the gradient.

The image decoding device 2000 may determine an intra prediction mode corresponding to the gradient. The image decoding device 2000 may generate an HOG 2730 or 2750 by using gradients of a plurality of NxN blocks in the reference block 2720 or 2740. The size of the block in the first reference block 2720 may differ from the size of the block in the second reference block 2740. The HOG 2730 or 2750 may include information indicating the frequency (or amplitude) of an intra prediction mode corresponding to a gradient of each of the plurality of blocks in the reference block 2720 or 2740. For example, the HOG 2730 or 2750 may be information including the frequency (or amplitude) corresponding to an intra prediction mode, as shown in FIG. 27.

In an embodiment of the present disclosure, the amplitude (or frequency) of an intra prediction mode of the HOG 2730 or 2750 may be determined based on the horizontal variation and the vertical variation. For example, as the horizontal variation and the vertical variation increase, the amplitude of the intra prediction mode may be determined to be higher. For example, the amplitude may be determined based on a sum of absolute values of the horizontal variation and vertical variation.

The image decoding device 2000 may select an intra mode for the reference block from among the plurality of determined intra prediction modes. In an embodiment of the present disclosure, the image decoding device 2000 may determine an intra mode for the reference block based on the HOG 2730 or 2750.

In an embodiment of the present disclosure, the image decoding device 2000 may determine a first candidate intra mode based on a plurality of gradients of the first reference block 2720. The image decoding device 2000 may determine the first candidate intra mode based on the first HOG 2730.

The image decoding device 2000 may determine a second candidate intra mode based on a plurality of gradients of the second reference block 2740. The image decoding device 2000 may determine the first candidate intra mode based on the second HOG 2750.

The image decoding device 2000 may determine, from the first reference block 2720 and second reference block 2740, the first candidate intra mode and second candidate intra mode with the highest amplitude (or frequency), respectively. The image decoding device 2000 may select one of the first candidate intra mode and the second candidate intra mode as the intra mode for the reference block. For example, when there is a single reference block as shown in FIG. 26, the image decoding device 2000 may determine an intra mode for the reference block without a process of determining a candidate intra mode.

In an embodiment of the present disclosure, the image decoding device 2000 may determine an intra mode for the reference block based on the error. The image decoding device 2000 may determine a first error by performing prediction on the plurality of internal samples of the first reference block 2720 based on the plurality of neighboring samples 2730 of the first reference block 2720 according to the first candidate intra mode. The image decoding device 2000 may determine a second error by performing prediction on the plurality of internal samples of the second reference block 2740 based on the plurality of neighboring samples 2750 of the second reference block 2740 according to the second candidate intra mode. The image decoding device 2000 may determine an intra mode for the reference block from among the first candidate intra mode and the second candidate intra mode based on the first error and the second error. The image decoding device 2000 may determine one of the first candidate intra mode and the second candidate intra mode, which has a smaller error, as the intra mode for the reference block.

In an embodiment of the present disclosure, the image decoding device 2000 may determine an intra mode for a reference block based on a quantization parameter (QP) of a slice that includes the reference block. In an embodiment, the quantization parameter may refer to a variable used for a process of decoding the transform coefficient. The image decoding device 2000 may perform de-quantization based on the quantization parameter. The image decoding device 2000 may obtain a first quantization parameter of the first reference block 2720 and a second quantization parameter of the second reference block 2740. The image decoding device 2000 may determine a candidate intra mode of a reference block with a smaller quantization parameter as an intra mode for the reference block. When the first quantization parameter is equal to or larger than the second quantization parameter, the image decoding device 2000 may select the second candidate intra mode as the intra mode for the reference block. When the first quantization parameter is smaller than the second quantization parameter, the image decoding device 2000 may select the first candidate intra mode as the intra mode for the reference block.

In an embodiment of the present disclosure, the image decoding device 2000 may determine an intra mode for the reference block based on a picture order count (POC) value of the reference block. In an embodiment, the POC value may refer to a variable related to an image display order. The image decoding device 2000 may obtain a first POC value of the first reference block 2720 and a second POC value of the second reference block 2740. The image decoding device 2000 may determine a candidate intra mode of a reference image with a smaller difference between the current image and the POC value as an intra mode for the reference block. When the difference between the POC value of the current image 2710 and the first POC value is smaller than the difference between the POC value of the current image 2710 and the second POC value, the image decoding device 2000 may select the first candidate intra mode as the intra mode for the reference block. When the difference between the POC value of the current image 2710 and the first POC value is equal to or larger than the difference between the POC value of the current image 2710 and the second POC value, the image decoding device 2000 may select the second candidate intra mode as the intra mode for the reference block.

In an embodiment of the present disclosure, the image decoding device 2000 may determine an intra mode for the reference block based on bi-prediction weights. The image decoding device 2000 may obtain a prediction sample of the current block based on a weighted sum among the plurality of reference blocks. The image decoding device 2000 may obtain bi-prediction weights for the first reference block 2720 and the second reference block 2740. When the weight for the first reference block 2720 is equal to or larger than the weight for the second reference block 2740, the image decoding device 2000 may select the first candidate intra mode as the intra mode for the reference block. When the weight for the first reference block 2720 is less than the weight for the second reference block, the image decoding device 2000 may select the second candidate intra mode as the intra mode for the reference block.

In an embodiment of the present disclosure, the image decoding device 2000 may determine an intra mode for the reference block based on the slice type of the reference block. When the type of the slice that includes the reference block is Intra (I) slice, the image decoding device 2000 may determine the candidate intra mode of the reference block as the intra mode for the reference block. When the type of the slice that includes the first reference block 2720 is the I slice, the image decoding device 2000 may select the first candidate intra mode as the intra mode for the reference block. When the type of the slice that includes the second reference block 2740 is the I slice, the image decoding device 2000 may select the second candidate intra mode as the intra mode for the reference block.

The image decoding device 2000 may determine a transform kernel by using the determined intra mode for the reference block. Herein, the transform kernel may refer to a kernel applied to the residual block to perform inverse transformation with respect to at least one of the first transform, the second transform or the non-separable first transform. The image decoding device 2000 may determine a transform kernel for at least one of the first transform, the second transform or the non-separable first transform by using the determined intra mode for the reference block.

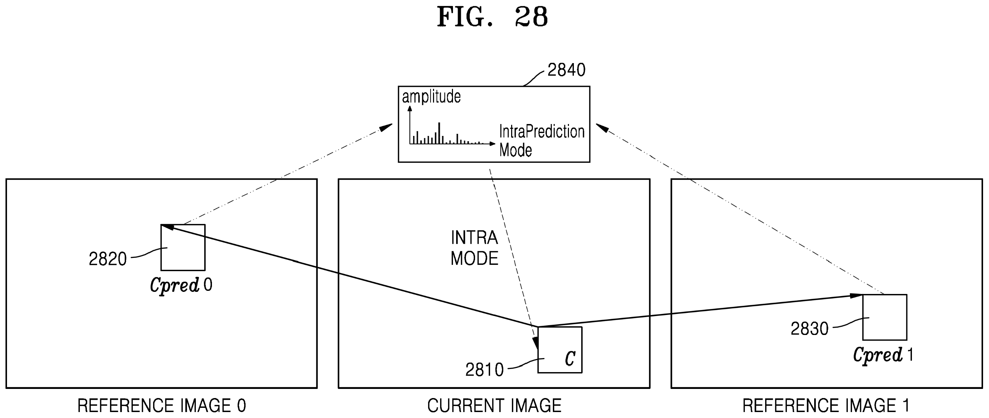

FIG. 28 illustrates a procedure for determining an intra mode for a reference block by using reference blocks, according to an embodiment of the present disclosure.

In an embodiment of the present disclosure, the image decoding device 2000 may determine an intra mode for a reference block of a current block 2810 based on temporal information. The image decoding device 2000 may determine the intra mode for the reference block by using internal samples of reference blocks 2820 and 2830.

The image decoding device 2000 may determine the first reference block C_{pred0} 2820 and the second reference block C_{pred1} 2830 for the current block C 2810. In an embodiment of the present disclosure, the current block 2810 may include a block included in a B picture (or B slice). The first reference block 2820 and the second reference block 2830 may be blocks used for inter prediction of the current block 2810 and included in the respective reference images other than the current image. The image decoding device 2000 may determine the reference block 2820 or 2830 included in the reference image (or reference slice) by using a motion vector of the current block 2810.

The image decoding device 2000 may determine a gradient by using the internal samples of the reference block 2820 or 2830. The image decoding device 2000 may determine the horizontal variation and/or the vertical variation by using the internal samples of the reference block 2820 or 2830. For example, the image decoding device 2000 may determine the horizontal variation and vertical variation of the reference block 2820 or 2830 by using the Sobel filter. The Sobel filter includes filters for obtaining the horizontal or vertical variation within input data. The image decoding device 2000 may determine an NxN block (e.g., 3x3 block) included in the reference block 2820 or 2830. The image decoding device 2000 may determine the NxN block in the reference block 2820 or 2830 at certain intervals (e.g., 1) in a direction and/or vertical direction.

The image decoding device 2000 may determine a gradient based on the horizontal variation and the vertical variation. The image decoding device 2000 may determine a ratio between the horizontal variation and the vertical variation as the gradient.

The image decoding device 2000 may determine an intra prediction mode corresponding to the gradient. The image decoding device 2000 may generate an HOG 2840 by using gradients of a plurality of NxN blocks in the reference block 2820 or 2830. The size of the block in the first reference block 2820 may differ from the size of the block in the second reference block 2830. The size of the block in the reference block 2820 or 2830 may be determined based on the size of the reference image. For example, when the size of reference 0 is twice the size of reference image 1, the gradient of the first reference block may be determined based on a 2Nx2N block, and the gradient of the second reference block may be determined based on the NxN block. The HOG 2840 may include information indicating the frequency (or amplitude) of an intra prediction mode corresponding to a gradient of each of the plurality of blocks in the reference block 2820 or 2830. For example, the HOG 2840 may be information including the frequency (or amplitude) corresponding to an intra prediction mode, as shown in FIG. 28. The HOG 2840 may include amplitudes (or frequencies) of the intra prediction modes of both the first reference block 2820 and the second reference block 2830. In an embodiment, the HOG 2840 may have the form of a combination of the HOG 2730 and the HOG 2750.

In an embodiment of the present disclosure, the amplitude (or frequency) of an intra prediction mode of the HOG 2840 may be determined based on the horizontal variation and the vertical variation. For example, as the horizontal variation and the vertical variation increase, the amplitude of the intra prediction mode may be determined to be higher. For example, the amplitude may be determined based on a sum of absolute values of the horizontal variation and vertical variation.

The image decoding device 2000 may select an intra mode for the reference block from among the plurality of determined intra prediction modes. In an embodiment of the present disclosure, the image decoding device 2000 may determine an intra mode for the reference block based on the HOG 2840. The image decoding device 2000 may determine an intra prediction mode with the highest amplitude (or frequency) as the intra mode for the reference block of the current block 2810.

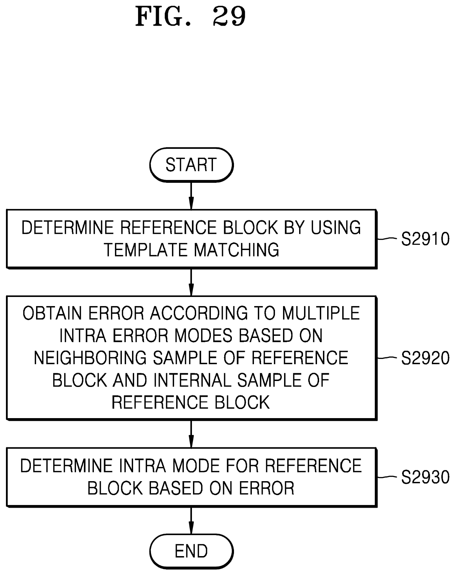

FIG. 29 is a flowchart of an image decoding method, according to an embodiment of the present disclosure.

In an embodiment of the present disclosure, the image decoding method may be performed by the image decoding device 2000. For example, the processor of the image decoding device 2000 may execute at least one instruction included in the memory to cause the image decoding device 2000 to perform each operation of the image decoding method.

In operation S2910, the image decoding device 2000 may determine a reference block through template matching. In an embodiment of the present disclosure, the reference block may be included in the same image with the current block.

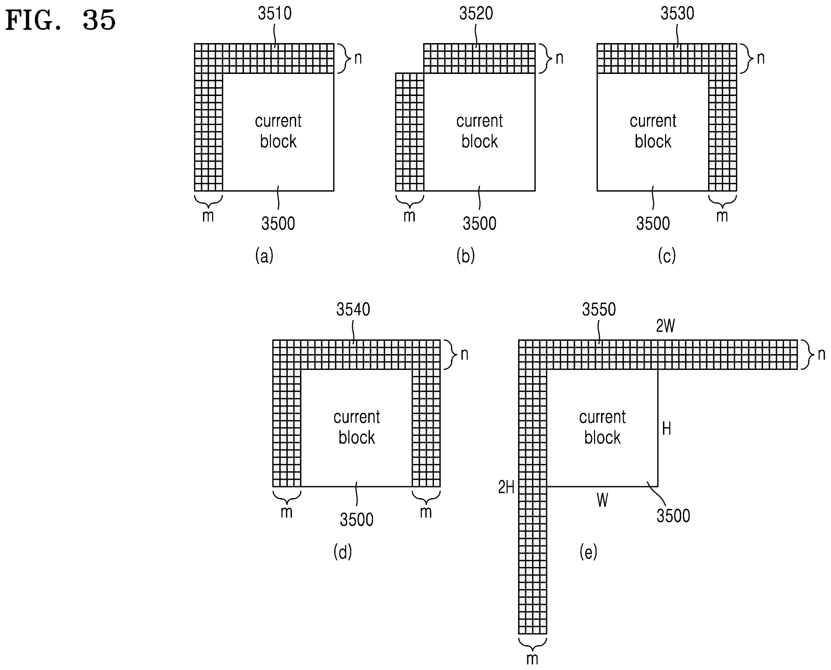

The image decoding device 2000 may identify a template of the current block. The template of the current block may include neighboring samples of the current block. The neighboring samples of the current block may include adjacent samples and/or non-adjacent samples of the current block. The form of the template according to an embodiment of the present disclosure will be described in detail with reference to FIG. 35.

The image decoding device 2000 may determine, in the current image, a template similar to the template of the current block. The image decoding device 2000 may determine a block having the template similar to the current template as the reference block of the current block. The image decoding device 2000 may determine the reference block from among the blocks included in a searching area.

In an embodiment of the present disclosure, the image decoding device 2000 may determine the reference block by using a cost function. The image decoding device 2000 may determine a template error between the template of the current block and a candidate template based on at least one cost function among the SAD, SATD, SSE and MR-SAD. The image decoding device 2000 may determine the template error based on each sample in the template of the current block and each sample in the candidate template. The image decoding device 2000 may determine a block having a candidate template with a smaller template error as the reference block.

In operation S2920, the image decoding device 2000 may obtain errors according to a plurality of intra prediction modes based on the neighboring samples of the reference block and the internal samples of the reference block.

In an embodiment of the present disclosure, the image decoding device 2000 may predict internal samples of the reference block by using the neighboring samples of the reference block. For example, the image decoding device 2000 may determine prediction samples according to a plurality of intra prediction modes (e.g., intra directional prediction modes 2 to 66, or all available intra prediction modes) based on the neighboring samples of the reference block as reference samples. The image decoding device 2000 may determine an error by comparing the prediction sample with the internal sample of the decoded reference block.

In an embodiment of the present disclosure, the image decoding device 2000 may determine the reference sample for determining the error according to the intra prediction mode separately from the template. For example, when the width and height of the template are identical to the current block, the width and height of the reference sample for determining an error according to an intra prediction mode may be twice the current block. Furthermore, the reference sample may include multiple reference lines. For example, similar to the multiple line reference intra prediction, the image decoding device 2000 may perform prediction based on multiple lines of reference pixels.

In operation S2930, the image decoding device 2000 may determine an intra mode for the reference block based on the error. The image decoding device 2000 may determine one of the plurality of intra modes, which has the least error, as an intra mode for the reference block.

In an embodiment of the present disclosure, operation S2120 and/or operation S2220 may determine an intra mode for the reference block according to operations S2910 to S2930.

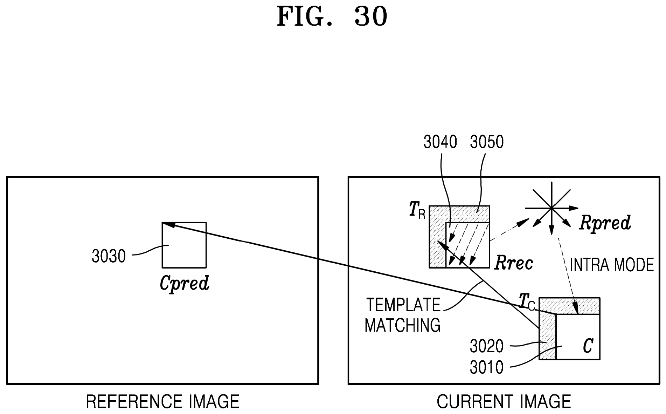

FIG. 30 illustrates a procedure for determining an intra mode for a reference block by using neighboring samples of the reference block, according to an embodiment of the present disclosure.

In an embodiment of the present disclosure, the image decoding device 2000 may determine an intra mode for a reference block of a current block 3010 based on spatial information. The image decoding device 2000 may determine an intra mode for the reference block by using neighboring samples (or template T_{R} 3050) of a reference block 3040 and internal samples of the reference block 3040. In an embodiment of the present disclosure, the neighboring samples (or template T_{R} 3050) of the reference block 3040 may be referred to as spatial neighboring samples.

The image decoding device 2000 may determine a template T_{C} 3020 for the current block C 3010. In an embodiment of the present disclosure, the reference block 3040 is determined by using template matching and differs from a reference block 3030 used for inter prediction of the current block 3010. The image decoding device 2000 may determine the reference block 3040 through template matching based on the template 3020 of the current block 3010. The image decoding device 2000 may determine template errors between the template 3020 of the current block 3010 and templates included in the current image. The image decoding device 2000 may determine a block having the template 3050 with the least template error as the reference block 3040.

The image decoding device 2000 may perform intra prediction according to one or more intra prediction modes by using the neighboring samples of the reference block 3040. In an embodiment, the neighboring samples of the reference block 3040 used for intra prediction may be identical to the template 3050 of the reference block 3040. The image decoding device 2000 may obtain prediction samples R_{pred} by performing prediction on the internal samples of the reference block 3040 by using the neighboring samples 3050 of the reference block 3040. The image decoding device 2000 may obtain prediction samples of the reference block 3040 by using the neighboring samples 3050 of the reference block 3040 as reference samples according to each of the plurality of intra prediction modes. For example, the image decoding device 2000 may perform prediction on all the intra prediction modes, but is not limited thereto and may perform prediction on an intra prediction mode set determined in advance among the intra prediction modes.

The image decoding device 2000 may determine an error by comparing the prediction samples of the reference block 3040 with the neighboring samples 3050. When the cost function is the SAD, the image decoding device 2000 may determine the error based on the total sum of absolute values of differences between the prediction samples of the reference block 3040 and the neighboring samples 3050.

The image decoding device 2000 may determine an intra mode for the reference block based on the error. The image decoding device 2000 may determine an intra mode for the reference block based on errors between the intra-predicted samples and the internal samples of the reference block. The image decoding device 2000 may determine an intra prediction mode with the least error as an intra mode for the reference block. The image decoding device 2000 may determine an intra mode for the reference block through the reference block of the current image even when the prediction mode of the current image 3010 is an inter mode.

The image decoding device 2000 may determine a transform kernel by using the determined intra mode for the reference block. Herein, the transform kernel may refer to a kernel applied to the residual block to perform inverse transformation with respect to at least one of the first transform, the second transform or the non-separable first transform. The image decoding device 2000 may determine a transform kernel for at least one of the first transform, the second transform or the non-separable first transform by using the determined intra mode for the reference block.

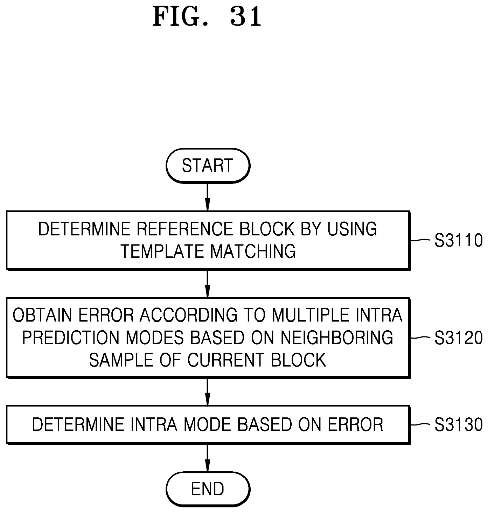

FIG. 31 is a flowchart of an image decoding method, according to an embodiment of the present disclosure.

In an embodiment of the present disclosure, the image decoding method may be performed by the image decoding device 2000. For example, the processor of the image decoding device 2000 may execute at least one instruction included in the memory to cause the image decoding device 2000 to perform each operation of the image decoding method.

In operation S3110, the image decoding device 2000 may obtain neighboring samples of the current block. In an embodiment of the present disclosure, the neighboring samples of the current block may include adjacent samples and non-adjacent samples of the current block. The neighboring samples of the current block may include a left sample, an upper-left sample and/or an upper sample of the current block. In an embodiment of the present disclosure, the neighboring samples of the current block may be identical to a template of the current block. The form of the template according to an embodiment of the present disclosure will be described in detail with reference to FIG. 35.

In operation S3120, the image decoding device 2000 may obtain errors according to a plurality of intra prediction modes based on the neighboring samples of the current block. The image decoding device 2000 may determine at least some of the neighboring samples of the current block as reference samples, and determine the other samples as reconstruction samples.

In an embodiment of the present disclosure, the image decoding device 2000 may predict the other samples of the neighboring samples based on the reference samples of the neighboring samples of the current block. For example, the image decoding device 2000 may determine prediction samples according to a plurality of intra modes (e.g., intra directional prediction modes 2 to 66, or all available intra prediction modes) based on the reference samples of the neighboring samples of the current block. The image decoding device 2000 may determine an error by comparing the prediction sample with the reconstruction sample.

In an embodiment of the present disclosure, the image decoding device 2000 may determine the reference samples for determining the errors according to the intra prediction modes separately from the template. For example, when the width and height of the template are identical to the current block, the width and height of the reference sample for determining an error according to an intra prediction mode may be twice the width and height of the current block. Furthermore, the reference sample may include multiple reference lines. For example, similar to the multiple line reference intra prediction, the image decoding device 2000 may perform prediction based on multiple lines of reference pixels.

In operation S3130, the image decoding device 2000 may determine an intra mode for the reference block based on the error. The image decoding device 2000 may determine one of the plurality of intra modes, which has the least error, as an intra mode for the reference block.

In an embodiment of the present disclosure, operation S2120 and/or operation S2220 may determine an intra mode for the reference block according to operations S3110 to S3130.

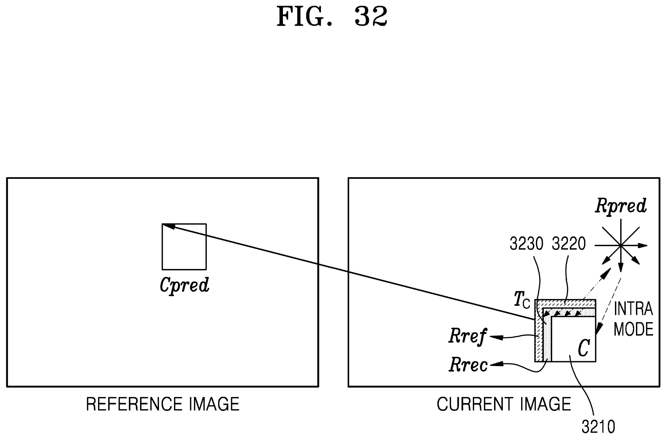

FIG. 32 illustrates a procedure for determining an intra mode for a reference block by using neighboring samples of a current block, according to an embodiment of the present disclosure.

In an embodiment of the present disclosure, the image decoding device 2000 may determine an intra mode for a reference block of a current block 3210 based on spatial information. The image decoding device 2000 may determine an intra mode for the reference block by using neighboring samples (or template T_{R}) of the current block 3210. In an embodiment of the present disclosure, the neighboring samples (or a template) of the current block 3210 may be referred to as spatial neighboring samples.

The image decoding device 2000 may determine neighboring samples (or the template) of the current block C 3210. The neighboring samples of the current block 3210 may include adjacent samples and non-adjacent samples of the current block 3210. The image decoding device 2000 may determine some of the neighboring samples of the current block 3210 as reference samples R_{ref} 3220, and determine the rest of the neighboring samples as reconstruction samples 3230.

The image decoding device 2000 may perform intra prediction according to one or more intra prediction modes by using the reference samples 3220. The image decoding device 2000 may obtain prediction samples R_{pred} by performing prediction on the rest of the neighboring samples other than the reference samples 3220 based on the reference samples 3220 of the neighboring samples of the current block 3210. The image decoding device 2000 may obtain the prediction samples from the reference samples 3220 according to each of the plurality of intra prediction modes. For example, the image decoding device 2000 may perform prediction on all the intra prediction modes, but is not limited thereto and may perform prediction on an intra prediction mode set determined in advance among the intra prediction modes.

The image decoding device 2000 may determine an error by comparing the prediction samples R_{pred} with the reconstruction samples 3230. The image decoding device 2000 may determine an error by using the cost function. When the cost function is the SAD, the image decoding device 2000 may determine the error based on the total sum of absolute values of differences between the prediction samples and the reconstruction samples 3230.

The image decoding device 2000 may determine an intra mode for the reference block based on the error. The image decoding device 2000 may determine an intra mode for the reference block based on the error between the prediction sample and the reconstruction sample 3230. The image decoding device 2000 may determine an intra prediction mode with the least error as an intra mode for the reference block. The image decoding device 2000 may determine an intra mode for the reference block through the reference block of the current image even when the prediction mode of the current image 3210 is an inter mode.

The image decoding device 2000 may determine a transform kernel by using the determined intra mode for the reference block. Herein, the transform kernel may refer to a kernel applied to the residual block to perform inverse transformation with respect to at least one of the first transform, the second transform or the non-separable first transform. The image decoding device 2000 may determine a transform kernel for at least one of the first transform, the second transform or the non-separable first transform by using the determined intra mode for the reference block.

FIG. 33 is a flowchart of an image decoding method, according to an embodiment of the present disclosure.

In an embodiment of the present disclosure, the image decoding method may be performed by the image decoding device 2000. For example, the processor of the image decoding device 2000 may execute at least one instruction included in the memory to cause the image decoding device 2000 to perform each operation of the image decoding method.

In operation S3310, the image decoding device 2000 may determine a reference block through template matching. In an embodiment of the present disclosure, the reference block may be included in the same image with the current block.

The image decoding device 2000 may identify a template of the current block. The template of the current block may include neighboring samples of the current block. The neighboring samples of the current block may include adjacent samples and/or non-adjacent samples of the current block. The form of the template according to an embodiment of the present disclosure will be described in detail with reference to FIG. 35.

The image decoding device 2000 may determine, in the current image, a template similar to the template of the current block. The image decoding device 2000 may determine a block having the template similar to the current template as the reference block of the current block. The image decoding device 2000 may determine the reference block from among the blocks included in a searching area.

In an embodiment of the present disclosure, the image decoding device 2000 may determine the reference block by using a cost function. The image decoding device 2000 may determine a template error between the template of the current block and a candidate template based on at least one cost function among the SAD, SATD, SSE and MR-SAD. The image decoding device 2000 may determine the template error based on each sample in the template of the current block and each sample in the candidate template. The image decoding device 2000 may determine a block having a candidate template with a smaller template error as the reference block.

In operation S3320, the image decoding device 2000 may determine a plurality of gradients by using a plurality of internal samples of the reference block. The image decoding device 2000 may determine the horizontal variation and the vertical variation by using the plurality of internal samples of the reference block. For example, the image decoding device 2000 may determine the horizontal variation and the vertical variation by using the Sobel filter. The image decoding device 2000 may determine an NxN block (e.g., 3x3 block) included in the reference block. The image decoding device 2000 may obtain the horizontal variation and vertical variation of samples included in the determined NxN block. The image decoding device 2000 may determine a gradient based on the horizontal variation and the vertical variation. The gradient may be determined based on a ratio between the horizontal variation and the vertical variation. In an embodiment of the present disclosure, operation S3320 may correspond to operation S2510 of FIG. 25.

In operation S3330, the image decoding device 2000 may determine a plurality of directional intra modes corresponding to the plurality of gradients. The image decoding device 2000 may determine an intra prediction mode corresponding to a gradient.

The image decoding device 2000 may generate a histogram of gradients (HOG) by using the plurality of gradients. The image decoding device 2000 may determine the HOG based on the plurality of intra prediction modes determined for the plurality of NxN blocks. The HOG may be referred to as gradient statistics information or gradient information. In an embodiment of the present disclosure, the HOG may include information indicating the frequency (or amplitude) of the directional intra modes determined based on the gradients. In an embodiment of the present disclosure, a weight may be applied to the frequency of a directional intra mode of the HOG. The image decoding device 2000 may determine the weight of an intra prediction mode corresponding to a gradient. The image decoding device 2000 may increase the weight of the intra prediction mode determined based on the gradient as the horizontal variation and the vertical variation increase. For example, the weight may be determined based on a sum of absolute values of the horizontal variation and vertical variation. In an embodiment of the present disclosure, operation S3330 may correspond to operation S2520 of FIG. 25.

In operation S3340, the image decoding device 2000 may select an intra mode for the reference block from among the plurality of determined directional intra modes. The image decoding device 2000 may determine the most frequently determined intra prediction mode as an intra mode for the reference block of the current block. In an embodiment of the present disclosure, the image decoding device 2000 may determine an intra mode for the reference block based on the HOG. The image decoding device 2000 may determine a directional intra mode with the highest frequency (or amplitude) as the intra mode for the reference block. In an embodiment of the present disclosure, operation S3340 may correspond to operation S2530 of FIG. 25.

In an embodiment of the present disclosure, operation S2120 and/or operation S2220 may determine an intra mode for the reference block according to operations S3310 to S3340.

FIG. 34 illustrates a procedure for determining an intra mode for a reference block by using the reference block, according to an embodiment of the present disclosure.

In an embodiment of the present disclosure, the image decoding device 2000 may determine an intra mode for a reference block of a current block 3410 based on spatial information. The image decoding device 2000 may determine an intra mode for the reference block by using the samples of the reference block 3430.

The image decoding device 2000 may determine a template T_{C} 3420 for the current block C 3410. In an embodiment of the present disclosure, the reference block 3430 is determined by using template matching and differs from a reference block 3030 that has been used for inter prediction of the current block 3410. The image decoding device 2000 may determine the reference block 3430 through template matching based on the template 3420 of the current block 3410. The image decoding device 2000 may determine template errors between the template 3420 of the current block 3410 and templates included in the current image. The image decoding device 2000 may determine a block having the template 3440 with the least template error as the reference block 3430.

The image decoding device 2000 may determine a gradient by using the internal samples of the reference block 3430. The image decoding device 2000 may determine the horizontal variation and/or the vertical variation by using the internal samples of the reference block 3430. For example, the image decoding device 2000 may determine the horizontal variation and vertical variation of the reference block 3430 by using the Sobel filter. The Sobel filter includes filters for obtaining the horizontal or vertical variation within input data. The image decoding device 2000 may determine an NxN block (e.g., 3x3 block) included in the reference block 3430. The image decoding device 2000 may determine the NxN block in the reference block 3430 at certain intervals (e.g., 1) in a direction and/or vertical direction.

The image decoding device 2000 may determine a gradient based on the horizontal variation and the vertical variation. The image decoding device 2000 may determine a ratio between the horizontal variation and the vertical variation as the gradient.

The image decoding device 2000 may determine an intra prediction mode corresponding to the gradient. The image decoding device 2000 may generate an HOG 3450 by using gradients of a plurality of NxN blocks in the reference block 3430. The HOG 3450 may include information indicating the frequency (or amplitude) of an intra prediction mode corresponding to a gradient of each of the plurality of blocks in the reference block 3430. For example, the HOG 3450 may be information including the frequency (or amplitude) corresponding to an intra prediction mode, as shown in FIG. 34.

In an embodiment of the present disclosure, the amplitude (or frequency) of an intra prediction mode of the HOG 3450 may be determined based on the horizontal variation and the vertical variation. For example, as the horizontal variation and the vertical variation increase, the amplitude of the intra prediction mode may be determined to be higher. For example, the amplitude may be determined based on a sum of absolute values of the horizontal variation and vertical variation.

The image decoding device 2000 may select an intra mode for the reference block from among the plurality of determined intra prediction modes. In an embodiment of the present disclosure, the image decoding device 2000 may determine an intra mode for the reference block based on the HOG 3450. The image decoding device 2000 may determine an intra prediction mode with the highest amplitude (or frequency) as the intra mode for the reference block of the current block 3410.

The image decoding device 2000 may determine a transform kernel by using the determined intra mode for the reference block. Herein, the transform kernel may refer to a kernel applied to the residual block to perform inverse transformation with respect to at least one of the first transform, the second transform or the non-separable first transform. The image decoding device 2000 may determine a transform kernel for at least one of the first transform, the second transform or the non-separable first transform by using the determined intra mode for the reference block.

FIG. 35 is a diagram for describing forms of templates, according to an embodiment of the present disclosure.

Referring to FIG. 35, templates 3510, 3520, 3530, 3540 and 3550 of the current block 3500 may have multiple forms. In an embodiment of the present disclosure, depending on the template of the current block 3500, the form of a template to be compared in the reconstructed region may be determined. In an embodiment of the present disclosure, templates shaped like the templates 3510 and 3530 may be referred to as having an L-shape.

In an embodiment of the present disclosure, the image decoding device 2000 may determine a template of the current block 3500 to include at least one of a first template located on the left of the current block 3500, a second template located above the current block 3500 and a third template located on the upper-left side of the current block 3500. For example, the template 3510 may include the first template located to the left of the current block 3500, the second template located above the current block 3500 and the third template located on the upper-left side of the current block 3500, and the template 3520 may include the first template and the second template excluding the third template. Alternatively, the template may include only the second template located above the current block 3500 or only the third template located to the left of the current block 3500. It is not, however, limited thereto, and the template may include a template located to the right of the current block 3500.

In an embodiment of the present disclosure, the image decoding device 2000 may perform template matching prediction by using the template 3530 that includes at least some of right reference samples, upper reference samples and upper-right reference samples. The image decoding device 2000 may determine a template based on a block coding order (or coding direction). In an embodiment, when block coding is performed from right to left, the image decoding device 2000 may determine a reference block of the current block 3500 or perform template matching prediction by using the template 3530.

In an embodiment of the present disclosure, the image decoding device 2000 may determine a reference block of the current block 3500 or perform template matching prediction by using the template 3540 that includes at least some of right reference samples, upper reference samples, left reference samples, upper-left reference samples and upper-right reference samples, or perform template matching prediction by using the template 3540 that includes at least some of right reference samples, upper reference samples and upper-right reference samples. In an embodiment of the present disclosure, when the block coding order (or coding direction) changes, the image decoding device 2000 may determine a reference block of the current block 3500 or perform template matching prediction by using the template 3540 that includes samples for reference.

In an embodiment of the present disclosure, the height of the first template located to the left of the current block 3500 or the width of the second template located above the current block 3500 may be determined based on the height or width of the current block 3500. For example, the template 3550 may include the first template with twice the height of the current block 3500 and the second template with twice the width of the current block 3500. For example, the template 3550 has a form that results from modifying the height of the first template and the width of the second template, without being limited thereto, and the templates 3510, 3530 and 3540 may also have modified forms.

The template of the current block 3500 may include one or more reference lines. The first template may include m reference lines, where m is an integer of 1 or greater, and the second template may include n reference lines, where n is an integer of 1 or greater.

In an embodiment of the present disclosure, the number of reference lines may be predetermined. For example, the first template and the second template may each include four reference lines (i.e., m=4 and n=4). In an embodiment of the present disclosure, the number of reference lines may be determined according to the size of the current block 3500. For example, the first template and the second template may include as many reference lines as half the width and half the height of the current block 3500 (i.e., m=W/2 and n=H/2), respectively.

In an embodiment of the present disclosure, the form of the template may be signaled. The image decoding device 2000 may obtain information regarding the template form from a bitstream. In an embodiment of the present disclosure, the form of the template may be determined based on the size of the current block 3500.

FIG. 35 is a diagram for describing a template according to an embodiment of the present disclosure, but the template is not limited thereto and various forms of templates may be determined. Furthermore, in the present disclosure, although the image decoding device 2000 is described as performing template matching based on the template 3510 that includes all the left reference samples, upper reference samples and upper-left reference samples, it is not limited thereto, and various forms of templates as described in FIG. 35 may be used to perform template matching prediction.

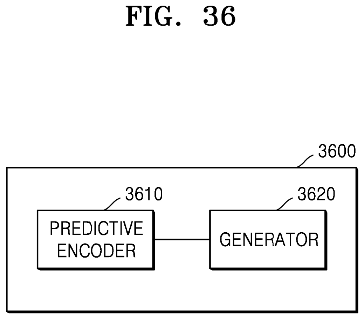

FIG. 36 is a block diagram of a configuration of an image encoding device, according to an embodiment of the present disclosure.

Referring to FIG. 36, an image encoding device 3600 may include a predictive encoder 3610 and a generator 3620.

In an embodiment of the present disclosure, the predictive encoder 3610 and the generator 3620 may be implemented by at least one processor. In an embodiment of the present disclosure, the image encoding device 3600 may include memory for storing input/output data of the predictive encoder 3610 and the generator 3620. The predictive encoder 3610 and the generator 3620 may operate according to instructions stored in the memory. In an embodiment of the present disclosure, the image encoding device 3600 may include a memory controller for controlling data input/output to/from the memory.

In an embodiment of the present disclosure, the predictive encoder 3610 may correspond to the predictive encoder 1915 shown in FIG. 19. In an embodiment of the present disclosure, the generator 3620 may correspond to the entropy encoder 1925 shown in FIG. 19.

The predictive encoder 3610 may determine a prediction mode of the current block. The current block may include at least one of a maximum coding unit, a coding unit, a transform unit or a prediction unit divided from the current image. In an embodiment of the present disclosure, the prediction mode of the current block may include at least one of an intra mode, an inter mode, a combined mode, a geometric partitioning mode, a block copy mode or a template matching prediction mode.

In an embodiment of the present disclosure, the intra mode may include a planar mode (intra_planar mode), a DC mode (intra_DC mode), directional modes (intra_angular modes 2 to 66), and wide directional modes (intra_wide_angular modes) -14 to -1 and 67 to 80. In an embodiment of the present disclosure, the planar mode may refer to a mode for determining a prediction sample based on a weighted average value according to the distances of a left reference sample, an upper reference sample, lower-left and upper-right samples of the current block. In an embodiment of the present disclosure, the DC mode may refer to a mode for determining an average value of the reference samples as a prediction sample. In an embodiment of the present disclosure, in the directional modes, locations of the reference samples may be identified to generate prediction samples of the samples in the current block by taking into account directions indicated by the intra directional modes. The wide directional modes may be used to identify the reference samples of the samples in the non-square shaped current block. In an embodiment of the present disclosure, the predictive encoder 3610 may determine one of the wide directional modes as an intra prediction mode of the non-square shaped current block. In an embodiment of the present disclosure, the predictive encoder 3610 may variously set the number and types of the intra prediction modes available in the intra mode.

In an embodiment of the present disclosure, the predictive encoder 3610 may determine an intra prediction mode based on most probable modes (MPMs). The predictive encoder 3610 may determine whether the MPMs are used. The generator 3620 may generate a bitstream that includes information relating to whether the MPMs are used. The predictive encoder 3610 may determine a candidate mode list. The predictive encoder 3610 may determine the candidate mode list based on the upper block intra mode and left block intra mode of the current block. The predictive encoder 3610 may determine one of the candidate modes in the list as the intra prediction mode of the current block. The predictive encoder 3610 may generate a bitstream that includes information indicating the intra prediction mode of the current block in the candidate mode list.

In an embodiment of the present disclosure, the predictive encoder 3610 may determine an intra prediction mode based on a template. The predictive encoder 3610 may determine a template of the current block. The template of the current block may include a left sample, an upper-left sample and/or an upper sample of the current block. The predictive encoder 3610 may determine neighboring samples of the template of the current block. The neighboring samples of the template may include left, upper-left and/or upper samples of the template. The predictive encoder 3610 may perform prediction on the template with the neighboring samples of the template as reference samples. The predictive encoder 3610 may determine an intra mode for the reference block by comparing a predicted template with the template of the reconstructed current block. The predictive encoder 3610 may determine an intra mode with the least error between the predicted template and the template of the reconstructed current block as an intra mode for the reference block. In an embodiment of the present disclosure, the procedure in which the predictive encoder 3610 determines an intra prediction mode by performing prediction on the template may be referred to as template-based intra mode derivation (TIMD).

In an embodiment of the present disclosure, the predictive encoder 3610 may infer an intra prediction mode of the current block by using the neighboring samples of the current block. The predictive encoder 3610 may determine a gradient by using the neighboring samples of the current block. The predictive encoder 3610 may determine a plurality of 3x3 blocks adjacent to the current block. The predictive encoder 3610 may obtain the horizontal variation and vertical variation of samples included in each determined 3x3 block. The predictive encoder 3610 may determine a gradient based on the horizontal variation and the vertical variation. The predictive encoder 3610 may determine the horizontal variation and the vertical variation by using the Sobel filter. The predictive encoder 3610 may determine an intra prediction mode corresponding to the gradient. The predictive encoder 3610 may determine an intra prediction mode of the current block based on a plurality of intra prediction modes determined for the plurality of 3x3 blocks. In an embodiment of the present disclosure, the predictive encoder 3610 may determine the most frequently determined intra prediction mode as the intra prediction mode for the current block. In an embodiment of the present disclosure, the predictive encoder 3610 may determine the amplitude based on the horizontal variation and the vertical variation. The predictive encoder 3610 may determine an intra prediction mode of the current block based on the amplitude. The predictive encoder 3610 may determine a weight of the intra prediction mode corresponding to the gradient as the amplitude. For example, the predictive encoder 3610 may increase the weight of the intra prediction mode determined based on the gradient as the horizontal variation and the vertical variation increase. The predictive encoder 3610 may determine an intra prediction mode of the current block based on a result of reflecting the weight determined based on the amplitude. In an embodiment of the present disclosure, the procedure in which the predictive encoder 3610 determines an intra prediction mode based on the gradient may be referred to as decoder side intra mode derivation (DIMD).

In an embodiment of the present disclosure, the block copy mode may include an intra block copy mode. In an embodiment, the block copy mode may include an intra block copy mode. In an embodiment, the intra block copy mode may be a sub-mode of the intra mode, but is not limited thereto, and may indicate a mode separate from the intra mode. In an embodiment, the template matching prediction mode may include a template matching intra prediction mode. The combined mode may include a combined inter-intra prediction (CIIP) mode in which prediction from intra mode and prediction from inter mode are combined to perform prediction. The geometric partitioning mode may include a mode for partitioning a block to include directionality in the block. The geometric partitioning mode may perform prediction on each partitioned region of the block by using inter-prediction or intra-prediction.

In an embodiment of the present disclosure, when the prediction mode of the current block is the CIIP mode, the predictive encoder 3610 may combine inter prediction and intra prediction to perform prediction on the current block. For example, the predictive encoder 3610 may perform intra prediction according to the planar mode. For example, the predictive encoder 3610 may determine a motion vector of a reference block for the current block. The predictive encoder 3610 may perform inter prediction by using the motion vector. The predictive encoder 3610 may predict the current block by using a weighted sum of the prediction block from inter prediction and the prediction block from intra prediction. The weight may be determined based on whether a neighboring block to the current block has been intra-predicted (or inter-predicted).

In an embodiment of the present disclosure, when the prediction mode of the current block is the geometric partitioning mode, the predictive encoder 3610 may divide the current block and perform prediction. The predictive encoder 3610 may determine a partition angle and a partition distance with respect to a boundary on which division is performed in the current block. The predictive encoder 3610 may divide the current block based on the partition angle and partition distance. The predictive encoder 3610 may predict the current block by performing inter prediction or intra prediction on each partitioned region in the current block. The predictive encoder 3610 may perform (i) intra prediction on both the partitioned regions, (ii) inter prediction on one region and intra prediction on the other region, or (iii) inter prediction on both the partitioned regions.

In an embodiment of the present disclosure, when the prediction mode of the current block is the template matching prediction mode, the predictive encoder 3610 may reconstruct the current block by using the reference block. The generator 3620 may generate information relating to whether to use the template matching prediction mode. The predictive encoder 3610 may determine whether the template matching prediction mode is used, based on the obtained information. The reference block may be determined based on at least one of a region included in the current image or a region included in the previously decoded image. In an embodiment of the present disclosure, the predictive encoder 3610 may determine a reference block based on a cost function. The cost function may include at least one of a sum of absolute difference (SAD), a sum of squared difference (SSD), a sum of absolute transformed difference (SATD), a sum of squared error (SSE) or a mean removed SAD (MR-SAD). For example, the predictive encoder 3610 may determine an error between templates based on at least one cost function among the SAD, SATD, SSE and MR-SAD. When the cost function is the SAD, the predictive decoder 3610 may determine the error based on a total sum of absolute values of differences between the respective samples of the template of the current block and the respective samples of the template of the candidate block. When the cost function is the SSD, the predictive encoder 3610 may determine the error based on a total sum of squares of the differences between the respective samples of the template of the current block and the respective samples of the template of the candidate block. The cost function may include a function that indicates the number of identical samples. The predictive encoder 3610 may determine a block with a smaller error as a reference block from among the candidate blocks. The predictive encoder 3610 may determine a prediction block by performing the template matching intra prediction on the current image. In the present disclosure, a procedure for determining a reference block for the current block based on the template may be referred to as template matching (TM). In the present disclosure, prediction performed for the current block based on template matching may be referred to as template matching prediction (TMP) or intra template matching prediction.

In an embodiment of the present disclosure, the predictive encoder 3610 may determine an intra prediction mode of the current block when the prediction mode of the current block is an intra mode.

In an embodiment of the present disclosure, when the prediction mode of the current block is the block copy mode, the predictive encoder 3610 may determine information regarding a block vector that refers to a reference block.

In an embodiment of the present disclosure, the predictive encoder 3610 may perform intra prediction or inter prediction for the current block according to the prediction mode of the current block, and encode the current block by using a prediction block generated as a result of the performing of the intra prediction or inter prediction.

In an embodiment of the present disclosure, when the prediction mode of the current block is the block copy mode, the predictive encoder 3610 may determine the prediction block from the reference block. For example, the predictive encoder 3610 may determine a prediction block to be identical to the reference block or by filtering the reference block. The reference block may be determined based on at least one of a region included in the current image or a region included in the previously decoded image.

In an embodiment of the present disclosure, when the prediction mode of the current block is the template matching prediction mode, the predictive encoder 3610 may reconstruct the current block by using the reference block. The predictive encoder 3610 may determine a prediction mode by using the reference block.

The predictive encoder 3610 may perform deblocking filtering. The deblocking filter may improve image quality by smoothing edges between blocks.

The predictive encoder 3610 may perform filtering on the sample in the current block that has undergone deblocking filtering by using a sample adaptive offset (SAO) filter and/or a bilateral filter (BIF). The SAO filter and BIF may improve image quality by reducing the error between the reconstructed image and the original image. The SAO filter and the BIF may perform filtering on a sample basis.

The predictive encoder 3610 may perform filtering by using an adaptive loop filter (ALF). The ALF may improve image quality by reducing the error between the reconstructed image and the original image. The ALF may perform filtering on a block basis.

In an embodiment of the present disclosure, encoding of the current block may refer to a procedure in which the image decoding device 2000 generates information that allows reconstruction of the current block. The information generated by encoding may be included in a bitstream.

In an embodiment of the present disclosure, the predictive encoder 3610 may generate residual data corresponding to a difference between the prediction block and the current block. When the prediction block is determined to be the current block, the residual data may not be generated.

The generator 3620 may generate a bitstream that includes an image encoding result. The bitstream may include a result of encoding the current block.

In an embodiment of the present disclosure, when the prediction mode of the current block is the block copy mode, the generator 3620 may generate a bitstream that includes information regarding a block vector that refers to a reference block.

In an embodiment of the present disclosure, the generator 3620 may transmit the bitstream to the image decoding device 2000 over a network.

In an embodiment of the present disclosure, the generator 3620 may store the bitstream in a data storage medium including at least one of a magnetic medium such as a hard disk, floppy disk and a magnetic tape, an optical recording medium such as a compact disk (CD) read only memory (ROM) (CD-ROM) and a digital versatile disc (DVD), or a magneto-optical medium such as floptical disk, etc.

The generator 3620 may generate a bitstream that includes syntax elements generated by image encoding. Values corresponding to the syntax elements may be included in the bitstream according to a hierarchical structure of images.

The generator 3620 may obtain bins included in the bitstream by entropy encoding the syntax elements.

In an embodiment of the present disclosure, the bitstream may include information about a prediction mode of the current block in the current image.

In an embodiment of the present disclosure, when the prediction mode of the current block is an intra mode, the bitstream may include information indicating an intra prediction mode of the current block.

In the prediction mode (e.g., intra mode) that uses reference samples included in the current image, assuming that there is continuity between the neighboring samples of the current block and the samples in the current block, a prediction block of the current block may be generated based on the neighboring samples of the current block according to the intra prediction mode. In an embodiment of the present disclosure, the predictive encoder 3610 may use not only the neighboring samples of the current block included in the current image but also a spatial reference samples included in the current image for intra prediction. When samples reconstructed earlier than the current block are used, the size of the residual data may be reduced by predicting samples of the current block based on not only the samples directly adjacent to the current block but also samples distant from the current block. In an embodiment of the present disclosure, the image encoding device 3600 may perform intra prediction based on a reference block including non-reconstructed samples, thereby increasing the range of regions that may be determined as reference blocks. In an embodiment of the present disclosure, the image encoding device 3600 may enhance compression efficiency by increasing the efficiency of intra prediction.

In a prediction mode (e.g., inter mode) that uses a reference sample included in a reference image rather than the current image, assuming that there is continuity between the current image and the reference image, a prediction block of the current block may be generated based on the reference block (or reference sample) of the reference image according to the prediction mode. In an embodiment of the present disclosure, the image encoding device 3600 may enhance the compression efficiency by increasing the efficiency of the intra prediction.

The image encoding device 3600 may increase the prediction accuracy by considering both the reference block (or reference sample) included in the current image and the reference block (or reference sample) included in an image other than the current image. In an embodiment of the present disclosure, the image encoding device 3600 may enhance the prediction accuracy by considering both the current image and images other than the current image.

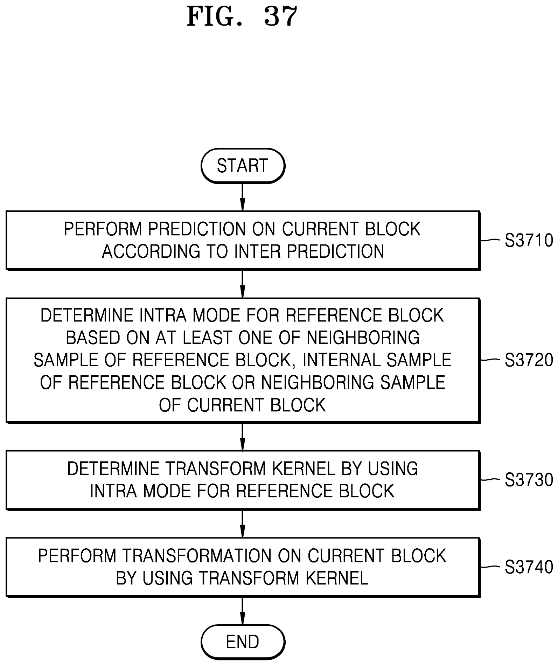

FIG. 37 is a flowchart of an image encoding method, according to an embodiment of the present disclosure.

In an embodiment of the present disclosure, the image encoding method may be performed by the image encoding device 3600. For example, the processor of the image encoding device 3600 may execute at least one instruction included in the memory to cause the image encoding device 3600 to perform each operation of the image encoding method.

In operation S3710, the image encoding device 3600 may perform prediction on the current block according to inter prediction. The image encoding device 3600 may obtain a reference block included in a reference image. The image encoding device 3600 may obtain the reference block based on a motion vector of the current block. The image encoding device 3600 may obtain a prediction sample of the current block by performing inter prediction based on the reference block.

The image encoding device 3600 may obtain one or more reference blocks corresponding to one or more motion vectors of the current block. In an embodiment of the present disclosure, the current block may be a block included in a bi-predictive (B) picture (or B slice). A block included in the B picture (or B slice) may undergo inter prediction according to up to two motion vectors and reference indices. When the current block is included in the B picture or B slice, the image encoding device 3600 may obtain two reference blocks corresponding to the two motion vectors of the current block. In an embodiment of the present disclosure, the current block may be a block included in a predictive (P) picture (or P slice). A block included in the P picture (or P slice) may undergo inter prediction according to up to one motion vector and a reference index. When the current block is included in the P picture or P slice, the image encoding device 3600 may obtain one reference block corresponding to the one motion vector of the current block.

In operation S3720, the image encoding device 3600 may determine an intra mode for the reference block based on at least one of neighboring samples of the reference block, internal samples of the reference block or neighboring samples of the current block. The image encoding device 3600 may determine an intra mode for the reference block based on temporal information or spatial information of the current block. The temporal information may include information regarding an image other than the current image that includes the current block. The spatial information may include information regarding the current image that includes the current block.

In an embodiment of the present disclosure, the reference block may include a block that has been used for inter prediction of the current block. In an embodiment, neighboring samples of the reference block (or the current block) may include adjacent samples and/or non-adjacent samples of the reference block (or the current block). The neighboring samples of the reference block may include left samples, upper-left samples and upper samples of the reference block.

In an embodiment of the present disclosure, the image encoding device 3600 may determine an intra mode for the reference block based on the neighboring samples of the reference block and internal samples of the reference block. The image encoding device 3600 may determine an intra mode for the reference block based on a result of predicting the internal samples of the reference block by using the neighboring samples of the reference block. In an embodiment of the present disclosure, the procedure in which the image encoding device 3600 determines an intra mode for the reference block based on the neighboring samples of the reference block and the internal samples of the reference block corresponds to the procedure for determining the intra mode for the reference block of the image decoding device 2000 as described above with reference to FIGS. 22 to 24 and 29 and 30.

In an embodiment of the present disclosure, the image encoding device 3600 may determine an intra mode for the reference block based on the internal samples of the reference block. The image encoding device 3600 may determine an intra mode for the reference block based on a plurality of gradients determined for the internal samples of the reference block. In an embodiment of the present disclosure, the procedure in which the image encoding device 3600 determines an intra mode for the reference block based on the internal samples of the reference block corresponds to the procedure for determining the intra mode for the reference block of the image decoding device 2000 as described above with reference to FIGS. 25 to 28 and 33 and 34.

In an embodiment of the present disclosure, the image encoding device 3600 may determine an intra mode for the reference block by using the neighboring samples of the current sample. The neighboring samples of the current block may be samples included in a template region of the current block. In an embodiment of the present disclosure, the procedure in which the image encoding device 3600 determines an intra mode for the reference block based on the neighboring samples of the current block corresponds to the procedure for determining the intra mode for the reference block of the image decoding device 2000 as described above with reference to FIGS. 33 and 34.

In an embodiment of the present disclosure, the image encoding device 3600 may determine one of two intra modes obtained from two reference blocks as an intra mode for the reference block. The image encoding device 3600 may determine two intra modes from the respective two reference blocks, and determine one of the two determined intra modes as an intra mode for the reference block. Alternatively, the image encoding device 3600 may refer to all the two reference blocks to determine a virtual intra mode.

In operation S3730, the image encoding device 3600 may determine a transform kernel by using the intra mode for the reference block. The image encoding device 3600 may determine a transform kernel set including a plurality of transform kernels corresponding to the intra mode for the reference block. The image encoding device 3600 may determine a type of the transform kernel set according to the intra mode for the reference block. For example, a range of directivity indices of the intra mode for the reference block may correspond to one of the plurality of transform kernel sets. A transform kernel set may include a plurality of transform kernels. For example, a first transform kernel set may include a first transform kernel and a second transform kernel, and a second transform kernel set may include a third transform kernel and a fourth transform kernel. In an embodiment, depending on the type of transform, there are one or more (e.g., N, where N is 1 or greater) transform kernel sets, and each transform kernel set may include one or more (e.g., M, where M is 1 or greater) transform kernels.

In an embodiment of the present disclosure, the number of transform kernels included in each transform kernel set may be determined based on the total sum of transform coefficients. For example, when the total sum of transform coefficients is smaller than a predetermined first value, the number of transform kernels may be N1 (e.g., N1=1); when the total sum of transform coefficients is greater than the predetermined first value and smaller than a predetermined second value, the number of transform kernels may be N2 (e.g., N1=4); when the total sum of transform coefficients is greater than the predetermined second value, the number of transform kernels may be N3 (e.g., N1=6).

In an embodiment of the present disclosure, the image encoding device 3600 may determine a transform kernel set based on the size of the current block and the intra mode of the reference block. The transform kernel set may be predetermined according to the size of the current block. For example, M transform kernel sets may be predetermined for each size of the current block.

The image encoding device 3600 may select one of the plurality of transform kernels as a transform kernel of the current block. The image encoding device 3600 may determine one of the plurality of transform kernels included in the transform kernel set. In an embodiment of the present disclosure, the image encoding device 3600 may generate a bitstream that includes index information indicating a transform kernel of the current block among the plurality of transform kernels.

In an embodiment of the present disclosure, the transform kernel may relate to at least one of a kernel for a first transform, a kernel for a second transform or a non-separable first transform kernel that combines the first transform and the second transform.

In an embodiment of the present disclosure, the image encoding device 3600 may determine the transform kernel for the first transform by using the intra mode for the reference block. The transform kernel for the first transform may include a discrete cosine transform (DCT) kernel and/or a discrete sine transform (DST) kernel. The first transform may be applied in the vertical direction and/or the horizontal direction. The image encoding device 3600 may generate a bitstream that includes information indicating whether it is a vertical transform or a horizontal transform. The first transform may be referred to as multi-transform selection (MTS). The transform kernel for the first transform may be referred to as a core transform kernel.

In an embodiment of the present disclosure, the image encoding device 3600 may determine the transform kernel for the second transform by using the intra mode for the reference block. The second transform may be applied only to a portion of the residual signal that has undergone the first transform. For example, the second transform may be performed only for the left region or the upper-left region of the block. The second transform is performed without separating the vertical direction from horizontal direction. The second transform may be referred to as a low frequency non-separable transform (LFNST).

In an embodiment of the present disclosure, the image encoding device 3600 may determine the transform kernel for the non-separable first transform by using the intra mode for the reference block. The image encoding device 3600 may not perform the extra second transformation on the block for which the non-separable first conversion has been performed. The non-separable first transform may have a form that combines the first transform and the second transform. For example, the transform kernel for the non-separable first transform may be a combination of the transform kernel for the first transform and the transform kernel for the second transform. The non-separable first transform is performed without separating the vertical direction from horizontal direction.

In operation S3740, the image encoding device 3600 may perform transformation on the current block by using the transform kernel. The image encoding device 3600 may perform transformation by applying the selected transform kernel to the current block. The image encoding device 3600 may obtain transform coefficients by performing transformation based on the transform kernel.

The image encoding device 3600 may generate transform coefficients by applying the determined transform kernel for the first transform to the residual signal (or residual data).

The image encoding device 3600 may generate transform coefficients by applying the transform kernel for the second transform to the residual signal that has undergone the first transform. The image encoding device 3600 may determine whether to perform the second transform for each block.

The image encoding device 3600 may generate transform coefficients by applying the transform kernel for the separable first transform to the residual signal.

When the prediction mode of the current block is an inter mode, the image encoding device 3600 may determine a transform kernel set for the current block by determining an intra mode for the reference block. The image encoding device 3600 may derive an intra mode for the reference block that represents internal directivity by using an already reconstructed reference block, and enhance coding efficiency (or transform efficiency) by applying the derived intra mode for the reference block to the current block even when the current block is in an inter mode. In other words, by determining an intra mode for the reference block, the image encoding device 3600 may, even in an inter mode, select a transform kernel that is suitable for the current block from among various types of transform kernels as in the intra mode, thereby increasing video compression efficiency. In an embodiment of the present disclosure, even when the prediction mode of the current block is an inter mode, the second transform and the non-separable first transform may be applied, and various transform kernels for the first transform may be applied. The residuals at block boundaries may be efficiently compressed by applying a direction-dependent transform kernel as for the second transform. Such an advantage is merely an example, and advantages and objectives of the present disclosure are not limited to what are described in the present disclosure.

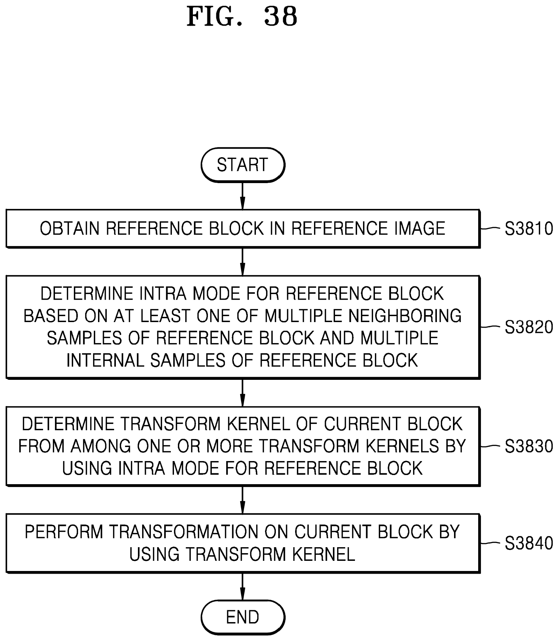

FIG. 38 is a flowchart of an image encoding method, according to an embodiment of the present disclosure.

In an embodiment of the present disclosure, the image encoding method may be performed by the image encoding device 3600. For example, the processor of the image encoding device 3600 may execute at least one instruction included in the memory to cause the image encoding device 3600 to perform each operation of the image encoding method.

In operation S3810, the image encoding device 3600 may obtain a reference block in a reference image. In an embodiment of the present disclosure, the reference block may be determined based on a motion vector of the current block. The reference block may include a block used for inter prediction of the current block.

In operation S3820, the image encoding device 3600 may determine an intra mode for the reference block based on at least one of a plurality of neighboring samples and a plurality of internal samples of the reference block.

In an embodiment of the present disclosure, the neighboring samples of the reference block may include samples within a certain distance from the reference block The neighboring samples of the reference block may include at least one of adjacent samples and non-adjacent samples of the reference block. The neighboring samples of the reference block may include samples located above the reference block, samples located to the left of the reference block and/or samples located to the upper-left of the reference block.

In an embodiment of the present disclosure, the image encoding device 3600 may predict internal samples of the reference block by using the plurality of neighboring samples. For example, the image encoding device 3600 may determine prediction samples according to a plurality of intra modes (e.g., intra directional prediction modes 2 to 66, or all available intra prediction modes) based on the neighboring samples of the reference block as reference samples. The image encoding device 3600 may determine an error by comparing the prediction sample with the internal sample of the reference block. The image encoding device 3600 may determine an intra mode for the reference block based on the error. For example, the image encoding device 3600 may determine one of the plurality of intra modes, which has the least error, as an intra mode for the reference block.

In operation S3830, the image encoding device 3600 may determine a transform kernel of the current block from among one or more transform kernels based on the intra mode for the reference block. In an embodiment of the present disclosure, operation S3830 may correspond to operation S3730.

In operation S3840, the image encoding device 3600 may perform transformation on the current block by using the transform kernel. In an embodiment of the present disclosure, operation S2240 may correspond to operation S3740.

The methods or embodiments proposed in the present disclosure may be used separately or used in combination in an arbitrary order. Furthermore, the method (or embodiment), encoder and decoder may each be implemented by a processing circuit (e.g., one or more processors or one or more integrated circuits). In an embodiment, the one or more processors execute a program stored in a non-transitory computer-readable medium.

The image encoding device according to an embodiment of the present disclosure may derive an intra mode for the reference block that represents internal directivity by using an already reconstructed reference block, and enhance coding efficiency (or transform efficiency) by applying the derived intra mode for the reference block to the current block even when the current block is in an inter mode. In other words, by determining an intra mode for the reference block, the image encoding device may, even in an inter mode, select a transform kernel that is suitable for the current block from among various types of transform kernels as in the intra mode, thereby increasing video compression efficiency. Even when the prediction mode of the current block is an inter mode, the second transform and the non-separable first transform may be applied, and various transform kernels for the first transform may be applied. The residual data at block boundaries may be efficiently compressed by applying a direction-dependent transform kernel as for the second transform. However, the technical effects of the image decoding method according to an embodiment of the present disclosure are not limited to the above descriptions, but may include technical features arising from the present disclosure.

According to an embodiment of the present disclosure, provided is an image decoding method. The image decoding method may include obtaining a reference block in a reference image. The image decoding method may include determining an intra mode for the reference block, based on at least one of a plurality of neighboring samples of the reference block and a plurality of internal samples of the reference block. The image decoding method may include determining a transform kernel of the current block from among one or more transform kernels by using the intra mode for the reference block. The image decoding method may include performing inverse transformation on the current block by using the transform kernel.

In an embodiment of the present disclosure, one or more transform kernels may include at least one of a first transform kernel related to multi-transform selection (MTS), a second transform kernel related to low frequency non-separable transform (LFNST) or a third transform kernel related to non-separable primary transform (NSPT).

In an embodiment of the present disclosure, the determining of the intra mode for the reference block may include performing intra prediction according to one or more intra prediction modes by using a plurality of neighboring samples. The determining of the intra mode for the reference block may include determining an intra mode for the reference block based on errors between the intra-predicted samples and the internal samples of the reference block.

In an embodiment of the present disclosure, the determining of the intra mode for the reference block may include determining a plurality of gradients by using the plurality of internal samples of the reference block. The determining of the intra mode for the reference block may include determining a plurality of directional intra modes corresponding to the plurality of gradients. The determining of the intra mode for the reference block may include selecting an intra mode for the reference block from among the plurality of determined directional intra modes.

In an embodiment of the present disclosure, the determining of the intra mode for the reference block may include determining a first candidate intra mode based on at least one of a plurality of neighboring samples of the reference block and a plurality of internal samples of the reference block. The determining of the intra mode for the reference block may include determining a second candidate intra mode based on at least one of a plurality of neighboring samples of a second reference block of the current block and a plurality of internal samples of the second reference block. The determining of the intra mode for the reference block may include selecting one of the first candidate intra mode and the second candidate intra mode as the intra mode for the reference block.

In an embodiment of the present disclosure, the selecting of the one of the first candidate intra mode and the second candidate intra mode as the intra mode for the reference block may include determining a first error by performing prediction on the plurality of internal samples of the reference block based on the plurality of neighboring samples of the reference block according to the first candidate intra mode. The selecting of the one of the first candidate intra mode and the second candidate intra mode as the intra mode for the reference block may include determining a second error by performing prediction on the plurality of internal samples of the second reference block based on the plurality of neighboring samples of the second reference block according to the second candidate intra mode. The selecting of the one of the first candidate intra mode and the second candidate intra mode as the intra mode for the reference block may include determining an intra mode for the reference block from among the first candidate intra mode and the second candidate intra mode based on the first error and the second error.

In an embodiment of the present disclosure, the selecting of the one of the first candidate intra mode and the second candidate intra mode as the intra mode for the reference block may include obtaining a first quantization parameter of the reference block and a second quantization parameter of the second reference block. The selecting of the one of the first candidate intra mode and the second candidate intra mode as the intra mode for the reference block may include selecting the second candidate intra mode as an intra mode for the reference block when the first quantization parameter is equal to or larger than the second quantization parameter. The selecting of the one of the first candidate intra mode and the second candidate intra mode as the intra mode for the reference block may include selecting the first candidate intra mode as an intra mode for the reference block when the first quantization parameter is less than the second quantization parameter.

In an embodiment of the present disclosure, the selecting of the one of the first candidate intra mode and the second candidate intra mode as the intra mode for the reference block may include obtaining a first POC value of the reference image and a second POC value of the second reference image. The selecting of the one of the first candidate intra mode and the second candidate intra mode as the intra mode for the reference block may include selecting the first candidate intra mode as an intra mode for the reference block when a difference between a POC value of the current image and the first POC value is smaller than a difference between the POC value of the current image and the second POC value. The selecting of the one of the first candidate intra mode and the second candidate intra mode as the intra mode for the reference block may include selecting the second candidate intra mode as an intra mode for the reference block when the difference between the POC value of the current image and the first POC value is equal to or larger than the difference between the POC value of the current image and the second POC value.

In an embodiment of the present disclosure, the selecting of the one of the first candidate intra mode and the second candidate intra mode as the intra mode for the reference block may include obtaining bi-prediction weights for the reference block and the second reference block. The selecting of the one of the first candidate intra mode and the second candidate intra mode as the intra mode for the reference block may include selecting the first candidate intra mode as an intra mode for the reference block when the weight for the reference block is equal to or larger than the weight for the second reference block. The selecting of the one of the first candidate intra mode and the second candidate intra mode as the intra mode for the reference block may include selecting the second candidate intra mode as an intra mode for the reference block when the weight for the reference block is less than the weight for the second reference block.

In an embodiment of the present disclosure, the selecting of the one of the first candidate intra mode and the second candidate intra mode as the intra mode for the reference block may include selecting the first candidate intra mode as an intra mode for the reference block when a type of a slice that includes the reference block is I slice. The selecting of the one of the first candidate intra mode and the second candidate intra mode as the intra mode for the reference block may include selecting the second candidate intra mode as an intra mode for the reference block when a type of a slice that includes the second reference block is I slice.

In an embodiment of the present disclosure, the determining of the intra mode for the reference block may include determining a plurality of first gradients by using the plurality of internal samples of the reference block. The determining of the intra mode for the reference block may include determining a plurality of second gradients by using a plurality of internal samples of the second reference block of the second reference image other than the reference image. The determining of the intra mode for the reference block may include determining a plurality of directional intra modes corresponding to the plurality of first gradients and the plurality of second gradients. The determining of the intra mode for the reference block may include determining an intra mode for the reference block from among the plurality of determined directional intra modes.

According to an embodiment of the present disclosure, provided is an image decoding device. The image decoding device may include memory that stores one or more instructions and at least one processor. The at least one processor may execute the one or more instructions to obtain a reference block in a reference image. The at least one processor may execute the one or more instructions to determine an intra mode for the reference block based on at least one of a plurality of neighboring samples of the reference block and a plurality of internal samples of the reference block. The at least one processor may execute the one or more instructions to determine a transform kernel of the current block from among one or more transform kernels by using the intra mode for the reference block. The at least one processor may execute the one or more instructions to perform inverse transformation on the current block by using the transform kernel.

In an embodiment of the present disclosure, the one or more transform kernels may include at least one of a first transform kernel related to multi-transform selection, a second transform kernel related to low-frequency non-separable transform, or a third transform kernel related to non-separable first transform.

In an embodiment of the present disclosure, the at least one processor may execute the one or more instructions to perform intra prediction according to one or more intra prediction modes by using a plurality of neighboring samples. The at least one processor may execute the one or more instructions to determine an intra mode for the reference block based on errors between intra predicted samples and internal samples of the reference block.

In an embodiment of the present disclosure, the at least one processor may execute the one or more instructions to determine a plurality of gradients by using the plurality of internal samples of the reference block. The at least one processor may execute the one or more instructions to determine a plurality of directional intra modes corresponding to the plurality of gradients. The at least one processor may execute the one or more instructions to select an intra mode for the reference block from among the plurality of determined directional intra modes.

In an embodiment of the present disclosure, the at least one processor may execute the one or more instructions to determine a first candidate intra mode based on at least one of a plurality of neighboring samples of the reference block and a plurality of internal samples of the reference block. The at least one processor may execute the one or more instructions to determine a second candidate intra mode based on at least one of a plurality of neighboring samples of a second reference block of the current block and a plurality of internal samples of the second reference block. The at least one processor may execute the one or more instructions to select one of the first candidate intra mode and the second candidate intra mode as the intra mode for the reference block.

In an embodiment of the present disclosure, the at least one processor may execute the one or more instructions to determine a first error by performing prediction on the plurality of internal samples of the reference block based on the plurality of neighboring samples of the reference block according to the first candidate intra mode. The at least one processor may execute the one or more instructions to determine a second error by performing prediction on the plurality of internal samples of the second reference block based on the plurality of neighboring samples of the second reference block according to the second candidate intra mode. The at least one processor may execute the one or more instructions to determine an intra mode for the reference block from among the first candidate intra mode and the second candidate intra mode based on the first error and the second error.

In an embodiment of the present disclosure, the at least one processor may execute the one or more instructions to obtain a first quantization parameter of the reference block and a second quantization parameter of the second reference block. The at least one processor may execute the one or more instructions to, when the first quantization parameter is equal to or larger than the second quantization parameter, select the second candidate intra mode as the intra mode for the reference block. The at least one processor may execute the one or more instructions to, when the first quantization parameter is less than the second quantization parameter, select the first candidate intra mode as the intra mode for the reference block.

In an embodiment of the present disclosure, the at least one processor may execute the one or more instructions to obtain a first POC value of the reference image and a second POC valuer of the second reference image. The at least one processor may execute the one or more instructions to, when a difference between POC value of the current image and the first POC value is smaller than a difference between the POC value of the current image and the second POC value, select the first candidate intra mode as the intra mode for the reference block. The at least one processor may execute the one or more instructions to, when the difference between the POC value of the current image and the first POC value is equal to or larger than the difference between the POC value of the current image and the second POC value, select the second candidate intra mode as the intra mode for the reference block.

In an embodiment of the present disclosure, the at least one processor may execute the one or more instructions to obtain bi-prediction weights for the reference block and the second reference block. The at least one processor may execute the one or more instructions to, when the weight for the reference block is equal to or larger than the weight for the second reference block, select the first candidate intra mode as the intra mode for the reference block. The at least one processor may execute the one or more instructions to, when the weight for the reference block is less than the weight for the second reference block, select the second candidate intra mode as the intra mode for the reference block.

In an embodiment of the present disclosure, the at least one processor may execute the one or more instructions to, when the type of a slice that includes the reference block is I slice, select the first candidate intra mode as the intra mode for the reference block. The at least one processor may execute the one or more instructions to, when the type of a slice that includes the second reference block is I slice, select the second candidate intra mode as the intra mode for the reference block.

In an embodiment of the present disclosure, the at least one processor may execute the one or more instructions to determine a plurality of first gradients by using the plurality of internal samples of the reference block. The at least one processor may execute the one or more instructions to determine a plurality of second gradients by using a plurality of internal samples of the second reference block of the second reference image other than the reference image. The at least one processor may execute the one or more instructions to determine a plurality of directional intra modes corresponding to the plurality of first gradients and the plurality of second gradients. The at least one processor may execute the one or more instructions to determine an intra mode for the reference block from among the plurality of determined directional intra modes.

According to an embodiment of the present disclosure, provided is an image encoding method. The image encoding method may include obtaining a reference block in a reference image. The image encoding method may include determining an intra mode for the reference block, based on at least one of a plurality of neighboring samples of the reference block and a plurality of internal samples of the reference block. The image encoding method may include determining a transform kernel of the current block from among one or more transform kernels by using the intra mode for the reference block. The image encoding method may include performing transformation on the current block by using the transform kernel.

In an embodiment of the present disclosure, the one or more transform kernels may include at least one of a first transform kernel related to multi-transform selection, a second transform kernel related to low-frequency non-separable transform, or a third transform kernel related to non-separable first transform.

In an embodiment of the present disclosure, the determining of the intra mode for the reference block may include performing intra prediction according to one or more intra prediction modes by using a plurality of neighboring samples. The determining of the intra mode for the reference block may include determining an intra mode for the reference block based on errors between the intra-predicted samples and the internal samples of the reference block.

In an embodiment of the present disclosure, the determining of the intra mode for the reference block may include determining a plurality of gradients by using the plurality of internal samples of the reference block. The determining of the intra mode for the reference block may include determining a plurality of directional intra modes corresponding to the plurality of gradients. The determining of the intra mode for the reference block may include selecting an intra mode for the reference block from among the plurality of determined directional intra modes.

In an embodiment of the present disclosure, the determining of the intra mode for the reference block may include determining a first candidate intra mode based on at least one of a plurality of neighboring samples of the reference block and a plurality of internal samples of the reference block. The determining of the intra mode for the reference block may include determining a second candidate intra mode based on at least one of a plurality of neighboring samples of a second reference block of the current block and a plurality of internal samples of the second reference block. The determining of the intra mode for the reference block may include selecting one of the first candidate intra mode and the second candidate intra mode as the intra mode for the reference block.

In an embodiment of the present disclosure, the selecting of the one of the first candidate intra mode and the second candidate intra mode as the intra mode for the reference block may include determining a first error by performing prediction on the plurality of internal samples of the reference block based on the plurality of neighboring samples of the reference block according to the first candidate intra mode. The selecting of the one of the first candidate intra mode and the second candidate intra mode as the intra mode for the reference block may include determining a second error by performing prediction on the plurality of internal samples of the second reference block based on the plurality of neighboring samples of the second reference block according to the second candidate intra mode. The selecting of the one of the first candidate intra mode and the second candidate intra mode as the intra mode for the reference block may include determining an intra mode for the reference block from among the first candidate intra mode and the second candidate intra mode based on the first error and the second error.

In an embodiment of the present disclosure, the selecting of the one of the first candidate intra mode and the second candidate intra mode as the intra mode for the reference block may include obtaining a first quantization parameter of the reference block and a second quantization parameter of the second reference block. The selecting of the one of the first candidate intra mode and the second candidate intra mode as the intra mode for the reference block may include selecting the second candidate intra mode as an intra mode for the reference block when the first quantization parameter is equal to or larger than the second quantization parameter. The selecting of the one of the first candidate intra mode and the second candidate intra mode as the intra mode for the reference block may include selecting the first candidate intra mode as an intra mode for the reference block when the first quantization parameter is less than the second quantization parameter.

In an embodiment of the present disclosure, the selecting of the one of the first candidate intra mode and the second candidate intra mode as the intra mode for the reference block may include obtaining a first POC value of the reference image and a second POC value of the second reference image. The selecting of the one of the first candidate intra mode and the second candidate intra mode as the intra mode for the reference block may include selecting the first candidate intra mode as an intra mode for the reference block when a difference between a POC value of the current image and the first POC value is smaller than a difference between the POC value of the current image and the second POC value. The selecting of the one of the first candidate intra mode and the second candidate intra mode as the intra mode for the reference block may include selecting the second candidate intra mode as an intra mode for the reference block when the difference between the POC value of the current image and the first POC value is equal to or larger than the difference between the POC value of the current image and the second POC value.

In an embodiment of the present disclosure, the selecting of the one of the first candidate intra mode and the second candidate intra mode as the intra mode for the reference block may include obtaining bi-prediction weights for the reference block and the second reference block. The selecting of the one of the first candidate intra mode and the second candidate intra mode as the intra mode for the reference block may include selecting the first candidate intra mode as an intra mode for the reference block when the weight for the reference block is equal to or larger than the weight for the second reference block. The selecting of the one of the first candidate intra mode and the second candidate intra mode as the intra mode for the reference block may include selecting the second candidate intra mode as an intra mode for the reference block when the weight for the reference block is less than the weight for the second reference block.

In an embodiment of the present disclosure, the selecting of the one of the first candidate intra mode and the second candidate intra mode as the intra mode for the reference block may include selecting the first candidate intra mode as an intra mode for the reference block when a type of a slice that includes the reference block is I slice. The selecting of the one of the first candidate intra mode and the second candidate intra mode as the intra mode for the reference block may include selecting the second candidate intra mode as an intra mode for the reference block when a type of a slice that includes the second reference block is I slice.

In an embodiment of the present disclosure, the determining of the intra mode for the reference block may include determining a plurality of first gradients by using the plurality of internal samples of the reference block. The determining of the intra mode for the reference block may include determining a plurality of second gradients by using a plurality of internal samples of the second reference block of the second reference image other than the reference image. The determining of the intra mode for the reference block may include determining a plurality of directional intra modes corresponding to the plurality of first gradients and the plurality of second gradients. The determining of the intra mode for the reference block may include determining an intra mode for the reference block from among the plurality of determined directional intra modes.

According to an embodiment of the present disclosure, provided is an image encoding device. The image encoding device may include memory that stores one or more instructions and at least one processor. The at least one processor may execute the one or more instructions to obtain a reference block in a reference image. The at least one processor may execute the one or more instructions to determine an intra mode for the reference block based on at least one of a plurality of neighboring samples of the reference block and a plurality of internal samples of the reference block. The at least one processor may execute the one or more instructions to determine a transform kernel of the current block from among one or more transform kernels by using the intra mode for the reference block. The at least one processor may execute the one or more instructions to perform transformation on the current block by using the transform kernel.

In an embodiment of the present disclosure, the one or more transform kernels may include at least one of a first transform kernel related to multi-transform selection, a second transform kernel related to low-frequency non-separable transform, or a third transform kernel related to non-separable first transform.

In an embodiment of the present disclosure, the at least one processor may execute the one or more instructions to perform intra prediction according to one or more intra prediction modes by using a plurality of neighboring samples. The at least one processor may execute the one or more instructions to determine an intra mode for the reference block based on errors between intra predicted samples and internal samples of the reference block.

In an embodiment of the present disclosure, the at least one processor may execute the one or more instructions to determine a plurality of gradients by using the plurality of internal samples of the reference block. The at least one processor may execute the one or more instructions to determine a plurality of directional intra modes corresponding to the plurality of gradients. The at least one processor may execute the one or more instructions to select an intra mode for the reference block from among the plurality of determined directional intra modes.

In an embodiment of the present disclosure, the at least one processor may execute the one or more instructions to determine a first candidate intra mode based on at least one of a plurality of neighboring samples of the reference block and a plurality of internal samples of the reference block. The at least one processor may execute the one or more instructions to determine a second candidate intra mode based on at least one of a plurality of neighboring samples of a second reference block of the current block and a plurality of internal samples of the second reference block. The at least one processor may execute the one or more instructions to select one of the first candidate intra mode and the second candidate intra mode as the intra mode for the reference block.

In an embodiment of the present disclosure, the at least one processor may execute the one or more instructions to determine a first error by performing prediction on the plurality of internal samples of the reference block based on the plurality of neighboring samples of the reference block according to the first candidate intra mode. The at least one processor may execute the one or more instructions to determine a second error by performing prediction on the plurality of internal samples of the second reference block based on the plurality of neighboring samples of the second reference block according to the second candidate intra mode. The at least one processor may execute the one or more instructions to determine an intra mode for the reference block from among the first candidate intra mode and the second candidate intra mode based on the first error and the second error.

In an embodiment of the present disclosure, the at least one processor may execute the one or more instructions to obtain a first quantization parameter of the reference block and a second quantization parameter of the second reference block. The at least one processor may execute the one or more instructions to, when the first quantization parameter is equal to or larger than the second quantization parameter, select the second candidate intra mode as the intra mode for the reference block. The at least one processor may execute the one or more instructions to, when the first quantization parameter is less than the second quantization parameter, select the first candidate intra mode as the intra mode for the reference block.

In an embodiment of the present disclosure, the at least one processor may execute the one or more instructions to obtain a first POC value of the reference image and a second POC valuer of the second reference image. The at least one processor may execute the one or more instructions to, when a difference between POC value of the current image and the first POC value is smaller than a difference between the POC value of the current image and the second POC value, select the first candidate intra mode as the intra mode for the reference block. The at least one processor may execute the one or more instructions to, when the difference between the POC value of the current image and the first POC value is equal to or larger than the difference between the POC value of the current image and the second POC value, select the second candidate intra mode as the intra mode for the reference block.

In an embodiment of the present disclosure, the at least one processor may execute the one or more instructions to obtain bi-prediction weights for the reference block and the second reference block. The at least one processor may execute the one or more instructions to, when the weight for the reference block is equal to or larger than the weight for the second reference block, select the first candidate intra mode as the intra mode for the reference block. The at least one processor may execute the one or more instructions to, when the weight for the reference block is less than the weight for the second reference block, select the second candidate intra mode as the intra mode for the reference block.

In an embodiment of the present disclosure, the at least one processor may execute the one or more instructions to, when the type of a slice that includes the reference block is I slice, select the first candidate intra mode as the intra mode for the reference block. The at least one processor may execute the one or more instructions to, when the type of a slice that includes the second reference block is I slice, select the second candidate intra mode as the intra mode for the reference block.

In an embodiment of the present disclosure, the at least one processor may execute the one or more instructions to determine a plurality of first gradients by using the plurality of internal samples of the reference block. The at least one processor may execute the one or more instructions to determine a plurality of second gradients by using a plurality of internal samples of the second reference block of the second reference image other than the reference image. The at least one processor may execute the one or more instructions to determine a plurality of directional intra modes corresponding to the plurality of first gradients and the plurality of second gradients. The at least one processor may execute the one or more instructions to determine an intra mode for the reference block from among the plurality of determined directional intra modes.

According to an embodiment of the present disclosure, provided is a computer-readable storage medium that stores a bitstream encoded by the image encoding method. The computer-readable storage medium may store a bitstream generated through encoding by at least one processor.

According to an embodiment of the present disclosure, provided is a method of transmitting a bitstream generated by an encoding device. The encoding device may include a processor configured to perform the following.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the present disclosure, the aforementioned method according to the various embodiments of the present disclosure may be provided in a computer program product. The computer program product may be a commercial product that may be traded between a seller and a buyer. The computer program product may be distributed in the form of a machine-readable storage medium (e.g., a compact disc read only memory (CD-ROM)) or distributed directly between two user devices (e.g., smart phones) or online (e.g., downloaded or uploaded) through an application store. In the case of the online distribution, at least part of the computer program product (e.g., a downloadable app) may be at least temporarily stored or arbitrarily created in a storage medium that may be readable to a device such as a server of the manufacturer, a server of the application store, or a relay server.

## Claims

1. An image decoding method comprising:
obtaining a reference block in a reference image;
determining an intra mode for the reference block based on at least one of a plurality of neighboring samples of the reference block and a plurality of internal samples of the reference block;
determining a transform kernel of a current block from among one or more transform kernels by using the intra mode for the reference block; and
performing inverse transformation on the current block by using the transform kernel.

2. The image decoding method of claim 1, wherein the one or more transform kernels comprise at least one of a first transform kernel related to multi-transform selection (MTS), a second transform kernel related to a low frequency non-separable transform (LFNST) or a third transform kernel related to a non-separable primary transform (NSPT).

3. The image decoding method of any one of claims 1 and 2, wherein the determining of the intra mode for the reference block comprises
performing intra prediction according to one or more intra prediction modes by using the plurality of neighboring samples; and
determining the intra mode for the reference block based on errors between the intra-predicted samples and the internal samples of the reference block.

4. The image decoding method of any one of claims 1 to 3, wherein the determining of the intra mode for the reference block comprises
determining a plurality of gradients by using the plurality of internal samples of the reference block;
determining a plurality of directional intra modes corresponding to the plurality of gradients; and
selecting an intra mode for the reference block from among the plurality of determined directional intra modes.

5. The image decoding method of any one of claims 1 to 4, wherein the determining of the intra mode for the reference block comprises
determining a first candidate intra mode based on at least one of the plurality of neighboring samples of the reference block and the plurality of internal samples of the reference block;
determining a second candidate intra mode based on at least one of a plurality of neighboring samples of a second reference block of the current block and a plurality of internal samples of the second reference block;
and
selecting one of the first candidate intra mode and the second candidate intra mode as the intra mode for the reference block.

6. The image decoding method of claim 5, wherein the selecting of the one of the first candidate intra mode and the second candidate intra mode as the intra mode for the reference block comprises
determining a first error by performing prediction on the plurality of internal samples of the reference block by using the plurality of neighboring samples of the reference block according to the first candidate intra mode; determining a second error by performing prediction on the plurality of internal samples of the second reference block by using the plurality of neighboring samples of the second reference block according to the second candidate intra mode; and
determining an intra mode for the reference block from among the first candidate intra mode and the second candidate intra mode based on the first error and the second error.

7. The image decoding method of any one of claims 5 and 6, wherein the selecting of the one of the first candidate intra mode and the second candidate intra mode as the intra mode for the reference block comprises obtaining a first quantization parameter of the reference block and a second quantization parameter of the second reference block;
selecting the second candidate intra mode as the intra mode for the reference block when the first quantization parameter is equal to or larger than the second quantization parameter; and
selecting the first candidate intra mode as the intra mode for the reference block when the first quantization parameter is less than the second quantization parameter.

8. The image decoding method of any one of claims 5 to 7, wherein the selecting of the one of the first candidate intra mode and the second candidate intra mode as the intra mode for the reference block comprises obtaining a first POC value of the reference image and a second POC value of a second reference image;
selecting the first candidate intra mode as the intra mode for the reference block when a difference between a POC value of a current image and the first POC value is smaller than a difference between the POC value of the current image and the second POC value; and
selecting the second candidate intra mode as the intra mode for the reference block when the difference between the POC value of the current image and the first POC value is equal to or larger than the difference between the POC value of the current image and the second POC value.

9. The image decoding method of any one of claims 5 to 8, wherein the selecting of the one of the first candidate intra mode and the second candidate intra mode as the intra mode for the reference block comprises obtaining bi-prediction weights for the reference block and the second reference block;
selecting the first candidate intra mode as the intra mode for the reference block when the weight for the reference block is equal to or larger than the weight for the second reference block; and
selecting the second candidate intra mode as the intra mode for the reference block when the weight for the reference block is less than the weight for the second reference block.

10. The image decoding method of any one of claims 5 to 9, wherein the selecting of the one of the first candidate intra mode and the second candidate intra mode as the intra mode for the reference block comprises selecting the first candidate intra mode as the intra mode for the reference block when a type of a slice including the reference block is an I slice; and selecting the second candidate intra mode as the intra mode for the reference block when a type of a slice including the second reference block is the I slice.

11. The image decoding method of any one of claims 1 to 10, wherein the determining of the intra mode for the reference block comprises
determining a plurality of first gradients by using the plurality of internal samples of the reference block;
determining a plurality of second gradients by using a plurality of internal samples of the second reference block of a second reference image other than the reference image;
determining a plurality of directional intra modes corresponding to the plurality of first gradients and the plurality of second gradients; and
determining an intra mode for the reference block from among the plurality of determined directional intra modes.

12. An image decoding device comprising:
memory storing one or more instructions; and
at least one processor including processing circuitry,
wherein the at least one processor is configured to execute the one or more instructions to cause the image decoding device to:
obtain a reference block in a reference image,
determine an intra mode for the reference block based on at least one of a plurality of neighboring samples of the reference block and a plurality of internal samples of the reference block,
determine a transform kernel of a current block from among one or more transform kernels by using the intra mode for the reference block, and
perform inverse transformation on the current block by using the transform kernel.

13. An image encoding method comprising:
obtaining a reference block in a reference image;
determining an intra mode for the reference block based on at least one of a plurality of neighboring samples of the reference block and a plurality of internal samples of the reference block;
determining a transform kernel of a current block from among one or more transform kernels by using the intra mode for the reference block; and
performing transformation on the current block by using the transform kernel.

14. The image encoding method of claim 13, wherein the one or more transform kernels comprise at least one of a first transform kernel related to multi-transform selection (MTS), a second transform kernel related to a low frequency non-separable transform (LFNST) or a third transform kernel related to a non-separable primary transform (NSPT).

15. A computer-readable storage medium storing bitstreams encoded by an image encoding method, the image encoding method comprising:
obtaining a reference block in a reference image;
determining an intra mode for the reference block based on at least one of a plurality of neighboring samples of the reference block and a plurality of internal samples of the reference block;
determining a transform kernel of a current block from among one or more transform kernels by using the intra mode for the reference block; and
performing transformation on the current block by using the transform kernel.
